# EUROPÄISCHE PATENTANMELDUNG

(11) **EP 4 431 302 A1**
(43) Veröffentlichungstag der Anmeldung: **18.09.2024**
(21) Anmeldenummer: 23161357.1
(22) Anmeldetag: 11.03.2023
(51) Int. Cl.: B41M 1/12, B22F 10/10, B22F 12/33, B22F 12/86, B22F 12/88, B29C 64/00, B33Y 10/00, B33Y 30/00, B41F 15/00, B41F 23/00

(54) **VORRICHTUNG ZUR HERSTELLUNG VON DREIDIMENSIONALEN SIEBDRUCKWERKSTÜCKEN, SOWIE VERFAHREN DAZU**

(71) Anmelder: Exentis Knowledge GmbH, 5608 Stetten AG (CH)
(72) Erfinder: Reichenbach, Michael, 79183 Waldkirch (DE); Bürklin, Uwe, 79312 Emmendingen (DE)
(74) Vertreter: Wenzel Nemetzade Warthmüller Patentanwälte Part mbB

(57) **Zusammenfassung**

Vorrichtung zur Herstellung von dreidimensionalen Siebdruckwerkstücken, insbesondere 3D-Siebdruckanlage, mit einer Druckeinrichtung für die schichtweise Erzeugung zumindest eines Siebdruckwerkstücks in mehreren Druckvorgängen und mit einer Transporteinrichtung für den automatisierten Transport zumindest eines Siebdruckwerkstücks und/oder eines Werkstückträgers hin zur und/oder weg von der Druckeinrichtung, wobei die Transporteinrichtung einen Tragabschnitt zur zumindest formschlüssigen Aufnahme eines Werkstückträgers aufweist.

## Beschreibung

Die vorliegende Erfindung betrifft eine Vorrichtung zur Herstellung von dreidimensionalen Siebdruckwerkstücken. Ebenso betrifft die vorliegende Erfindung ein Verfahren zur Herstellung von dreidimensionalen Siebdruckwerkstücken.

Aus dem Stand der Technik in der Druckschrift WO 2020/212371 A1 ist eine Anlage zur Herstellung von dreidimensionalen Siebdruckwerkstücken bekannt. Bei dieser Anlagenkonzeption ist eine als Bandförderer ausgebildete Transporteinrichtung für den automatisierten Transport wenigstens eines Werkstückträgers vorgesehen. Durch eine solche Transporteinrichtung können Werkstückträger in vorteilhafter Weise automatisiert im Kreislauf zwischen einer Druckeinrichtung und wenigstens einer von der Druckeinrichtung beabstandeten Position transportiert werden. Hierdurch lässt sich eine insgesamt hohe Auslastung der Druckeinrichtung und damit ein hohes Maß an Produktivität sicherstellen.

Der Transport eines Werkstückträgers mittels eines solchen Bandförderers erfolgt mit relativ großen Toleranzen sowie einer freien Positionierung des Werkstückträgers auf den jeweiligen Bändern. Nach der Anordnung eines Werkstückträgers innerhalb einer Druckeinrichtung kann mithin noch eine relativ aufwändige Feinpositionierung beziehungsweise Feinausrichtung erforderlich sein, um die jeweiligen Druckschichten eines Siebdruckwerkstücks mit ausreichender Genauigkeit aufeinander aufzutragen. Durch das Erfordernis einer solchen Feinpositionierung beziehungsweise Feinausrichtung kann die Produktivität einer solchen Anlage begrenzt sein.

Zudem kann aufgrund der freien Positionierung der jeweiligen Werkstückträger auf den Bändern eine nur begrenzte Kontrolle über die genaue Lage beziehungsweise während des Transports des Werkstückträgers innerhalb der Vorrichtung sichergestellt werden. Hierdurch können Werkstückträger innerhalb der Vorrichtung unerwünschte Positionen beziehungsweise Lagen einnehmen, wodurch ein erhöhter manueller Handhabungs- beziehungsweise Bedienaufwand entstehen kann.

Vor dem oben dargelegten Hintergrund bestand die Aufgabe der vorliegenden Erfindung darin, eine Vorrichtung zur Herstellung von dreidimensionalen Siebdruckwerkstücken anzugeben, die eine erhöhte Produktivität sowie einen Transport eines Werkstückträgers mit verbesserter Betriebssicherheit gewährleistet. Ebenso bestand die Aufgabe darin, ein Verfahren zur Herstellung von dreidimensionalen Siebdruckwerkstücken anzugeben.

In Bezug auf die Vorrichtung ist diese Aufgabe durch den Gegenstand des Anspruchs 1 sowie auch durch den Gegenstand des Anspruchs 14 gelöst worden. Ein erfindungsgemäßes Verfahren ist Gegenstand von Anspruch 15 sowie auch Gegenstand des Anspruchs 16. Vorteilhafte Ausgestaltungen sind Gegenstand der abhängigen Ansprüche und werden nachfolgend erläutert.

Erfindungsgemäß ist eine Vorrichtung zur Herstellung von dreidimensionalen Siebdruckwerkstücken vorgesehen. Bei der Vorrichtung handelt es sich insbesondere um eine 3D-Siebdruckanlage, bevorzugt um eine automatisierte 3D-Siebdruckanlage.

Die erfindungsgemäße Vorrichtung weist eine Druckeinrichtung für die schichtweise Erzeugung zumindest eines Siebdruckwerkstücks in zumindest einem Druckvorgang oder in mehreren Druckvorgängen und eine Transporteinrichtung für den automatisierten Transport zumindest eines Siebdruckwerkstücks und/oder eines Werkstückträgers hin zur und/oder weg von der Druckeinrichtung auf. Dabei weist die Transporteinrichtung erfindungsgemäß einen Tragabschnitt zur zumindest formschlüssigen Aufnahme eines Werkstückträgers auf.

Ein Siebdruckwerkstück kann demnach schichtweise in zumindest einem Druckvorgang oder in mehreren Druckvorgängen erzeugt werden. Vor oder nach etwaigen Druckvorgängen für ein Siebdruckwerkstück kann der jeweilige Werkstückträger durch die Transporteinrichtung hin zur und/oder weg von der Druckeinrichtung bewegt werden. Während des Betriebs kann somit die Druckeinrichtung mit unterschiedlichen Werkstückträgern beschickt werden, sodass eine insgesamt hohe Auslastung der Druckeinrichtung sichergestellt werden kann. Stillstandzeiten der Druckeinrichtung können hierdurch vermieden oder zumindest auf einem geringen Maß gehalten werden. Insgesamt lässt sich hierdurch eine hohe Gesamtproduktivität der Anlage gewährleisten.

Gleichzeitig kann durch die Ausgestaltung der Transporteinrichtung mit einem Tragabschnitt zur zumindest formschlüssigen Aufnahme eines Werkstückträgers eine präzise Führung des jeweiligen Werkstückträgers beim Transport mittels der Transporteinrichtung sowie eine erhöhte Positionsgenauigkeit bei verringertem Aufwand sichergestellt werden. Aufgrund der formschlüssigen Aufnahme eines Werkstückträgers ergibt sich ein insgesamt hohes Maß an Transportsicherheit. Ein unerwünschtes Herunterfallen oder Herabrutschen des jeweiligen Werkstückträgers von dem Förderfahrzeug während des Transports lässt sich durch eine solche Ausgestaltung sicher vermeiden. Zudem gewährleistet eine formschlüssige Aufnahme eines Werkstückträgers bereits bei Anordnung eines Werkstückträgers innerhalb einer Druckeinrichtung ein hohes Maß an Positioniergenauigkeit. Eine weitere Feinpositionierung oder Feinausrichtung kann vermieden oder zumindest im Umfang verringert werden.

Unter dreidimensionalem Siebdruck kann vorliegend in besonders bevorzugter Weise ein additives Fertigungsverfahren verstanden werden, bei dem eine pulverbasierte Suspension mithilfe eines Rakels durch eine feste Druckmaske auf ein Substrat übertragen und getrocknet wird. Diese Vorgehensweise kann mehrmals wiederholt werden, bis die jeweils gewünschte Bauteilhöhe oder Bauteilform erreicht ist. In einem abschließenden Prozessschritt kann das so erzeugte Bauteil gesintert werden. Hierdurch kann ein Siebdruckwerkstück entstehen.

Ebenso kann unter dreidimensionalem Siebdruck vorliegend in besonders bevorzugter Weise ein additives Fertigungsverfahren verstanden werden, bei dem eine pulverbasierte Suspension mithilfe eines Rakels durch eine feste Druckmaske auf ein Substrat übertragen und getrocknet wird, wobei bereits durch einen einmaligen Druck die jeweils gewünschte Bauteilhöhe oder Bauteilform erreicht wird. In einem abschließenden Prozessschritt kann ein auf diese Weise erzeugtes Bauteil gesintert werden und ein Siebdruckwerkstück entstehen. Soweit vorliegend von mehreren Druckvorgängen die Rede ist, kann anstelle dessen bereits ein Druckvorgang ausreichend und geeignet sein.

Unter Siebdruckwerkstück kann vorliegend in bevorzugter Weise ein Werkstück beziehungsweise ein dreidimensionales Druckerzeugnis verstanden werden, das einem Sinterschritt zu unterziehen ist beziehungsweise unterzogen worden ist. Dies betrifft insbesondere Werkstücke aus einem Metall, einer Keramik, einem Glasmaterial und/oder einem Kunststoffmaterial. Insbesondere kommen hierzu Legierungen aus Stahl, Nickel, Kupfer, Titan und/oder Keramiklegierungen in Betracht.

Druckerzeugnisse aus Kunststoffmaterialien können durch die Bezeichnung "dreidimensionales Siebdruckwerkstück" ausgeschlossen oder mitumfasst sein. Insbesondere besteht auch die Möglichkeit, gedruckte Werkstücklagen aus Kunststoffmaterial einem Sinterschritt zu unterziehen.

Unter Siebdruckwerkstück kann vorliegend ebenfalls ein Werkstück beziehungsweise ein dreidimensionales Druckerzeugnis verstanden werden, das frei von einem Sinterschritt hergestellt worden ist beziehungsweise frei von einem Sinterschritt fertigstellbar ist oder fertiggestellt wird. Mithin kann eine abschließende Aushärtung von Druckschichten auch frei von Sinterschritten erfolgen. Die Aushärtung eines Siebdruckwerkstücks kann in vorteilhafter Weise auch durch UV-Härtung und/oder durch eine Polymerisationsreaktion und/oder durch Trocknung, insbesondere durch Konvektionstrocknung, erfolgen. Eine derartige Aushärtung kann insbesondere dann bevorzugt vorgenommen werden, wenn eine abschließende Aushärtung von Druckschichten frei von Sinterschritten erfolgen soll.

Bei einem Siebdruckwerkstück im Sinne der vorliegenden Erfindung kann es sich ferner um ein pharmazeutisches Erzeugnis und/oder um ein biologisches Erzeugnis handeln. Solche Siebdruckwerkstücke können unter anderem aus pharmazeutischen Pulvermaterialien und/oder Pulvergemischen und/oder Granulaten und/oder aus biologischen Materialien hergestellt sein. Insbesondere können pharmazeutische Erzeugnisse und/oder biologische Erzeugnisse frei Sinterschritten fertiggestellt beziehungsweise für die jeweilige Anwendung ausreichend ausgehärtet sein.

Siebdruckwerkstücke hergestellt aus pharmazeutischen Pulvermaterialien und/oder Pulvergemischen und/oder Granulaten können Arzneistoffe, Wirkstoffe, Hilfsstoffe, insbesondere Füllmittel und/oder Bindemittel und/oder Sprengmittel und/oder Gleitmittel, aufweisen.

Gemäß einer bevorzugten Ausgestaltung der vorliegenden Erfindung kann die Vorrichtung für die Produktion unter Reinraumbedingungen ausgebildet und/oder eingerichtet sein. Insbesondere kann die Vorrichtung für die Produktion unter Reinraumbedingungen gemäß Reinraumklassen den A, B, C und/oder D nach EU-GMP ausgebildet und/oder eingerichtet sein.

Weiter bevorzugt kann eine erfindungsgemäße Vorrichtung zur Herstellung von Siebdruckwerkstücken für die Anwendung in der Medizintechnik, in der Optik- und/oder Lasertechnologie, in der Luft- und Raumfahrtechnik, in der Halbleitertechnik, in der Biotechnologie und/oder in der medizinischen und/oder in der pharmakologischen Forschung ausgebildet und/oder eingerichtet sein.

Ebenso kann die erfindungsgemäße Vorrichtung zur Herstellung von Siebdruckwerkstücken für den Einsatz und/die Anwendung als medizinische und/oder pharmazeutische Produkte, Implantate und/oder sterile Produkte und/oder Medikamente und/oder für den Einsatz und/die Anwendung als Tabletten zur Wirkstoffverabreichung ausgebildet und/oder eingerichtet sein.

Gemäß einer weiter bevorzugten Ausgestaltung kann die Transporteinrichtung für den automatisierten Transport zumindest eines Siebdruckwerkstücks und/oder eines Werkstückträgers hin zu und/oder weg von einem Drucktisch der Druckeinrichtung eingerichtet sein. Ein solcher Drucktisch kann insbesondere eine Drucktischplatte aufweisen.

Ein Drucktisch beziehungsweise eine Drucktischplatte kann in vorteilhafter Weise zur Durchführung eines Druckvorgangs mit einer Unterseite eines Werkstückträgers in Kontakt gebracht werden und diesen während des Druckvorgangs abstützen. Ein Drucktisch beziehungsweise eine Drucktischplatte dient in bevorzugter Weise also nicht dem unmittelbaren Bedrucken beziehungsweise als unmittelbare Druckunterlage oder zur Bereitstellung einer zu bedruckenden Oberfläche. Vielmehr kann ein Drucktisch beziehungsweise eine Drucktischplatte in vorteilhafter Weise zur temporären Kontaktierung, Anhebung und/oder Unterstützung eines Werkstückträgers ausgebildet und/oder angeordnet sein.

In weiter vorteilhafter Weise kann gemäß der vorliegenden Lehre ein Werksstückträger für das unmittelbare Bedrucken vorgesehen und/oder ausgebildet sein. Dabei kann ein Werksstückträger im Sinne der vorliegenden Lehre auch eine Beschichtung aufweisen, auf der Druckschichten aufgetragen werden können. Ein Werkstückträger beziehungsweise eine Beschichtung eines solchen Werkstückträgers kann mithin als unmittelbare Druckunterlage beziehungsweise zur Bereitstellung einer zu bedruckenden Oberfläche vorgesehen und/oder innerhalb der Vorrichtung angeordnet oder anordenbar sein.

Bei einem Siebdruckwerkstück kann es sich gemäß der vorliegenden Erfindung um ein Werkstück handeln, das durch dreidimensionalen Siebdruck in einem oder in mehreren Druckvorgängen auf dem Werkstückträger aufgebaut wird. Dabei handelt es sich bei dem Siebdruckwerkstück insbesondere um ein Werkstück, welches nach Abschluss des Druckvorgangs und/oder nach Abschluss eines sich an den Druckvorgang anschließenden Sintervorgangs wieder von dem Werkstückträger lösbar ist, insbesondere zerstörungsfrei lösbar ist.

Zwischen etwaigen Druckvorgängen für ein Siebdruckwerkstück kann der jeweilige Werkstückträger von dem Drucktisch beziehungsweise von der Drucktischplatte gelöst werden beziehungsweise von dieser lösbar sein. Die einzelnen Schichten eines Siebdruckwerkstücks - bei mehrschichtigem Aufbau - können zwischen zwei aufeinanderfolgenden Druckvorgängen in einer von dem Drucktisch beziehungsweise von der Drucktischplatte entfernten Stellung getrocknet werden.

In weiter bevorzugter Weise kann die Transporteinrichtung gesondert und/oder unabhängig von der Druckeinrichtung ausgebildet sein. Hierdurch kann ein insgesamt modularer Aufbau der Vorrichtung ermöglicht oder weiter begünstigt werden. Die Transporteinrichtung kann unabhängig von der Druckeinrichtung konfiguriert und zur Verbindung der Druckeinrichtung mit zumindest einer weiteren Einrichtung oder Position innerhalb der Vorrichtung angeordnet sein.

Zudem kann durch eine von der Druckeinrichtung gesonderte und/oder unabhängig ausgebildete Transporteinrichtung die Ergänzung und/oder den Austausch der Druckeinrichtung vereinfachen, insbesondere die Ergänzung mit weiteren Einheiten innerhalb der Vorrichtung oder den Austausch der Druckeinrichtung durch eine andere Druckeinrichtung.

Trotz von der Druckeinrichtung gesonderter und/oder unabhängiger Ausbildung der Transporteinrichtung kann diese an die Druckeinrichtung angepasst sein, insbesondere um einen zuverlässigen Transport eines Werkstückträgers und/oder eines Siebdruckwerkstücks hin zur und/oder weg von der Druckeinrichtung zu ermöglichen.

Die Transporteinrichtung kann besonders bevorzugt durch die Druckeinrichtung hindurch verlaufen. Auf diese Weise kann ein besonders vorteilhafter und platzsparender Transport eines Werkstückträgers und/oder eines Siebdruckwerkstücks hin zur und/oder weg von der Druckeinrichtung gewährleistet werden. Die Druckeinrichtung kann hierdurch besonders vorteilhaft mit weiteren Einrichtungen beziehungsweise Vorrichtungsmodulen verbunden werden. Bei einem insgesamt modularen Vorrichtungsaufbau kann auf diese Weise ein hohes Maß an Integration der jeweiligen Einrichtungen beziehungsweise Vorrichtungsmodule sichergestellt werden.

Gemäß einer weiter bevorzugten Ausgestaltung kann die Transporteinrichtung wenigstens eine Transportschiene sowie ein auf der Transportschiene beweglich angeordnetes Förderfahrzeug für zumindest ein Siebdruckwerkstück und/oder zumindest einen Werkstückträger aufweisen. Dabei kann der Tragabschnitt zur Aufnahme eines Werkstückträgers an dem Förderfahrzeug angeordnet sein.

Durch die Ausgestaltung der Transporteinrichtung mit einer Transportschiene sowie mit einem auf der Transportschiene beweglich angeordneten Förderfahrzeug können Relativbewegungen kontaktierend angeordneter Flächen vermieden oder zumindest verringert werden. Ein betriebsbedingter Partikelabrieb lässt sich mit einer solchen Ausgestaltung mithin vollständig vermeiden oder auf einem geringen Niveau halten. Insgesamt lassen sich somit für die einzelnen Produktionsschritte verbesserte Reinheitsbedingungen schaffen.

Eine unerwünschte Verunreinigung der jeweils herzustellenden Siebdruckwerkstücke aufgrund von reibungsbedingt entstehenden Partikeln kann mit einer erfindungsgemäß ausgestalteten Transporteinrichtung verhindert werden. Folglich können mit einer erfindungsgemäßen Vorrichtung Siebdruckwerkstücke mit hohen Reinheits- beziehungsweise Hygieneanforderungen hergestellt werden. Schließlich gewährleistet eine bevorzugte Ausgestaltung der Transporteinrichtung mit wenigstens einer Transportschiene und einem auf der Transportschiene angeordneten Förderfahrzeug ein hohes Maß an Flexibilität. Das Layout der Anlage kann mit nur geringem Aufwand angepasst oder neu oder nachträglich anders konfiguriert werden. Eine Anpassung des Vorrichtungslayouts kann beispielsweise inline, über Weichen und/oder Bypässe vorgenommen werden. Auf diese Weise können mit nur geringem Aufwand neben der Druckeinrichtung noch weitere Einrichtungen integriert oder wieder aus der Vorrichtung ausgegliedert werden, je nach Einsatzzweck und Produktionsanforderung.

Gemäß einer weiter bevorzugten Ausgestaltung kann der Tragabschnitt und/oder das Förderfahrzeug, insbesondere der Tragabschnitt des Förderfahrzeugs und/oder der Tragabschnitt eines Aufbaus des Förderfahrzeugs, zur formschlüssigen und/oder kraftschlüssigen und/oder stoffschlüssigen Aufnahme und/oder Fixierung und/oder zumindest abschnittsweisen Einfassung eines Werkstückträgers ausgebildet sein. Für den Transport eines Werkstückträgers mittels eines solchen Tragabschnitts beziehungswese Förderfahrzeugs ergibt sich ein hohes Maß an Transportsicherheit. Ein unerwünschtes Herunterfallen oder Herabrutschen des jeweiligen Werkstückträgers von dem Tragabschnitt beziehungsweise Förderfahrzeug während des Transports lässt sich hierdurch sicher vermeiden.

Gemäß einer weiter bevorzugten Ausgestaltung kann der Tragabschnitt und/oder das Förderfahrzeug, insbesondere der Tragabschnitt des Förderfahrzeugs und/oder der Tragabschnitt eines Aufbaus des Förderfahrzeugs, zur formschlüssigen und/oder kraftschlüssigen und/oder stoffschlüssigen Aufnahme und/oder Fixierung und/oder zumindest abschnittsweisen Einfassung eines Werkstückträgers mit einer Seitenkantenlänge oder mehreren Seitenkantenlängen von mindestens 50 mm, bevorzugt von mindestens 100 mm, bevorzugt von mindestens 150 mm, bevorzugt von mindestens 200 mm, bevorzugt von mindestens 250 mm, bevorzugt von mindestens 300mm, bevorzugt von mindestens 350 mm, bevorzugt von mindestens 400 mm, bevorzugt von mindestens 450 mm, weiter bevorzugt von mindestens 475 mm ausgebildet sein. Die Aufnahme und/oder Fixierung und/oder Einfassung eines derart bemessenen Werkstückträgers ermöglicht das Bedrucken einer verhältnismäßig großen Druckunterlage beziehungsweise einer zu bedruckenden Oberfläche mit ausreichenden Abmessungen.

Gemäß einer noch weiter bevorzugten Ausgestaltung kann der Tragabschnitt und/oder das Förderfahrzeug, insbesondere der Tragabschnitt des Förderfahrzeugs und/oder der Tragabschnitt eines Aufbaus des Förderfahrzeugs, zur formschlüssigen und/oder kraftschlüssigen und/oder stoffschlüssigen Aufnahme und/oder Fixierung und/oder zumindest abschnittsweisen Einfassung eines Werkstückträgers mit einer Seitenkantenlänge oder mehreren Seitenkantenlängen von bis zu 1000 mm, bevorzugt von bis zu 900 mm, bevorzugt von bis zu 800 mm, bevorzugt von bis zu 700 mm, bevorzugt von bis zu 600 mm, bevorzugt von bis zu 550 mm, weiter bevorzugt von bis zu 525 mm, noch weiter bevorzugt von bis zu 500 mm, ausgebildet sein. Die Aufnahme und/oder Fixierung und/oder Einfassung eines derart bemessenen Werkstückträgers ermöglicht eine insgesamt kompakte und stabile Konstruktion sowie eine gute Handhabbarkeit der jeweiligen Werkstückträger bei der Positionierung in oder auf dem Tragabschnitt beziehungsweise dem Förderfahrzeug sowie bei der Entnahme von oder aus dem Tragabschnitt beziehungsweise Förderfahrzeug.

Gemäß einer noch weiter bevorzugten Ausgestaltung kann der Tragabschnitt und/oder das Förderfahrzeug, insbesondere der Tragabschnitt des Förderfahrzeugs und/oder der Tragabschnitt eines Aufbaus des Förderfahrzeugs, zur formschlüssigen und/oder kraftschlüssigen und/oder stoffschlüssigen Aufnahme und/oder Fixierung und/oder zumindest abschnittsweisen Einfassung eines Werkstückträgers mit einer Seitenkantenlänge oder mehreren Seitenkantenlängen von 50 mm bis 1000 mm, bevorzugt von 100 mm bis 900 mm, bevorzugt von 150 mm bis 850 mm, bevorzugt von 200 mm bis 800 mm, bevorzugt von 250 mm bis 750 mm, bevorzugt von 300 mm bis 700 mm, bevorzugt von 350 mm bis 650 mm, bevorzugt von 400 mm bis 600 mm, bevorzugt von 450 mm bis 550 mm, weiter bevorzugt von 475 bis 525 mm ausgebildet sein. Eine solche Dimensionierung ermöglicht die Bereitstellung einer ausreichend dimensionierten Druckunterlage beziehungsweise einer ausreichend dimensionierten zu bedruckenden Oberfläche bei einer gleichzeitig kompakten und robusten Bauweise des Tragabschnitts beziehungsweise des Förderfahrzeugs, insbesondere des Aufbaus des Förderfahrzeugs.

Insbesondere kann der Tragabschnitt und/oder das Förderfahrzeug, bevorzugt der Tragabschnitt des Förderfahrzeugs und/oder der Tragabschnitt eines Aufbaus des Förderfahrzeugs, zur Aufnahme und/oder Fixierung und/oder zumindest abschnittsweisen Einfassung eines rechteckigen oder quadratischen oder im Wesentlichen quadratischen Werkstückträgers ausgebildet sein.

Zusätzlich oder alternativ kann der Tragabschnitt und/oder das Förderfahrzeug, insbesondere der Tragabschnitt des Förderfahrzeugs und/oder der Tragabschnitt eines Aufbaus des Förderfahrzeugs, zur definierten und/oder spielfreien Aufnahme und/oder Einfassung eines Werkstückträgers ausgebildet sein. Eine Einfassung des Werkstückträgers kann ringsherum beziehungsweise vollständig um sämtliche Seitenkanten des Werkstückträgers herum oder auch abschnittsweise vorgesehen sein. Durch eine solche Ausgestaltung kann die Befestigungssicherheit für einen Werkstückträger weiter verbessert werden.

Es kann weiter von Vorteil sein, wenn der Tragabschnitt und/oder das Förderfahrzeug, insbesondere der Tragabschnitt des Förderfahrzeugs und/oder der Tragabschnitt eines Aufbaus des Förderfahrzeugs, eine Rahmenvorrichtung aufweist. Bei einer solchen Rahmenvorrichtung kann es sich insbesondere um eine Rahmenvorrichtung zur formschlüssigen und/oder kraftschlüssigen und/oder stoffschlüssigen Aufnahme und/oder Fixierung und/oder zumindest abschnittsweisen Einfassung eines Werkstückträgers handeln. Eine solche Rahmenvorrichtung gewährleistet eine besonders sichere Aufnahme und/oder Fixierung eines Werkstückträgers bei gleichzeitig guter Zugänglichkeit des Werkstückträgers für die Handhabung beim Anordnen in und/oder Entfernen aus der Rahmenvorrichtung.

In weiter bevorzugter Ausgestaltung kann eine Rahmenvorrichtung zur Aufnahme und/oder Fixierung und/oder zumindest abschnittsweisen oder ringsherum verlaufenden Einfassung eines Werkstückträgers mit einer Seitenlänge oder mehreren Seitenlängen von mindestens 50 mm, bevorzugt von mindestens 100 mm, bevorzugt von mindestens 150 mm, bevorzugt von mindestens 200 mm, bevorzugt von mindestens 250 mm, bevorzugt von mindestens 300mm, bevorzugt von mindestens 350 mm, bevorzugt von mindestens 400 mm, bevorzugt von mindestens 450 mm, weiter bevorzugt von mindestens 475 mm ausgebildet sein. Die Aufnahme und/oder Fixierung und/oder Einfassung eines derart bemessenen Werkstückträgers ermöglicht das Bedrucken einer relativ großen Druckunterlage beziehungsweise einer Oberfläche mit ausreichend großen Abmessungen. Bei einem Druckvorgang können damit zahlreiche Siebdruckwerkstücke schichtweise erzeugt und damit eine hohe Wirtschaftlichkeit sichergestellt werden.

In noch weiter bevorzugter Ausgestaltung kann eine Rahmenvorrichtung zur Aufnahme und/oder Fixierung und/oder zumindest abschnittsweisen oder ringsherum verlaufenden Einfassung eines Werkstückträgers mit einer Seitenlänge oder mehreren Seitenlängen von bis zu 1000 mm, bevorzugt von bis zu 900 mm, bevorzugt von bis zu 800 mm, bevorzugt von bis zu 700 mm, bevorzugt von bis zu 600 mm, bevorzugt von bis zu 550 mm, weiter bevorzugt von bis zu 525 mm, noch weiter bevorzugt von bis zu 500 mm ausgebildet sein. Die Aufnahme und/oder Fixierung und/oder Einfassung eines derart bemessenen Werkstückträgers ermöglicht eine insgesamt kompakte und stabile Konstruktion der Rahmenvorrichtung sowie auch eine gute Handhabbarkeit der jeweiligen Werkstückträger bei der Positionierung innerhalb der jeweiligen Rahmenvorrichtung.

In noch weiter bevorzugter Ausgestaltung kann eine Rahmenvorrichtung zur Aufnahme und/oder Fixierung und/oder zumindest abschnittsweisen oder ringsherum verlaufenden Einfassung eines Werkstückträgers mit einer Seitenlänge oder mehreren Seitenlängen von 50 mm bis 1000 mm, bevorzugt von 100 mm bis 900 mm, bevorzugt von 150 mm bis 850 mm, bevorzugt von 200 mm bis 800 mm, bevorzugt von 250 mm bis 750 mm, bevorzugt von 300 mm bis 700 mm, bevorzugt von 350 mm bis 650 mm, bevorzugt von 400 mm bis 600 mm, bevorzugt von 450 mm bis 550 mm, weiter bevorzugt von 475 bis 525 mm ausgebildet sein. Eine solche Dimensionierung ermöglicht die Bereitstellung einer ausreichend dimensionierten Druckunterlage beziehungsweise zu bedruckenden Oberfläche bei einer gleichzeitig kompakten und robusten Bauweise der Rahmenvorrichtung.

Gegenüberliegende Innenkanten einer Rahmenvorrichtung können in weiter bevorzugter Weise einen Abstand zueinander von mindestens 50 mm, bevorzugt von mindestens 100 mm, bevorzugt von mindestens 150 mm, bevorzugt von mindestens 200 mm, bevorzugt von mindestens 250 mm, bevorzugt von mindestens 300mm, bevorzugt von mindestens 350 mm, bevorzugt von mindestens 400 mm, bevorzugt von mindestens 450 mm, weiter bevorzugt von mindestens 475 mm aufweisen. Durch eine solche Ausgestaltung kann eine Rahmenvorrichtung ausreichend groß dimensionierte Werkstückträger aufnehmen beziehungsweise einfassen.

In weiter bevorzugter Weise können gegenüberliegende Innenkanten einer solchen Rahmenvorrichtung einen Abstand zueinander von bis zu 1000 mm, bevorzugt von bis zu 900 mm, bevorzugt von bis zu 800 mm, bevorzugt von bis zu 700 mm, bevorzugt von bis zu 600 mm, bevorzugt von bis zu 550 mm, weiter bevorzugt von bis zu 525 mm, noch weiter bevorzugt von bis zu 500 mm aufweisen. Hierdurch können verhältnismäßig stabile und ausreichend kompakte Werkstückträger innerhalb der Rahmenvorrichtung aufgenommen beziehungsweise eingefasst werden.

Noch weiter bevorzugt können gegenüberliegende Innenkanten einer Rahmenvorrichtung einen Abstand zueinander von 50 mm bis 1000 mm, bevorzugt von 100 mm bis 900 mm, bevorzugt von 150 mm bis 850 mm, bevorzugt von 200 mm bis 800 mm, bevorzugt von 250 mm bis 750 mm, bevorzugt von 300 mm bis 700 mm, bevorzugt von 350 mm bis 650 mm, bevorzugt von 400 mm bis 600 mm, bevorzugt von 450 mm bis 550 mm, weiter bevorzugt von 475 bis 525 mm aufweisen. Eine derartige Dimensionierung erlaubt die Aufnahme beziehungsweise Einfassung von Werkstückträgern mit geeigneter Größe für das Bedrucken innerhalb einer Druckeinrichtung bei gleichzeitig ausreichend stabiler Konstruktion und guter Handhabbarkeit. Insbesondere kann eine Rahmenvorrichtung zur Aufnahme von quadratischen und/oder rechteckigen beziehungsweise im Wesentlichen quadratischen und/oder rechteckigen Werkstückträgern ausgebildet sein.

In noch weiter vorteilhafter Weise kann die Rahmenvorrichtung zur definierten und/oder spielfreien Aufnahme und/oder Einfassung eines Werkstückträgers ausgebildet sein. Die jeweilige Position des Werkstückträgers innerhalb oder an der Rahmenvorrichtung kann auf diese Weise mit hoher Genauigkeit festgelegt und für die nachfolgenden Prozessschritte innerhalb der Vorrichtung sicher aufrechterhalten werden.

Zusätzlich oder alternativ kann die Rahmenvorrichtung einen Freiraum zur unterseitigen Kontaktierung eines darin aufgenommenen und/oder eingefassten Werkstückträgers begrenzen. Hierdurch wird eine gute Zugänglichkeit der Unterseite des Werkstückträgers für ein Kontaktieren und/oder Anhaben durch einen Drucktisch gewährleistet. Für die jeweiligen Druckvorgänge kann auf diese Weise mit nur geringem Aufwand ein unmittelbarer Kontakt zwischen dem Drucktisch der Druckeinrichtung und dem jeweiligen Werkstückträger hergestellt werden.

In weiter bevorzugter Weise kann der Tragabschnitt und/oder das Förderfahrzeug, insbesondere der Tragabschnitt und/oder die Rahmenvorrichtung des Förderfahrzeugs und/oder der Tragabschnitt und/oder die Rahmenvorrichtung eines Aufbaus des Förderfahrzeugs, eine Werkstückträgerlagerung zur Fixierung und/oder zum Festklemmen und/oder zum kraft- und/oder formschlüssigen Befestigen eines Werkstückträgers aufweisen. Der Werkstückträger kann durch eine solche Werkstückträgerlagerung besonders sicher an oder in dem Förderfahrzeug befestigt werden und während des Transports innerhalb der Vorrichtung befestigt bleiben. Die Werkstückträgerlagerung kann besonders bevorzugt als Mehrpunktlagerung, insbesondere als 3-Punktlagerung, ausgebildet sein. Eine solche Mehrpunktlagerung beziehungsweise 3-Punktlagerung kann eine sichere Befestigung mit nur geringem Kontakt beziehungsweise kleiner Kontaktfläche mit dem jeweils zu lagernden Werkstückträger realisiert werden. Die Gefahr der Freisetzung von Partikeln durch Abrieb und damit der Konzentrationserhöhung luftgetragener Teilchen kann auf diese Weise weiter verringert werden. Eine Mehrpunktlagerung beziehungsweise 3-Punktlagerung kann eine abriebbedingte Partikelbildung mit hoher Zuverlässigkeit vermeiden.

Weiter bevorzugt kann die Werkstückträgerlagerung durch wenigstens ein Festlager und/oder durch wenigstens eine Verriegelung gebildet sein, insbesondere durch mehrere Festlager und eine gegenüberliegend angeordnete Verriegelung. Eine solche Ausgestaltung ist einfach im Aufbau und ermöglicht eine einfache Handhabung beziehungsweise eine Automatisierung mit konstruktiv kostengünstiger Umsetzung.

Weiter bevorzugt kann die Werkstückträgerlagerung zur Fixierung und/oder zum Festklemmen und/oder zum kraft- und/oder formschlüssigen Befestigen eines Werkstückträgers mit einer Dicke von mindestens 0,5 mm, insbesondere mit einer Dicke von mindestens 0,8 mm, weiter bevorzugt mit einer Dicke von mindestens 1 mm, noch weiter bevorzugt mit einer Dicke von mindestens 1,5 mm, insbesondere von mindestens 2 mm oder etwa 2 mm, ausgebildet sein. Eine solche Werkstückträgerlagerung ermöglicht den Einsatz von Werkstückträgern mit einer ausreichend großen Stabilität und kann damit ein hohes Maß an Betriebssicherheit sicherstellen.

Noch weiter bevorzugt kann die Werkstückträgerlagerung zur Fixierung und/oder zum Festklemmen und/oder zum kraft- und/oder formschlüssigen Befestigen eines Werkstückträgers mit einer Dicke von bis zu 10 mm, insbesondere mit einer Dicke von bis zu 8 mm, weiter bevorzugt mit einer Dicke von bis zu 6 mm, noch weiter bevorzugt mit einer Dicke von bis zu 5 mm, noch weiter bevorzugt mit einer Dicke von bis zu 4 mm, noch weiter bevorzugt mit einer Dicke von bis zu 3 mm, noch weiter bevorzugt mit einer Dicke von bis zu 2,5 mm, insbesondere von bis zu 2 mm, ausgebildet sein. Eine solche Werkstückträgerlagerung ermöglicht den Einsatz von Werkstückträgern mit einer besonders hohen Stabilität und gleichzeitig verhältnismäßig geringem Gewicht.

Weiter bevorzugt kann die Werkstückträgerlagerung zur Fixierung und/oder zum Festklemmen und/oder zum kraft- und/oder formschlüssigen Befestigen eines Werkstückträgers mit einer Dicke von 0,5 mm bis 10 mm, insbesondere mit einer Dicke von 0,8 mm bis 8 mm, weiter bevorzugt mit einer Dicke von 1 mm bis 6 mm, noch weiter bevorzugt mit einer Dicke von 1 mm bis 5 mm, noch weiter bevorzugt mit einer Dicke von 1 mm bis 4 mm, noch weiter bevorzugt mit einer Dicke von 1 mm bis 3 mm, noch weiter bevorzugt mit einer Dicke von 1,5 mm bis 2,5 mm, insbesondere von etwa 2 mm, ausgebildet sein. Eine Werkstückträgerlagerung für derart bemessene Werkstückträger ermöglicht den Einsatz von Werkstückträgern mit einer hohen Stabilität und gleichzeitig verhältnismäßig geringem Gewicht und damit guter Handhabbarkeit.

In besonders bevorzugter Weise kann die Verriegelung durch einen Schieber mit gefaster und/oder zur Schiebrichtung des Schiebers geneigter Kontaktfläche gebildet sein. Durch eine gefaste Ausgestaltung beziehungsweise zur Schiebrichtung des Schiebers geneigter Kontaktfläche kann in besonders einfacher und vorteilhafter Weise eine formschlüssige Befestigung des jeweiligen Werkstückträgers realisiert werden. Insbesondere kann hierdurch im geschlossenen Zustand des Schiebers eine Anpresskraft beziehungsweise Niederhaltekraft auf den Werkstückträger ausgeübt und damit eine sichere Positionierung gewährleistet werden.

Zusätzlich oder alternativ kann die Verriegelung durch einen unter Federvorspannung stehenden Schieber und/oder als Schnappverschluss ausgebildet sein. Eine Federvorspannung des Schiebers kann in eine Schließrichtung des Schiebers gerichtet sein, sodass der Schieber selbsttätig in eine Schließstellung bewegt wird. Ebenso kann ein Schnappverschluss selbsttätig eine Schließbewegung ausführen, sofern keine manuelle oder automatisiert initiierte Gegenbewegung ausgeführt wird.

In noch weiter bevorzugter Weise kann zumindest ein Festlager mit gefaster und/oder zur Schieberichtung des Schiebers geneigter Kontaktfläche ausgebildet sein. Durch eine gefaste Ausgestaltung des Festlagers beziehungsweise durch eine zur Schiebrichtung des Schiebers geneigte Kontaktfläche des Festlagers kann in besonders einfacher und vorteilhafter Weise eine formschlüssige Befestigung des jeweiligen Werkstückträgers realisiert werden. Insbesondere kann hierdurch im geschlossenen Zustand des Schiebers auch durch das Festlager eine Anpresskraft beziehungsweise Niederhaltekraft auf den Werkstückträger ausgeübt und damit eine sichere Positionierung gewährleistet werden.

Gemäß einer noch weiter bevorzugten Ausgestaltung kann das Förderfahrzeug zumindest eine Antriebseinrichtung aufweisen, die mitfahrend an dem Förderfahrzeug angeordnet ist und/oder die eine auf der Transportschiene abrollende Antriebsrolle und/oder einen Antriebsmotor für eine Antriebsrolle aufweist. Ein solches Förderfahrzeug kann mithin unabhängig von weiteren Förderfahrzeugen auf der jeweiligen Transportschiene bewegt beziehungsweise angetrieben werden. Dies erlaubt eine individuelle Bewegung des Förderfahrzeugs innerhalb der Vorrichtung und damit auch einen individualisierten Transport des jeweils auf dem Förderfahrzeug angeordneten Werkstückträgers beziehungsweise des jeweils auf dem Förderfahrzeug angeordneten Siebdruckwerkstücks.

Gemäß einer weiter bevorzugten Ausgestaltung kann das Förderfahrzeug einen Aufbau zur Aufnahme eines Werkstückträgers für Siebdruckwerkstücke aufweisen. Hierzu kann der Tragabschnitt insbesondere an dem Aufbau des Förderfahrzeugs angeordnet beziehungsweise ausgebildet sein. Ebenso kann das Förderfahrzeug eine die Antriebseinrichtung aufweisende Läufervorrichtung aufweisen. Der Aufbau kann bevorzugt auf der Läufervorrichtung des Förderfahrzeugs angeordnet sein. Die Antriebsfunktionalität sowie die Aufnahmefunktionalität für einen Werkstückträger kann mithin durch unterschiedliche Abschnitte beziehungsweise unterschiedliche Teile des Förderfahrzeugs bereitgestellt werden. Insbesondere kann auf diese Weise eine funktionale Unterteilung des Förderfahrzeugs realisiert werden, nämlich in Antriebsfunktionalität und Aufnahmefunktionalität für einen Werkstückträger.

In weiter bevorzugter Weise kann der Aufbau und/oder ein Tragabschnitt des Aufbaus eine Aufnahmeebene für einen Werkstückträger definieren, die beabstandet von der Läufervorrichtung und/oder von der Antriebseinrichtung verläuft, insbesondere vertikal beabstandet verläuft.

Bei dem Tragabschnitt kann es sich insbesondere um einen Abschnitt des Aufbaus handeln, durch den ein Werkstückträger getragen beziehungsweise aufgenommen werden kann. Im Betrieb der Transporteinrichtung kann mit einer solchen Ausgestaltung ein ausreichender Abstand zwischen dem jeweils zu transportierenden Werkstückträger und der Läufervorrichtung beziehungsweise der Antriebseinrichtung aufrechterhalten werden.

Soweit durch die Antriebseinrichtung und/oder im Bereich der Läuferrichtung reibungsbedingt Partikel freigesetzt werden sollten, erfolgt dies mit Abstand zum Werkstückträger und damit auch zu den auf dem Werkstückträger positionierten Siebdruckwerkstücken. Die Gefahr unerwünschter Verunreinigungen der Siebdruckwerkstücke kann auf diese Weise weiter verringert werden. Es ergibt sich hierdurch eine noch weiter verbesserte Eignung für den Einsatz der Vorrichtung unter Reinraumbedingungen.

In noch weiter bevorzugter Weise kann der Aufbau, insbesondere mit einem aufgenommen Werkstückträger, in einer Draufsicht die Läufervorrichtung und/oder die Antriebseinrichtung zumindest abschnittsweise überdecken und/oder zumindest ein Seitenende der Läufervorrichtung überragen. Durch ein derartiges Überdecken und/oder Überragen kann mit nur geringem konstruktivem Aufwand die Gefahr verringert werden, dass auf Höhe der Läufervorrichtung und/oder der Antriebseinrichtung freigesetzte Partikel auf eine Höhe oberhalb des Aufbaus aufsteigen und sich auf dem Werkstückträger beziehungsweise darauf befindlicher Siebdruckwerkstücke ablagern. Die Reinheitsbedingungen für die Herstellung dreidimensionaler Siebdruckwerkstücke lassen sich mithin weiter verbessern.

Es kann weiter von Vorteil sein, wenn der Aufbau C-förmig ausgebildet ist und/oder einen Freiraum zur Aufnahme eines Drucktisches der Druckeinrichtung bildet. Dabei kann in einem Querschnitt des Aufbaus der Flächenmittelpunkt seitlich versetzt zum Gewichtsschwerpunkt des Aufbaus angeordnet sein. Eine solche Ausgestaltung ist konstruktiv einfach umzusetzen und gewährleistet gleichzeitig, dass ein auf dem Aufbau angeordneter Werkstückträger mit hoher Sicherheit und Stabilität durch einen Drucktisch kontaktiert werden kann, insbesondere zur Durchführung eines Druckvorgangs.

In noch weiter bevorzugter Weise kann der Aufbau einen Grundabschnitt zur Befestigung an der Läufervorrichtung, einen Tragabschnitt zur Aufnahme eines Werkstückträgers sowie einen Verbindungsabschnitt zur Verbindung des Tragabschnitts mit dem Grundabschnitt aufweisen, wobei ein Freiraum zur Aufnahme eines Drucktisches und/oder zur unterseitigen Kontaktierung eines Werkstückträgers bevorzugt zwischen dem Grundabschnitt und dem Tragabschnitt ausgebildet und/oder seitlich durch den Verbindungsabschnitt begrenzt sein kann. Hierdurch wird einerseits eine stabile Konstruktion des Aufbaus gewährleistet, bei gleichzeitig guter Zugänglichkeit eines auf dem Aufbau positionierten Werkstückträgers von dessen Unterseite.

In weiter bevorzugter Weise kann die Höhe eines Freiraums und/oder ein Abstand zwischen dem Grundabschnitt und dem Tragabschnitt bis zu 150 mm, weiter bevorzugt bis zu 140 mm, weiter bevorzugt bis zu 130 mm, weiter bevorzugt bis zu 120 mm, weiter bevorzugt bis zu 110 mm, weiter bevorzugt bis zu 100 mm, weiter bevorzugt bis zu 95 mm, insbesondere bis zu 90 mm oder etwa 90 mm betragen. Durch eine solche Ausgestaltung kann eine ausreichend kompakte Bauweise sichergestellt und gleichzeitig in vorteilhafter Weise eine temporäre Aufnahme von Vorrichtungskomponenten in dem Freiraum zwischen dem Grundabschnitt und dem Tragabschnitt gewährleistet werden.

In weiter bevorzugter Weise kann die Höhe eines Freiraums und/oder ein Abstand zwischen dem Grundabschnitt und dem Tragabschnitt mindestens 20 mm, weiter bevorzugt mindestens 30 mm, weiter bevorzugt mindestens 40 mm, weiter bevorzugt mindestens 50 mm, weiter bevorzugt mindestens 60 mm, weiter bevorzugt mindestens 70 mm, weiter bevorzugt mindestens 80 mm, weiter bevorzugt mindestens 85 mm, insbesondere mindestens 90 mm betragen. Hierdurch kann ein Freiraum zwischen dem Grundabschnitt und dem Tragabschnitt in vorteilhafter Weise zur temporären Aufnahme von Vorrichtungskomponenten dienen, bei verringerter Gefahr von Kollisionen.

In weiter bevorzugter Weise kann die Höhe eines Freiraums und/oder ein Abstand zwischen dem Grundabschnitt und dem Tragabschnitt zwischen 20 mm und 150 mm, weiter bevorzugt zwischen 30 mm und 140 mm, weiter bevorzugt zwischen 40 mm und 130 mm, weiter bevorzugt zwischen 50 mm und 120 mm, weiter bevorzugt zwischen 60 mm und 110 mm, weiter bevorzugt zwischen 70 mm und 100 mm, weiter bevorzugt zwischen 80 mm und 100 mm, weiter bevorzugt zwischen 85 mm und 95 mm, insbesondere etwa 90 mm betragen. Eine derartige Dimensionierung des Freiraums beziehungsweise des Abstands zwischen dem Grundabschnitt und dem Tragabschnitt gewährleistet eine kompakte und robuste Bauweise bei gleichzeitig geringer Kollisionsgefahr im Zuge der Anordnung von Vorrichtungskomponenten innerhalb des Freiraums.

Es kann weiter von Vorteil sein, wenn der Aufbau und/oder der Tragabschnitt des Aufbaus relativ zur Läufervorrichtung in Höhenrichtung beweglich gelagert und/oder höhenjustierbar angeordnet ist. Zusätzlich oder alternativ kann der Aufbau und/oder der Tragabschnitt des Aufbaus relativ zur Läufervorrichtung durch einen Drucktisch der Druckeinrichtung anhebbar angeordnet sein.

Durch eine derartige Ausgestaltung kann der Aufbau und/oder der Tragabschnitt des Aufbaus zur Durchführung eines Druckvorgangs in Höhenrichtung bewegt beziehungsweise relativ zur Läufervorrichtung angehoben werden. Mithin kann bei der Durchführung eines Druckvorgangs der Aufbau und/oder der Tragabschnitt des Aufbaus zusammen mit dem jeweiligen Werkstückträger relativ zur Läufervorrichtung angehoben und dadurch mit erhöhter Stabilität positioniert sein. Bei der Durchführung eines Druckvorgangs auftretende Kräfte können in einem angehobenen Zustand in geeigneter Weise durch einen Drucktisch aufgenommen werden, wohingegen eine Kraftübertragung oder Kraftaufnahme durch die Läufervorrichtung und/oder durch die Transportschiene vermieden werden kann.

Eine höhenbewegliche Anordnung oder Lagerung des Aufbaus relativ zur Läufervorrichtung kann insbesondere unabhängig von einer Höhenjustierbarkeit des Aufbaus und/oder des Tragabschnitts des Aufbaus relativ zur Läufervorrichtung vorgesehen sein.

Eine Höhenjustierbarkeit des Aufbaus und/oder des Tragabschnitts des Aufbaus relativ zur Läufervorrichtung kann insbesondere durch mindestens eine Justierschraube, insbesondere durch mehrere Justierschrauben, gewährleistet werden. Hierdurch kann eine geeignete Ausrichtung sowie Einstellung der Höhe des Aufbaus und/oder des Tragabschnitts sichergestellt werden. Ein Hebevorgang des Aufbaus und/oder des Tragabschnitts des Aufbaus durch einen Drucktisch kann somit ausgehend von einer korrekt eingestellten Ausgangshöhe des Aufbaus und/oder des Tragabschnitts des Aufbaus erfolgen.

In bevorzugter Weise kann eine Höhenjustierbarkeit von mindestens 5 mm, bevorzugt von wenigstens 10 mm, weiter bevorzugt von wenigstens 15 mm, noch weiter bevorzugt von wenigstens 20 mm, noch weiter bevorzugt von wenigstens 30 mm gegeben sein. Hierdurch kann auch bei verhältnismäßig großen Justieranforderungen eine ausreichend präzise Einstellung der Höhe des Aufbaus und/oder des Tragabschnitts des Aufbaus relativ zur Läufervorrichtung gewährleistet werden. Weiterhin kann eine Höhenjustierbarkeit von höchstens 30 mm, bevorzugt von höchstens 20 mm, weiter bevorzugt von höchstens 15 mm, noch weiter bevorzugt von höchstens 10 mm gegeben sein. Eine derartige Ausgestaltung kann mit nur geringem Bauraum bewerkstelligt werden und stellt gleichzeitig ein hohes Maß an Stabilität sicher.

Gemäß einer weiter bevorzugten Ausgestaltung kann ein Hub und/oder eine Höhenbeweglichkeit des Aufbaus und/oder des Tragabschnitts des Aufbaus relativ zur Läufervorrichtung begrenzt sein. Eine solche Begrenzung kann insbesondere durch eine mechanische Hubbegrenzungseinrichtung gebildet sein, besonders bevorzugt durch eine Hubbegrenzungsklaue. Auf diese Weise kann sichergestellt werden, dass sich der Aufbau oder der Tragabschnitt des Aufbaus nicht unerwünscht von der Läufervorrichtung löst. Es wird hierdurch ein hohes Maß an Betriebssicherheit gewährleistet.

In weiter bevorzugter Weise kann eine Hubbegrenzungseinrichtung den Hub des Aufbaus und/oder des Tragabschnitts des Aufbaus relativ zur Läufervorrichtung bei einer Hubstrecke von höchstens 20 mm, weiter bevorzugt von höchstens 15 mm, noch weiter bevorzugt von höchstens 10 mm, noch weiter bevorzugt von höchstens 5 mm begrenzen.

In weiter bevorzugter Weise kann die Hubbegrenzungseinrichtung und/oder die Hubbegrenzungsklaue an dem Aufbau angeordnet sein und/oder die Läufervorrichtung formschlüssig hintergreifen. Durch Anhebung des Aufbaus kann die Hubbegrenzungseinrichtung und/oder die Hubbegrenzungsklaue in formschlüssigen Kontakteingriff mit der Läufervorrichtung bringbar sein. Auf diese Weise kann mit nur geringem konstruktivem Aufwand eine geeignete Transportsicherung für den Aufbau bereitgestellt werden.

Gemäß einer weiter bevorzugten Ausgestaltung kann der Aufbau über eine Mehrpunktlagerung, insbesondere über eine 3-Punktlagerung oder über eine 4-Punktlagerung, auf der Läufervorrichtung befestigt und/oder höhenbeweglich geführt sein. Zumindest ein Lager zwischen dem Aufbau und der Läufervorrichtung kann durch einen Lagerdorn sowie eine Dornaufnahme für den Lagerdorn ausgebildet sein. Für den Transport kann auf diese Weise eine ausreichend sichere Positionierung des Aufbaus auf der Läufervorrichtung sichergestellt werden. Insbesondere kann der Aufbau in abgesetzter beziehungsweise auf der Läufervorrichtung abgesetzter Stellung in horizontaler Richtung spielfrei relativ zur Läufervorrichtung positioniert sein. Gleichzeitig kann eine sichere Anhebung des Aufbaus durch eine höhenbewegliche Führung sichergestellt werden.

In noch weiter bevorzugter Ausgestaltung kann die Mehrpunktlagerung und/oder zumindest ein Lager zwischen dem Aufbau und der Läufervorrichtung zur Selbstzentrierung und/oder Selbstausrichtung des Aufbaus relativ zur Läufervorrichtung ausgebildet sein. Bei dem Absetzen oder Absenken des Aufbaus auf der Läufervorrichtung kann hierdurch die korrekte Positionierung mit einem hohen Maß an Sicherheit und geringem Aufwand gewährleistet werden.

In weiter vorteilhafter Weise kann zumindest ein Lagerdorn konisch zulaufen und/oder zumindest eine Dornaufnahme kann konisch zulaufen. Eine Selbstzentrierung des Aufbaus relativ zur Läufervorrichtung lässt sich hierdurch konstruktiv einfach bewerkstelligen. In noch weiter vorteilhafter Weise ist es möglich, dass zumindest eine Dornaufnahme komplementär zum Lagerdorn konisch zuläuft, wodurch eine flächige Kontaktierung zwischen den jeweils konisch zulaufenden und einander zugewandten Flächen realisiert wird. Ebenso kann zumindest eine Dornaufnahme eine von dem jeweiligen Lagerdorn abweichende Konizität aufweisen, wodurch sich eine besonders kleine Kontaktfläche zwischen der Dornaufnahme und dem jeweiligen Lagerdorn ergeben kann.

Weiter bevorzugt kann eine Dornaufnahme an der Unterseite einer Justierschraube für die Höhenjustierung des Aufbaus relativ zur Läufervorrichtung ausgebildet sein. Eine solche Justierschraube kann insbesondere in einem Grundabschnitt des Aufbaus eingeschraubt und zur Höhenjustierung schraubbar angeordnet sein.

Gemäß einer noch weiter bevorzugten Ausgestaltung kann das Förderfahrzeug zumindest eine Stützeinrichtung zur Abstützung an der Transportschiene aufweisen, insbesondere eine an der Transportschiene zur Abstützung des Förderfahrzeugs abrollende Stützrolle. Zusätzlich oder alternativ kann das Förderfahrzeug über Rollenkontaktpunkte an der Transportschiene abgestützt sein, insbesondere ausschließlich über Rollenkontaktpunkte einer Antriebsrolle und/oder einer Stützrolle oder über Rollenkontaktpunkte einer Mehrzahl von Antriebsrollen und/oder Stützrollen. Auf diese Weise kann eine sichere und stabile Führung des Förderfahrzeugs auf der Transportschiene und damit ein besonders sicherer Transport von Werkstückträgern und/oder Siebdruckwerkstücken bewerkstelligt werden.

Die Transportschiene kann bevorzugt als Monoschiene ausgebildet und/oder eine Mehrzahl miteinander verbundener Monoschienenabschnitte aufweisen, insbesondere in Längsrichtung miteinander verbundener Monoschienenabschnitte. Die Transportschiene kann noch weiter bevorzugt modular zusammengesetzt sein und/oder aus mehreren Schienenmodulen bestehen.

Eine Monoschiene ist insbesondere als sogenannte Einschiene beziehungsweise zur Ausbildung eines einzelnen Fahrwegs für das jeweilige Förderfahrzeug vorgesehen. Im Falle einer Ausgestaltung als Monoschiene ist ein Förderfahrzeug lediglich an einer einen einzelnen Fahrweg bildenden Transportschiene abgestützt. Eine weitere parallel verlaufende Transportschiene zur gleichzeitigen Abstützung des jeweiligen Förderfahrzeugs ist im Falle einer Monoschiene mithin nicht vorgesehen. Eine solche Monoschiene gewährleistet einen kompakten und stabilen Aufbau und durch Verbindung mehrerer Monoschienenabschnitte und/oder mehrerer Schienenmodule können mit nur geringem Aufwand und zu geringen Kosten zahlreiche Transportkonfigurationen und Streckenverläufe realisiert werden.

Noch weiter bevorzugt kann das Förderfahrzeug entlang eines Längsabschnitts der Transportschiene mehrseitig umgreifend an dieser angeordnet sein, insbesondere dreiseitig umgreifend. Die Stabilität des Förderfahrzeugs auf der Transportschiene kann hierdurch in vorteilhafter Weise verbessert werden.

In noch weiter bevorzugter Weise kann das Förderfahrzeug wenigstens einen Positionssensor und/oder einen Abstandssensor aufweisen. Hierdurch kann eine zuverlässige Positionsüberwachung und/oder Positionssteuerung des Förderfahrzeugs erfolgen. Insbesondere kann durch eine solche Ausgestaltung eine Kollision von zwei Förderfahrzeugen vermieden werden.

Ferner kann das Förderfahrzeug zur Kommunikation mit einem an der Transportschiene angeordneten Steuermodul ausgebildet sein. Die Kommunikation über ein derartiges Steuermodul ermöglicht die Übermittlung von Signalen an das Förderfahrzeug, um den jeweils gewünschten Transportweg und/oder die Transportgeschwindigkeit beziehungsweise den Transportverlauf festzulegen.

Mithin kann nach einer weiter bevorzugten Ausgestaltung an der Transportschiene zumindest ein Steuermodul angeordnet sein. Ein solches Steuermodul kann zur Kommunikation mit einer übergeordneten Vorrichtungssteuerung und/oder zur Kommunikation mit wenigstens einem Förderfahrzeug zur Steuerung des Transportwegs und/oder der Transportgeschwindigkeit des jeweiligen Förderfahrzeugs angeordnet sein. Über ein solches Steuermodul lässt sich das jeweilige Förderfahrzeug, insbesondere eine Mehrzahl von Förderfahrzeugen, in besonders vorteilhafter Weise steuern, nämlich durch eine übergeordnete Vorrichtungssteuerung. Transportwege und/oder Transportgeschwindigkeiten mehrerer Förderfahrzeuge lassen sich aufeinander abstimmen. Ebenso lassen sich Transportwege und/oder Transportgeschwindigkeiten von Förderfahrzeugen auf die Bearbeitungs- und Prozesszeiten für die jeweiligen Siebdruckwerkstücke anpassen.

Zusätzlich oder alternativ kann an der Transportschiene zumindest eine Steuereinheit, insbesondere Steuernocke, zur Geschwindigkeitssteuerung eines Förderfahrzeugs angeordnet sein. Eine solche Steuereinheit kann bevorzugt ausschließlich zur Geschwindigkeitssteuerung eines Förderfahrzeugs ausgebildet sein. Auf diese Weise kann mit nur geringem apparativem Aufwand Einfluss auf die Transportgeschwindigkeit und/oder auf den Transportverlauf eines Förderfahrzeugs genommen werden.

Gemäß einer weiter bevorzugten Ausgestaltung kann an der Transportschiene zumindest ein Positionssensor und/oder ein Abstandssensor angeordnet sein. Kollisionen von Förderfahrzeugen, insbesondere von benachbarten beziehungsweise hintereinander auf der Transportschiene angeordneten Förderfahrzeugen, lassen sich durch Positions- und/oder Abstandssensoren mit hoher Zuverlässigkeit vermeiden.

Noch weiter bevorzugt kann die Transporteinrichtung ein Kollisionsüberwachungssystem zur Kollisionsvermeidung zwischen Förderfahrzeugen aufweisen. Dabei kann das Kollisionsüberwachungssystem zur Signalverarbeitung von Abstands- und/oder Positionssensoren und/oder von Steuermodulen und/oder Steuereinheiten der Transportschiene eingerichtet sein. Die Betriebssicherheit der Vorrichtung kann auf diese Weise noch weiter verbessert und der Automatisierungsgrad weiter erhöht werden.

Nach einer noch weiter bevorzugten Ausgestaltung kann der Aufbau, insbesondere der Tragabschnitt und/der die Rahmenvorrichtung, Stützabschnitte oder zumindest einen Stützabschnitt für die Kontaktierung und/oder die Anhebung des Aufbaus durch einen Drucktisch der Druckeinrichtung aufweisen. Solche Stützabschnitte können bevorzugt an einer Unterseite des Tragabschnitts und/oder der Rahmenvorrichtung ausgebildet sein. Mittels derartiger Stützabschnitte kann der Aufbau des Förderfahrzeugs, insbesondere der Tragabschnitt und/der die Rahmenvorrichtung, unabhängig von dem jeweiligen Werkstückträger durch einen Drucktisch kontaktiert und angehoben werden. Die Ausbildung an der Unterseite des Tragabschnitts erlaubt eine gute Zugänglichkeit für einen Drucktisch und damit eine insgesamt robuste und kostengünstige Konstruktion.

In noch weiter bevorzugter Weise können die Stützabschnitte für eine für die Werkstückträgerlagerung belastungsfreie Kontaktierung durch einen Drucktisch ausgebildet und/oder angeordnet sein. Der Aufbau kann über die Stützabschnitte durch einen Drucktisch, für die Werkstückträgerlagerung belastungsfrei, kontaktierbar und/oder anhebbar sein. Das Kontaktieren und Anheben des Aufbaus sowie gleichzeitig auch des Werkstückträgers durch einen Drucktisch einer Druckeinrichtung kann somit Belastungsfrei beziehungsweise frei von zusätzlichen Krafteinwirkungen auf eine Werkstückträgerlagerung des Aufbaus erfolgen. Die sichere Fixierung des jeweiligen Werkstückträgers in oder an dem Aufbau des Förderfahrzeugs wird durch ein Kontaktieren, Anheben und Absenken des Aufbaus mitsamt Werkstückträger nicht beeinträchtigt.

Gemäß einer noch weiter bevorzugten Ausgestaltung kann die Druckeinrichtung einen anhebbaren Drucktisch und/oder einen als Vakuumdrucktisch ausgebildeten Drucktisch aufweisen, insbesondere eine anhebbaren Vakuumdrucktisch.

Ein als Vakuumdrucktisch ausgebildeter Drucktisch kann insbesondere Nuten und/oder Öffnungen zur Erzeugung eines Vakuums und/oder eines Unterdrucks auf der Unterseite eines zu fixierenden und auf dem Drucktisch befindlichen Werkstückträgers aufweisen. Mit einem Vakuumdrucktisch kann ein Werkstückträger mit geringem Aufwand und hoher Sicherheit fixiert werden, insbesondere temporär und zur Durchführung eines Druckvorgangs.

Gemäß einer noch weiter bevorzugten Ausgestaltung kann der Drucktisch der Druckeinrichtung zur flächigen Kontaktierung eines in einem Förderfahrzeug aufgenommenen Werkstückträgers ausgebildet sein. Zusätzlich oder alternativ kann der Drucktisch zur Kontaktierung von Stützabschnitten des Aufbaus des Förderfahrzeugs ausgebildet sein. Es kann auf diese Weise eine besonders sichere und zuverlässige Anhebung des Aufbaus und auch des jeweils auf dem Aufbau positionierten Werkstückträgers bewerkstelligt werden.

In besonders bevorzugter Weise kann der Drucktisch der Druckeinrichtung dazu ausgebildet sein, den Aufbau über die Stützabschnitte, für die Werkstückträgerlagerung belastungsfrei, anzuheben, insbesondere bei gleichzeitiger Kontaktierung des Werkstückträgers. Ein unerwünschtes Herauslösen des Werkstückträgers aus der Werkstückträgerlagerung kann hierdurch vermieden und damit ein hohes Maß an Betriebssicherheit gewährleistet werden. Ein für die Werkstückträgerlagerung belastungsfreies Anheben kann zudem unerwünschte Relativbewegungen zwischen der Werkstückträgerlagerung und dem jeweils darin gehaltenen Werkstückträger verhindern, sodass auch unerwünschter Abrieb und damit die Freisetzung von luftschwebenden Partikeln verhindert werden kann.

In noch weiter bevorzugter Weise kann in einer Draufsicht auf die Transporteinrichtung der Gewichtsschwerpunkt des Förderfahrzeugs versetzt zur Transportschiene angeordnet sein. Insbesondere kann der Gewichtsschwerpunkt des Förderfahrzeugs in horizontaler Richtung versetzt zur Transportschiene angeordnet sein. Auf diese Weise kann für vordefinierte Kurvenfahrten des Förderfahrzeugs, insbesondere in einer vordefinierten Kurvenrichtung, die Gefahr von Kippbewegungen des Förderfahrzeugs vorteilhaft reduziert werden. Dies gilt besonders bei einer in Höhenrichtung beweglichen Lagerung des Aufbaus und/oder des Tragabschnitts des Aufbaus relativ zur Läufervorrichtung. Eine höhenbewegliche Lagerung des Aufbaus und/oder des Tragabschnitts des Aufbaus kann in Kurvenfahrten zu Kippbewegungen führen, denen durch versetzte Anordnung des Gewichtsschwerpunkt des Förderfahrzeugs, insbesondere in horizontaler Richtung relativ zur Transportschiene versetzter Anordnung, in vorteilhafter Weise entgegengewirkt werden kann. Ein unerwünschtes Loslösen oder Herunterfallen des jeweils getragenen Werkstückträgers lässt sich hierdurch insgesamt verhindern.

In noch weiter bevorzugter Weise kann in einer Draufsicht auf die Transporteinrichtung der Gewichtsschwerpunkt des Förderfahrzeugs um wenigstens 10 mm, bevorzugt um wenigstens 15 mm, weiter bevorzugt um wenigstens 20 mm, noch weiter bevorzugt um wenigstens 25 mm, noch weiter bevorzugt um wenigstens 30 mm, noch weiter bevorzugt um wenigstens 40 mm, noch weiter bevorzugt um wenigstens 50 mm, noch weiter bevorzugt um wenigstens 60 mm, noch weiter bevorzugt um wenigstens 70 mm oder wenigstens 80 mm, versetzt zur Transportschiene angeordnet sein. Kippbewegungen in Kurvenfahrten lassen sich hierdurch besonders zuverlässig vermeiden.

In noch weiter bevorzugter Weise kann in einer Draufsicht auf die Transporteinrichtung der Gewichtsschwerpunkt des Förderfahrzeugs um bis zu 80 mm, bevorzugt um bis zu 70 mm, weiter bevorzugt um bis zu 60 mm, noch weiter bevorzugt um bis zu 50 mm, noch weiter bevorzugt um bis zu 40 mm, noch weiter bevorzugt um bis zu 30 mm, noch weiter bevorzugt um bis zu 25 mm, noch weiter bevorzugt um bis zu 20 mm, noch weiter bevorzugt um bis zu 15 mm, insbesondere um bis zu 10 mm, versetzt zur Transportschiene angeordnet sein. Durch eine derartige Anordnung des Gewichtsschwerpunkts kann auch für Geradeausfahrten sowie für eine ruhende Stellung des Förderfahrzeugs eine ausreichende Stabilität auf der Transportschiene gewährleistet werden.

Weiter bevorzugt kann in einer Draufsicht auf das Förderfahrzeug der Gewichtsschwerpunkt des Aufbaus versetzt zum Gewichtsschwerpunkt der Läufervorrichtung angeordnet sein. Insbesondere kann der Gewichtsschwerpunkt des Aufbaus in horizontaler Richtung versetzt zum Gewichtsschwerpunkt der Läufervorrichtung angeordnet sein. Eine solche Ausgestaltung kann die Gefahr von Kippbewegungen des Förderfahrzeugs noch weiter reduzieren. Durch den versetzten Gewichtsschwerpunkt des Aufbaus kann in besonders geeigneter Weise ein Moment erzeugt werden, dass etwaigen Kippbewegungen des Aufbaus in Kurvenfahrten mit hoher Sicherheit entgegenwirken kann. Dies gilt wiederum in besonderer Weise bei einer in Höhenrichtung beweglichen Lagerung des Aufbaus und/oder des Tragabschnitts des Aufbaus relativ zur Läufervorrichtung. Eine höhenbewegliche Lagerung des Aufbaus und/oder des Tragabschnitts des Aufbaus kann in Kurvenfahrten zu Kippbewegungen führen, denen durch versetzte Anordnung des Gewichtsschwerpunkt des Aufbaus, insbesondere in horizontaler Richtung versetzt zum Gewichtsschwerpunkt der Läufervorrichtung angeordnet, in vorteilhafter Weise entgegengewirkt werden kann.

In noch weiter bevorzugter Weise kann in einer Draufsicht auf das Förderfahrzeug der Gewichtsschwerpunkt des Aufbaus um wenigstens 10 mm, bevorzugt um wenigstens 15 mm, weiter bevorzugt um wenigstens 20 mm, noch weiter bevorzugt um wenigstens 25 mm, noch weiter bevorzugt um wenigstens 30 mm, noch weiter bevorzugt um wenigstens 40 mm, noch weiter bevorzugt um wenigstens 50 mm, noch weiter bevorzugt um wenigstens 60 mm, noch weiter bevorzugt um wenigstens 70 mm oder wenigstens 80 mm, versetzt zum Gewichtsschwerpunkt der Läufervorrichtung angeordnet sein. Kippbewegungen in Kurvenfahrten lassen sich hierdurch wiederum besonders zuverlässig vermeiden.

In noch weiter bevorzugter Weise kann in einer Draufsicht auf das Förderfahrzeug der Gewichtsschwerpunkt des Aufbaus um bis zu 80 mm, bevorzugt um bis zu 70 mm, weiter bevorzugt um bis zu 60 mm, noch weiter bevorzugt um bis zu 50 mm, noch weiter bevorzugt um bis zu 40 mm, noch weiter bevorzugt um bis zu 30 mm, noch weiter bevorzugt um bis zu 25 mm, noch weiter bevorzugt um bis zu 20 mm, noch weiter bevorzugt um bis zu 15 mm, insbesondere um bis zu 10 mm, versetzt zum Gewichtsschwerpunkt der Läufervorrichtung angeordnet sein. Durch eine derartige Anordnung des Gewichtsschwerpunkts kann wiederum für Geradeausfahrten sowie für eine ruhende Stellung des Förderfahrzeugs eine ausreichende Stabilität auf der Transportschiene gewährleistet werden.

In noch weiter bevorzugter Weise kann das Förderfahrzeug und/oder der Aufbau des Förderfahrzeugs und/oder die Rahmenvorrichtung des Förderfahrzeugs einen Aufnahmemittelpunkt für einen Werkstückträger definieren und/oder aufweisen. Ebenso kann ein solcher Aufnahmemittelpunkt für einen Werkstückträger durch eine Werkstückträgerlagerung definiert sein. Bei einem auf dem Förderfahrzeug und/oder auf dem Aufbau und/oder in der Rahmenvorrichtung des Aufbaus angeordneten und/oder fixierten Werkstückträger kann sich der Mittelpunkt des Werkstückträgers insbesondere auf dem Aufnahmemittelpunkt und/oder in Draufsicht auf das Förderfahrzeug fluchtend zu dem Aufnahmemittelpunkt befinden.

In weiter bevorzugter Weise kann in einer Draufsicht auf das Förderfahrzeug der Aufnahmemittelpunkt für einen Werkstückträger versetzt zur Transportschiene angeordnet sein. Insbesondere kann bei dem Förderfahrzeug der Aufnahmemittelpunkt für einen Werkstückträger in horizontaler Richtung versetzt zur Transportschiene angeordnet sein. Auf diese Weise kann eine besonders gute Zugänglichkeit des Werkstückträgers beziehungsweise kontaktierbarkeit des Werkstückträgers durch einen Drucktisch gewährleistet werden.

In noch weiter bevorzugter Weise kann in einer Draufsicht auf das Förderfahrzeug der Aufnahmemittelpunkt für einen Werkstückträger versetzt zur Läufervorrichtung angeordnet sein. Insbesondere kann bei dem Förderfahrzeug der Aufnahmemittelpunkt für einen Werkstückträger in horizontaler Richtung versetzt zur Läufervorrichtung angeordnet sein. Auch auf diese Weise kann eine besonders gute Zugänglichkeit des Werkstückträgers beziehungsweise kontaktierbarkeit des Werkstückträgers durch einen Drucktisch gewährleistet werden.

Gemäß einer weiter bevorzugten Ausgestaltung kann die Transporteinrichtung und/oder das Schienensystem als Transportkreislauf ausgebildet sein und/oder für den automatisierten Transport zumindest eines Siebdruckwerkstücks und/oder eines Werkstückträgers im Kreislauf zwischen der Druckeinrichtung und einer von der Druckeinrichtung beabstandeten Position eingerichtet sein. Eine derartige Konzeption gewährleistet ein hohes Maß an Produktivität. Unterschiedliche Einrichtungen beziehungsweise Stationen innerhalb der gesamten Vorrichtung können mit einer solchen Transporteinrichtung in vorteilhafter Weise miteinander verbunden werden. Ein im Wesentlichen unterbrechungsfreier Produktionsablauf mit aufeinander folgenden Schritten in den jeweiligen Einrichtungen beziehungsweise Stationen kann hierdurch gewährleistet werden.

In weiter bevorzugter Weise kann eine Mehrzahl von Druckeinrichtungen, zwischen denen die Transporteinrichtung verläuft und/oder zwischen denen ein Siebdruckwerkstück und/oder ein Werkstückträger mittels der Transporteinrichtung transportierbar ist, vorgesehen sein. Mit mehreren oder unterschiedlichen Druckeinrichtungen kann die Produktivität beziehungsweise auch die Fertigungsflexibilität weiter erhöht werden.

Insbesondere kann eine Mehrzahl von Druckeinrichtungen dazu vorgesehen sein, bei der Erzeugung eines einzelnen Siebdruckwerkstücks aufeinander abfolgend und mit nur geringem Aufwand unterschiedliche Materialien oder Materialzusammensetzungen zu drucken und/oder unterschiedliche Drucksiebe oder Druckschablonen zu verwenden. Für die Erzeugung unterschiedlich ausgebildeter Drucklagen eines einzelnen Siebdruckwerkstücks kann bei einer solchen Anordnung eine aufwendige Umrüstung oder Anpassung der jeweiligen Druckeinrichtungen vermieden werden.

In noch weiter bevorzugter Weise kann zumindest eine Trocknungseinrichtung für zumindest ein Siebdruckwerkstück, insbesondere eine Mehrzahl von Trocknungseinrichtungen, vorgesehen sein. Durch eine solche Trocknungseinrichtung kann nach dem Auftrag einer Drucklage eine zuverlässige Trocknung der zuletzt durchgeführten Drucklage vorgenommen werden, um dann wiederum die nächste Drucklage auf das Siebdruckwerkstück aufzubringen.

Die zumindest eine Trocknungseinrichtung kann bevorzugt für den kontinuierlichen Trocknungsdurchlauf und/oder für die stationäre Trocknung ausgebildet sein. Die Trocknungseinrichtung kann insbesondere mit einer Trocknungsstrecke für den kontinuierlichen Trocknungsdurchlauf von Siebdruckwerkstücken und/oder Werkstückträgern ausgebildet sein.

Ein kontinuierlicher Trocknungsdurchlauf gestattet einen insgesamt kontinuierlichen Produktionsprozess für eine Mehrzahl von Siebdruckwerkstücken beziehungsweise mit einer Mehrzahl von Werkstückträgern, auf denen Siebdruckwerkstücke angeordnet sein können. Sowohl das Bedrucken als auch das Trocknen kann durch einen kontinuierlichen Trocknungsdurchlauf im Wesentlichen unterbrechungsfrei vorgenommen werden, wodurch die Gesamtproduktivität der Vorrichtung weiter gesteigert werden kann.

Eine Trocknungseinrichtung für die stationäre Trocknung kann besonders kompakt und platzsparend aufgebaut sein. In einer stationären Trocknung kann ein Siebdruckwerkstück beziehungsweise ein Werkstückträger mit darauf angeordnetem Siebdruckwerkstück temporär positioniert beziehungsweise angehalten werden, um einen Trocknungsschritt durchzuführen.

Gemäß einer noch weiter bevorzugten Ausgestaltung kann die Transporteinrichtung für den Transport eines Siebdruckwerkstücks und/oder eines Werkstückträgers hin zur und/oder weg von der Trocknungseinrichtung und/oder durch die Trocknungseinrichtung hindurch ausgebildet sein. Zusätzlich oder alternativ kann die Transporteinrichtung für den Transport eines Siebdruckwerkstücks und/oder eines Werkstückträgers zwischen der Druckeinrichtung und der Trocknungseinrichtung ausgebildet sein. Auf diese Weise können Werkstückträger mit Siebdruckwerkstücken mit nur geringem Aufwand einer Trocknung zugeführt und im Anschluss wieder wegbewegt werden, beispielsweise zur Durchführung weiterer Druckschritte.

Weiter bevorzugt kann die Transporteinrichtung durch die Trocknungseinrichtung hindurch verlaufen, sodass manuelle Handhabungen der Werkstückträger vollständig vermieden werden können. Zusätzlich oder alternativ kann die Transporteinrichtung gesondert und/oder unabhängig von der Trocknungseinrichtung ausgebildet sein. Hierdurch kann ein insgesamt modularer Aufbau ermöglicht oder weiter begünstigt werden. Die Transporteinrichtung kann unabhängig von der Trocknungseinrichtung konfiguriert und zur Verbindung der Transporteinrichtung mit zumindest einer weiteren Einrichtung oder Position innerhalb der Vorrichtung angeordnet sein.

Trotz von der Trocknungseinrichtung gesonderter und/oder unabhängiger Ausbildung der Transporteinrichtung kann diese an die Trocknungseinrichtung angepasst sein, insbesondere um einen zuverlässigen Transport eines Werkstückträgers und/oder eines Siebdruckwerkstücks hin zur und/oder weg von der Druckeinrichtung zu ermöglichen.

In weiter bevorzugter Weise kann der Werkstückträger mittels der Transporteinrichtung unabhängig von der Druckeinrichtung beziehungsweise der Drucktischplatte durch die Trocknungseinrichtung verfahrbar sein, insbesondere automatisiert durch die Trocknungseinrichtung verfahrbar sein.

In besonders bevorzugter Weise kann die Trocknungseinrichtung zur Trocknung zumindest eines Siebdruckwerkstücks und zur gleichzeitigen Kühlung eines das jeweils zu trocknende Siebdruckwerkstück tragenden Werkstückträgers ausgebildet sein. Auf diese Weise lässt sich einerseits eine geeignete Trocknung des jeweiligen Siebdruckwerkstücks beziehungsweise der zuletzt gedruckten Lage des Siebdruckwerkstücks vornehmen. Gleichzeitig kann der Werkstückträger durch die Kühlung auf einer verhältnismäßig geringen Temperatur gehalten werden. Eine unerwünschte Erwärmung des Werkstückträgers und damit auch eine zu starke Erwärmung bereits gedruckter und zuvor getrockneter Schichten des jeweiligen Siebdruckwerkstücks kann hierdurch vermieden werden. Die Prozesssicherheit kann auf diese Weise weiter verbessert werden.

In besonders bevorzugter Weise kann die Trocknungseinrichtung einen Trocknungsabschnitt zur Trocknung von Siebdruckwerkstücken und einen Kühlabschnitt zur Kühlung von Werkstückträgern aufweisen. Bevorzugt kann die Trocknungseinrichtung unterteilt sein in einen Trocknungsabschnitt und einen Kühlabschnitt. Eine derartige Unterteilung kann eine gegenseitige Beeinträchtigung der Trocknungs- und Kühlfunktionalität vermeiden oder auf ein geringes Maß reduzieren.

In bevorzugter Weise kann eine Unterteilung der Trocknungseinrichtung in einen Trocknungsabschnitt und einen Kühlabschnitt durch eine Ebene definiert sein, auf der ein Werkstückträger bei Positionierung in der Trocknungseinrichtung und/oder beim Transport durch die Trocknungseinrichtung angeordnet ist.

Weiter bevorzugt kann innerhalb des Kühlabschnitts wenigstens eine Düsenvorrichtung und/oder Lochplatte zur Zuführung eines Kühlluftstroms, insbesondere von Kühldruckluft, angeordnet sein. Insbesondere kann ein Trocknungsabschnitt oberhalb einer Düsenvorrichtung und/oder Lochplatte zur Zuführung eines Kühlluftstroms angeordnet sein. Hierdurch wird eine effektive Kühlung mit nur geringem konstruktivem Aufwand ermöglicht.

Gemäß einer noch weiter bevorzugten Ausgestaltung kann die Trocknungseinrichtung zur Konvektionstrocknung eines Siebdruckwerkstücks und/oder zur Blasluftkühlung von Werkstückträgern ausgebildet sein. Insbesondere kann die Trocknungseinrichtung zur Konvektionstrocknung eines Siebdruckwerkstücks bei gleichzeitiger Blasluftkühlung des das jeweilige Siebdruckwerkstück tragenden Werkstückträgers ausgebildet sein.

Eine Konvektionstrocknung sowie auch eine gleichzeitige Blasluftkühlung kann verhältnismäßig einfach und mit geringem Konstruktionsaufwand realisiert werden. Dabei kann insbesondere eine Gleichzeitigkeit der Konvektionstrocknung eines Siebdruckwerkstücks sowie eine Blasluftkühlung des jeweiligen Werkstückträgers eine verbesserte Betriebssicherheit gewährleisten, da trotz der Konvektionstrocknung eine unerwünscht starke Erwärmung des Werkstückträgers sowie damit auch eine Erwärmung der auf dem Werkstückträger bereits aufgedruckten Schichten sicher vermieden werden kann.

Zusätzlich oder alternativ kann die Trocknungseinrichtung eine Kontaktkühlung für einen Werkstückträger aufweisen, bevorzugt eine mitfahrende Kontaktkühlung für einen Werkstückträger. Eine solche Kontaktkühlung gewährleistet eine sehr geringe Beeinträchtigung der Trocknungsfunktionalität.

In noch weiter bevorzugter Weise kann die Trocknungseinrichtung zur Aktivierung und Deaktivierung von Kühlpositionen in Abhängigkeit der Position eines Werkstückträgers innerhalb der Trocknungseinrichtung eingerichtet sein, insbesondere zur Aktvierung von Kühlpositionen unterhalb der jeweils aktuellen Position eines Werkstückträgers. Auf diese Weise kann eine Kühlung ausschließlich im Bereich der aktuellen Position eines Werkstückträgers erfolgen. Der Energieverbrauch für die Kühlung sowie auch für die Trocknung kann hierdurch insgesamt geringgehalten werden, da auch ungünstige Beeinträchtigungen zwischen der Trocknung und der Kühlung vermieden werden können.

Weiter bevorzugt kann eine Kühlposition zur Aktivierung durch selektive Ansteuerung von einzelnen oder mehreren Kühldüsen und/oder Druckluftöffnungen in und/oder an einer Düsenvorrichtung und/oder Lochplatte eingerichtet sein.

Dementsprechend kann eine Kühlposition zur Deaktivierung durch selektive Ansteuerung von einzelnen oder mehreren Kühldüsen und/oder Druckluftöffnungen in und/oder an einer Düsenvorrichtung und/oder Lochplatte eingerichtet sein. Insbesondere kann eine Deaktivierung durch selektives Abstellen beziehungsweise Blockieren einer oder mehrerer zuvor selektiv angesteuerter Kühldüsen und/oder Druckluftöffnungen in und/oder an einer Düsenvorrichtung und/oder Lochplatte vorgenommen werden.

Gemäß einer weiter bevorzugten Ausgestaltung kann die Trocknungseinrichtung zumindest einen Luftfilter und/oder eine Mehrzahl von Düsen für gefilterte Trocknungsluft aufweisen. Die Gefahr von Luftkontaminationen und damit auch von unerwünschtem Partikeleintrag in die jeweiligen Siebdruckwerkstücke lässt sich damit weiter verringern.

Zusätzlich oder alternativ kann die Trocknungseinrichtung als Umlufttrockner und/oder zur kontinuierlichen und/oder periodischen Frischluft- und/oder Raumluftzufuhr ausgebildet sein. Ein solcher Umlufttrockner kann mit verhältnismäßig geringem Energieaufwand betrieben werden und gleichzeitig eine effektive Trocknung von Siebdruckwerkstücken gewährleisten.

In noch weiter bevorzugter Ausgestaltung kann die Trocknungseinrichtung dazu ausgebildet sein, einen Trocknungsluftstrom auf ein Siebdruckwerkstück zu leiten, insbesondere unter einem Winkel zu einer durch die Transportschiene gebildeten Transportachse beziehungsweise unter einem Winkel zur Transportrichtung des jeweiligen Siebdruckwerkstücks und/oder des jeweiligen Werkstückträgers und/oder quer zu dessen Transportrichtung und/oder oberseitig auf das jeweilige Siebdruckwerkstück zu leiten.

Eine Transportachse oder Transportrichtung des jeweiligen Siebdruckwerkstücks und/oder des jeweiligen Werkstückträgers verläuft insbesondere entlang der Längserstreckung der Transportschiene. Soweit ein Trocknungsluftstrom unter einem Winkel auf ein Siebdruckwerkstück geleitet wird, kann es sich um eine Richtung des Trocknungsluftstroms handeln, die sich von der Transportachse oder Transportrichtung des jeweiligen Siebdruckwerkstücks und/oder des jeweiligen Werkstückträgers unterscheidet. Es kann sich mithin um eine Richtung des Trocknungsluftstroms handeln, die gegenüber der Transportachse beziehungsweise der Transportrichtung des jeweiligen Siebdruckwerkstücks und/oder des jeweiligen Werkstückträgers geneigt ist, nämlich um einen bestimmten oder vordefinierten Winkel geneigt ist. Eine Richtung des Trocknungsluftstroms quer zur Transportachse der Transportschiene oder quer zur Transportrichtung des jeweiligen Siebdruckwerkstücks und/oder des jeweiligen Werkstückträgers verläuft insbesondere in einem rechten Winkel beziehungsweise in einem Winkel von 90° relativ zur Transportachse oder relativ zur Transportrichtung des jeweiligen Siebdruckwerkstücks und/oder des jeweiligen Werkstückträgers.

Durch eine solche Ausgestaltung der Trocknungseinrichtung kann einerseits eine geeignete Trocknung durch einen Trocknungsluftstrom gewährleistet werden, bei gleichzeitig geringer Gefahr unerwünschter Relativbewegungen zwischen dem Siebdruckwerkstück und dem jeweiligen Werkstückträger. Zudem kann durch einen solchen Trocknungsluftstrom in vorteilhafter Weise eine Unterteilung in Kühlabschnitt und Trocknungsabschnitt durch eine Ebene definiert sein, auf der ein Werkstückträger bei Positionierung in der Trocknungseinrichtung und/oder während des Transports durch die Trocknungseinrichtung angeordnet ist.

Weiter bevorzugt kann die Trocknungseinrichtung dazu ausgebildet sein, Luftströme derart abzusaugen, dass sich ein Absaugluftstrom unter einem Winkel zu einer durch die Transportschiene gebildeten Transportachse oder unter einem Winkel zur Transportrichtung des jeweiligen Siebdruckwerkstücks und/oder des jeweiligen Werkstückträgers einstellt, insbesondere quer zur Transportrichtung und/oder in einer horizontalen Richtung von dem jeweiligen Siebdruckwerkstück und/oder Werkstückträger einstellt.

Soweit Luftströme derart abgesaugt werden, dass sich aufgrund der Absaugung ein Absaugluftstrom unter einem Winkel zu einer durch die Transportschiene gebildeten Transportachse oder unter einem Winkel zur Transportrichtung des jeweiligen Siebdruckwerkstücks und/oder des jeweiligen Werkstückträgers einstellt, kann es sich um eine Richtung handeln, die sich von der Transportachse oder Transportrichtung des jeweiligen Siebdruckwerkstücks und/oder des jeweiligen Werkstückträgers unterscheidet. Es kann sich mithin um eine Richtung handeln, die gegenüber durch die Transportschiene gebildete Transportachse oder gegenüber der der Transportrichtung des jeweiligen Siebdruckwerkstücks und/oder des jeweiligen Werkstückträgers geneigt ist, nämlich um einen bestimmten oder vordefinierten Winkel geneigt ist. Eine Richtung des Absaugluftstroms quer zur Transportachse beziehungsweise Transportrichtung des jeweiligen Siebdruckwerkstücks und/oder des jeweiligen Werkstückträgers verläuft insbesondere in einem rechten Winkel beziehungsweise in einem Winkel von 90° relativ zur Transportachse oder Transportrichtung des jeweiligen Siebdruckwerkstücks und/oder des jeweiligen Werkstückträgers.

Durch eine solche Ausgestaltung kann eine unerwünschte Beeinträchtigung zwischen einem auf den Werkstückträger geleiteten Trocknungsluftstrom und einem von dem Werkstückträger abgesaugten beziehungsweise weggeleiteten Trocknungsluftstrom vermeiden werden.

Ferner kann in vorteilhafter Weise die Trocknungseinrichtung dazu eingerichtet sein, abgesaugte Trocknungs- und/oder Kühlluft erneut als Trocknungsluft auf ein zu trocknendes Siebdruckwerkstück zu leiten. Dabei kann abgesaugte Trocknungs- und/oder Kühlluft vollständig oder zumindest teilweise erneut als Trocknungsluft auf ein zu trocknendes Siebdruckwerkstück geleitet werden. In letzterem Fall kann die Trocknungseinrichtung für einen sogenannten Mischbetrieb ausgebildete und/oder eingerichtet sein. Abgesaugte Trocknungs- und/oder Kühlluft kann mit Frischluft oder neu zugeführter Luft vermischt werden, bevor die jeweils vermischten Luftmengen auf ein zu trocknendes Siebdruckwerkstück geleitet werden. Ein energieeffizienter Betrieb kann auf diese Weise insgesamt sichergestellt werden.

Weiterhin kann die Trocknungseinrichtung in vorteilhafter Weise einen Wärmetauscher aufweisen, insbesondere zur Wärmerückgewinnung abgesaugter Trocknungs- und/oder Kühlluft. Mithin kann abgesaugte Trocknungs- und/oder Kühlluft einem Wärmetauscher zugeführt werden, um rückgewonnene Wärmeenergie zur Aufwärmung eines Trocknungsluftstroms zu verwenden. Bei Einsatz eines solchen Wärmetauschers kann abgesaugte Trocknungs- und/oder Kühlluft, nachdem diese an dem Wärmetauscher vorbeigeführt worden ist, zumindest teilweise oder auch vollständig ins Freie beziehungsweise aus der Trocknungseinrichtung herausgeleitet werden.

Eine solche Ausgestaltung kann einerseits einen energieeffizienten Betrieb gewährleisten. Gleichzeitig verringert sich jedoch die Gefahr von Partikelkontamination, da abgesaugte und gegebenenfalls aufgrund der Vorbeiführung an den jeweiligen Siebdruckwerkstücken und/oder den Werkstückträgern mit Partikeln bereits kontaminierte Trocknungs- und/oder Kühlluft eben aus der Trocknungseinrichtung herausgeleitet werden kann. Eine Energierückgewinnung bedarf bei einer solchen Ausgestaltung insbesondere keine Kreislaufführung der Trocknungs- und/oder Kühlluft als solche, sondern es kann allenfalls die Wärmenergie der Trocknungs- und/oder Kühlluft zurückgewonnen werden.

Gemäß einer noch weiter bevorzugten Ausgestaltung kann bei Positionierung eines Förderfahrzeugs innerhalb der Trocknungseinrichtung, die Düsenvorrichtung und/oder Lochplatte zumindest abschnittsweise in einen Freiraum des Aufbaus zur Aufnahme eines Drucktisches und/oder zwischen den Grundabschnitt und den Tragabschnitt des Aufbaus und/oder zumindest abschnittsweise unterhalb eines von dem Förderfahrzeug aufgenommenen Werkstückträgers ragen. Auf diese Weise kann mit besonders geringem Aufwand ein Kühlluftstrom auf eine Unterseite des Werkstückträgers geleitet werden. Gleichzeitig kann hierdurch die Läufervorrichtung zumindest abschnittsweise durch die Düsenvorrichtung und/oder Lochplatte abgedeckt sein.

Die Gefahr von Kontaminationen der Siebdruckwerkstücke durch Partikel, die im Bereich oder auf Höhe der Läufervorrichtung freigesetzt werden oder dort freischwebend vorliegend, kann durch eine solche Ausgestaltung verringert werden.

Noch weiter bevorzugt kann die Trocknungseinrichtung an zumindest einem Längsende eine Öffnung aufweisen, die zumindest abschnittsweise komplementär, insbesondere geometrisch komplementär, zur Querschnittsform und/oder komplementär, insbesondere geometrisch komplementär, zu einer Querschnittsabschnittsform des Förderfahrzeugs ausgebildet ist. Die jeweilige Öffnung an dem Längsende kann somit verhältnismäßig klein sein. Ein Luftaustritt aus der Öffnung kann somit auf ein geringes Maß begrenzt und damit ein energieeffizienter Betrieb der Trocknungseinrichtung sichergestellt werden.

Gemäß einer noch weiter bevorzugten Ausgestaltung kann die Vorrichtung eine Schleuse-Einrichtung für die Einschleusung und/oder Ausschleusung von Förderfahrzeugen aufweisen. Der Austausch, die Ergänzung und/oder die Entfernung von Förderfahrzeugen, beispielsweise zwecks Wartungs- und/oder Reparaturarbeiten und/oder zwecks Neukonfiguration der Transporteinrichtung, kann hierdurch mit geringem Handhabungsaufwand und hoher Betriebssicherheit vorgenommen werden.

Gemäß einer noch weiter bevorzugten Ausgestaltung kann die Vorrichtung wenigstens ein Erfassungsmodul für die Erfassung eingeschleuster und/oder auszuschleusender Förderfahrzeuge der Transporteinrichtung aufweisen. Die Überwachung des Bestands an Förderfahrzeugen innerhalb Vorrichtung kann hierdurch mit hoher Zuverlässigkeit sichergestellt und die Ergänzung und/oder das Entfernen von Förderfahrzeugen in Abhängigkeit der Erfassung von eingeschleusten beziehungsweise ausgeschleusten Förderfahrzeugen erfolgen.

Gemäß einer noch weiter bevorzugten Ausgestaltung kann die Vorrichtung wenigstens eine Positionier- und/oder Entnahmevorrichtung für die Positionierung von Werkstückträgern auf einem Förderfahrzeug und/oder für die Entnahme eines Werkstückträgers von einem Förderfahrzeug aufweisen. Eine manuelle Handhabung von Werkstückträgern kann damit vollständig vermieden oder zumindest auf ein geringes Maß reduziert werden. Die Prozesssicherheit wird damit weiter verbessert.

Ein weiterer unabhängiger Aspekt der vorliegenden Erfindung betrifft eine Vorrichtung zur Herstellung von dreidimensionalen Siebdruckwerkstücken, insbesondere eine 3D-Siebdruckanlage, mit einer Druckeinrichtung für die schichtweise Erzeugung zumindest eines Siebdruckwerkstücks in mehreren Druckvorgängen und mit einer Trocknungseinrichtung, die zur Trocknung zumindest eines Siebdruckwerkstücks und zur gleichzeitigen Kühlung eines das jeweils zu trocknende Siebdruckwerkstück tragenden Werkstückträgers ausgebildet ist.

Ein noch weiterer unabhängiger Aspekt der vorliegenden Erfindung betrifft eine Trocknungseinrichtung für dreidimensionale Siebdruckwerkstücke, insbesondere für eine Vorrichtung nach einem der vorstehenden Aspekte, mit einem Trocknungsabschnitt zur Trocknung zumindest eines Siebdruckwerkstücks und mit einem Kühlabschnitt zur gleichzeitigen Kühlung eines das jeweils zu trocknende Siebdruckwerkstück tragenden Werkstückträgers.

Ein noch weiterer unabhängiger Aspekt der vorliegenden Erfindung betrifft eine Vorrichtung zur Herstellung von dreidimensionalen Siebdruckwerkstücken, insbesondere eine 3D-Siebdruckanlage, mit einer Druckeinrichtung für die schichtweise Erzeugung zumindest eines Siebdruckwerkstücks in mehreren Druckvorgängen und mit einer Transporteinrichtung für den automatisierten Transport zumindest eines Siebdruckwerkstücks und/oder eines Werkstückträgers hin zur und/oder weg von der Druckeinrichtung, wobei die Transporteinrichtung wenigstens eine Transportschiene sowie ein auf der Transportschiene beweglich angeordnetes Förderfahrzeug für zumindest ein Siebdruckwerkstück und/oder zumindest einen Werkstückträger aufweist.

Ein noch weiterer unabhängiger Aspekt der vorliegenden Erfindung betrifft eine Vorrichtung zur Herstellung von dreidimensionalen Siebdruckwerkstücken, insbesondere nach einem der vorstehenden Aspekte und/oder eine 3D-Siebdruckanlage, mit einer Druckeinrichtung für die schichtweise Erzeugung zumindest eines Siebdruckwerkstücks in mehreren Druckvorgängen und mit einer Transporteinrichtung für den automatisierten Transport zumindest eines Siebdruckwerkstücks und/oder eines Werkstückträgers hin zur und/oder weg von der Druckeinrichtung, wobei die Transporteinrichtung eine Werkstückträgerlagerung zur Fixierung und/oder zum Festklemmen eines Werkstückträgers aufweist.

Ein noch weiterer unabhängiger Aspekt der vorliegenden Erfindung betrifft eine Transporteinrichtung, insbesondere für den Transport in einer Vorrichtung zur Herstellung von dreidimensionalen Siebdruckwerkstücken, mit einem Förderfahrzeug für den automatisierten Transport zumindest eines Siebdruckwerkstücks und/oder eines Werkstückträgers, wobei das Förderfahrzeug einen Tragabschnitt zur zumindest formschlüssigen und/oder kraftschlüssigen und/oder stoffschlüssigen Aufnahme eines Werkstückträgers und/oder eine Werkstückträgerlagerung zur Fixierung und/oder zum Festklemmen eines Werkstückträgers aufweist.

Ein noch weiterer unabhängiger Aspekt der vorliegenden Erfindung betrifft ein Verfahren zur Herstellung von dreidimensionalen Siebdruckwerkstücken, insbesondere mit einer Vorrichtung nach einem der vorstehenden Aspekte, bei dem mit einer Druckeinrichtung zumindest ein Siebdruckwerkstück in mehreren Druckvorgängen schichtweise erzeugt wird und bei dem mit einer Transporteinrichtung zumindest ein Siebdruckwerkstück und/oder ein Werkstückträger mit einem Siebdruckwerkstück automatisiert hin zur und/oder weg von der Druckeinrichtung transportiert wird, wobei der Transport durch die Transporteinrichtung mittels eines Förderfahrzeugs auf einer Transportschiene vorgenommen wird.

Durch den Transport mittels eines Förderfahrzeugs auf einer Transportschiene können Relativbewegungen kontaktierend angeordneter Flächen vermieden oder auf ein geringes Maß reduziert werden. Ein Partikelabrieb durch das Fahren des Förderfahrzeugs auf der Transportschiene lässt sich mit einem solchen Verfahren mithin vermeiden oder nennenswert verringern. Somit lassen sich für die einzelnen Produktionsschritte verbesserte Reinheitsbedingungen schaffen. Eine unerwünschte Verunreinigung der jeweils herzustellenden Siebdruckwerkstücke aufgrund von reibungsbedingt entstehenden Partikeln kann mit einem erfindungsgemäßen Verfahren verhindert werden. Folglich können mit einem erfindungsgemäßen Verfahren Siebdruckwerkstücke mit hohen Reinheits- beziehungsweise Hygieneanforderungen hergestellt werden.

Ein noch weiterer unabhängiger Aspekt der vorliegenden Erfindung betrifft ein Verfahren zur Herstellung von dreidimensionalen Siebdruckwerkstücken, insbesondere mit einer Vorrichtung nach einem der vorstehenden Aspekte, bei dem mit einer Druckeinrichtung zumindest ein Siebdruckwerkstück in mehreren Druckvorgängen schichtweise erzeugt wird, bei dem das Siebdruckwerkstück mit einer Trocknungseinrichtung getrocknet und gleichzeitig ein das Siebdruckwerkstück tragender Werkstückträger gekühlt wird.

Ein noch weiterer unabhängiger Aspekt der vorliegenden Erfindung betrifft ein Verfahren zur Herstellung von dreidimensionalen Siebdruckwerkstücken, insbesondere mit einer Vorrichtung nach einem der vorstehenden Aspekte, bei dem mit einer Druckeinrichtung zumindest ein Siebdruckwerkstück in mehreren Druckvorgängen schichtweise erzeugt wird und bei dem mit einer Transporteinrichtung zumindest ein Siebdruckwerkstück auf einem Werkstückträger automatisiert hin zur und/oder weg von der Druckeinrichtung transportiert wird, wobei der Werkstückträger für den Transport durch die Transporteinrichtung auf und/oder in einem Tragabschnitt zumindest formschlüssig aufgenommen wird.

Ein noch weiterer unabhängiger Aspekt der vorliegenden Erfindung betrifft ein Verfahren zur Herstellung von dreidimensionalen Siebdruckwerkstücken, insbesondere mit einer Vorrichtung nach einem der vorstehenden Aspekte, bei dem mit einer Druckeinrichtung zumindest ein Siebdruckwerkstück in mehreren Druckvorgängen schichtweise erzeugt wird und bei dem mit einer Transporteinrichtung zumindest ein Siebdruckwerkstück auf einem Werkstückträger automatisiert hin zur und/oder weg von der Druckeinrichtung transportiert wird, wobei der Werkstückträger für den Transport durch die Transporteinrichtung in einer Werkstückträgerlagerung fixiert und/oder festgeklemmt wird.

Die vorstehend in Bezug auf die Vorrichtung beschriebenen Einzelheiten und unabhängigen Aspekte, einschließlich die unabhängigen Aspekte betreffend eine Trocknungseinrichtung sowie betreffend eine Transporteinrichtung, gelten in gleicher Weise für die vorstehend beschriebenen erfindungsgemäßen Verfahren gemäß den weiteren unabhängigen Aspekten. Ebenso geltend die vorstehend in Bezug auf die Vorrichtung beschriebenen Einzelheiten und unabhängigen Aspekte in gleicher Weise auch für die vorstehend beschriebenen unabhängigen Aspekte betreffend eine Trocknungseinrichtung sowie auch betreffend eine Transporteinrichtung.

Nachfolgend wird die Erfindung beispielhaft anhand vorteilhafter Ausführungsformen unter Bezugnahme auf die beigefügten Figuren beschrieben.

Es zeigen jeweils schematisch:
- Fig. 1: eine perspektivische Ansicht einer erfindungsgemäßen Vorrichtung gemäß einer Ausführungsform,
- Fig. 2: eine Draufsicht auf die Vorrichtung von Fig. 1,
- Fig. 3: eine perspektivische Ansicht der Vorrichtung von Fig. 1 mit offener Darstellung der Transporteinrichtung ohne Einhausung,
- Fig. 4: eine Draufsicht auf die Vorrichtung von Fig. 3,
- Fig. 5: eine perspektivische Ansicht einer erfindungsgemäßen Vorrichtung mit offener Darstellung der Druck- und Trocknungseinrichtungen ohne Einhausung,
- Fig. 6: eine Draufsicht auf die Vorrichtung von Fig. 5,
- Fig. 7: eine perspektivische Ansicht einer Transportvorrichtung der Vorrichtung gemäß Fig. 1 bis 6,
- Fig. 8: eine perspektivische Ansicht einer Transportvorrichtung der Vorrichtung gemäß Fig. 1 bis 6,
- Fig. 9: eine obere Perspektivansicht einer Transporteinrichtung mit einem Förderfahrzeug und einer abschnittsweise dargestellten Transportschiene,
- Fig. 10: eine untere Perspektivansicht einer Transporteinrichtung mit einem Förderfahrzeug und einer abschnittsweise dargestellten Transportschiene,
- Fig. 11: eine Seitenansicht der Transporteinrichtung gemäß Fig. 9 und 10 entlang einer Längsrichtung der Transportschiene,
- Fig. 12: eine Draufsicht auf die Transporteinrichtung gemäß Fig. 9 und 10,
- Fig. 13: eine perspektivische Ansicht eines Förderfahrzeugs gemäß einer Ausführungsform mit darin aufgenommenem Werkstückträger,
- Fig. 14: eine Draufsicht auf ein Förderfahrzeug gemäß Fig. 13,
- Fig. 15: eine Seitenansicht eines Förderfahrzeugs gemäß Fig. 13 und 14 in einer Richtung quer zur Transportrichtung,
- Fig. 16: eine Seitenansicht eines Förderfahrzeugs gemäß Fig. 13 und 14 in Transportrichtung,
- Fig. 17: eine Schnittdarstellung des Förderfahrzeugs entlang der Schnittlinie A-A aus Fig. 14,
- Fig. 18: eine Schnittdarstellung des Förderfahrzeugs entlang der Schnittlinie B-B aus Fig. 14,
- Fig. 19: eine obere Perspektivansicht eines Förderfahrzeugs gemäß einer Ausführungsform ohne darin aufgenommenem Werkstückträger,
- Fig. 20: eine untere Perspektivansicht eines Förderfahrzeugs gemäß einer Ausführungsform ohne darin aufgenommenem Werkstückträger,
- Fig. 21: eine Draufsicht auf das Förderfahrzeug gemäß Fig. 19 und 20 ohne darin aufgenommenem Werkstückträger,
- Fig. 22: eine perspektivische Detailansicht einer Verriegelung einer Werkstückträgerlagerung gemäß einer Ausführungsform,
- Fig. 23: eine perspektivische Detailansicht eines Festlagers einer Werkstückträgerlagerung von einer Unterseite gemäß einer Ausführungsform,
- Fig. 24: eine Schnittdarstellung einer Verriegelung einer Werkstückträgerlagerung gemäß Fig. 22,
- Fig. 25: eine perspektivische Detailansicht eines Festlagers einer Werkstückträgerlagerung von einer Oberseite gemäß Fig. 23,
- Fig. 26: eine obere Perspektivansicht einer Läufervorrichtung gemäß einer Ausführungsform,
- Fig. 27: eine untere Perspektivansicht einer Läufervorrichtung gemäß einer Ausführungsform,
- Fig. 28: eine Seitenansicht eines anhebbaren Drucktischs sowie eines Förderfahrzeugs gemäß einer Ausführungsform,
- Fig. 29: eine Detailansicht des anhebbaren Drucktischs sowie des Förderfahrzeugs gemäß Fig. 28,
- Fig. 30: eine perspektivische Schnittdarstellung einer Mehrpunktlagerung zwischen dem Aufbau und der Läufervorrichtung eines Förderfahrzeugs gemäß einer Ausführungsform,
- Fig. 31: eine perspektivische Ansicht einer Trocknungseinrichtung sowie eine abschnittsweise Darstellung einer Transporteinrichtung gemäß einer Ausführungsform,
- Fig. 32: eine Seitenansicht der Trocknungseinrichtung gemäß Fig. 31 in einer Längsrichtung,
- Fig. 33: eine Schnittdarstellung der Trocknungseinrichtung entlang der Schnittlinien C-C aus Fig. 33,
- Fig. 34: eine schematische Längsschnittdarstellung der Trocknungseinrichtung gemäß einer Ausführungsform mit dargestellten Luftströmungen,
- Fig. 35: eine schematische Querschnittdarstellung der Trocknungseinrichtung gemäß einer Ausführungsform mit dargestellten Luftströmungen,
- Fig. 36: eine perspektivische Querschnittdarstellung der Trocknungseinrichtung gemäß einer Ausführungsform,
- Fig. 37: eine perspektivische Längsschnittdarstellung der Trocknungseinrichtung gemäß einer Ausführungsform,
- Fig. 38: eine Detailansicht der Trocknungseinrichtung entlang eines Längsschnitts gemäß einer Ausführungsform,
- Fig. 39: eine Detailansicht der Trocknungseinrichtung in perspektivischer Längsschnittdarstellung gemäß einer Ausführungsform,
- Fig. 40: eine perspektivische Ansicht eines Förderfahrzeugs sowie einer Positionier- und/oder Entnahmevorrichtung für einen Werkstückträger gemäß einer Ausführungsform,
- Fig. 41: eine weitere perspektivische Ansicht eines Förderfahrzeugs sowie einer Positionier- und/oder Entnahmevorrichtung für einen Werkstückträger gemäß einer Ausführungsform,
- Fig. 42: eine Draufsicht auf ein Förderfahrzeug sowie auf eine Positionier- und/oder Entnahmevorrichtung für einen Werkstückträger gemäß Fig. 41 und 42,
- Fig. 43: eine Seitenansicht eines Förderfahrzeugs sowie einer Positionier- und/oder Entnahmevorrichtung für einen Werkstückträger entlang einer Transportrichtung des Förderfahrzeugs.

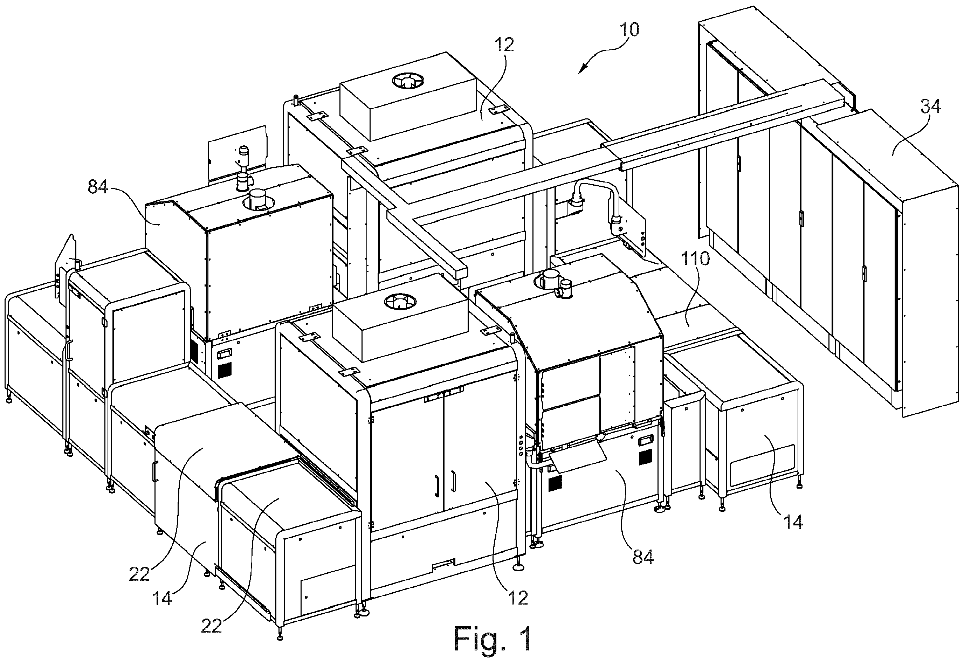

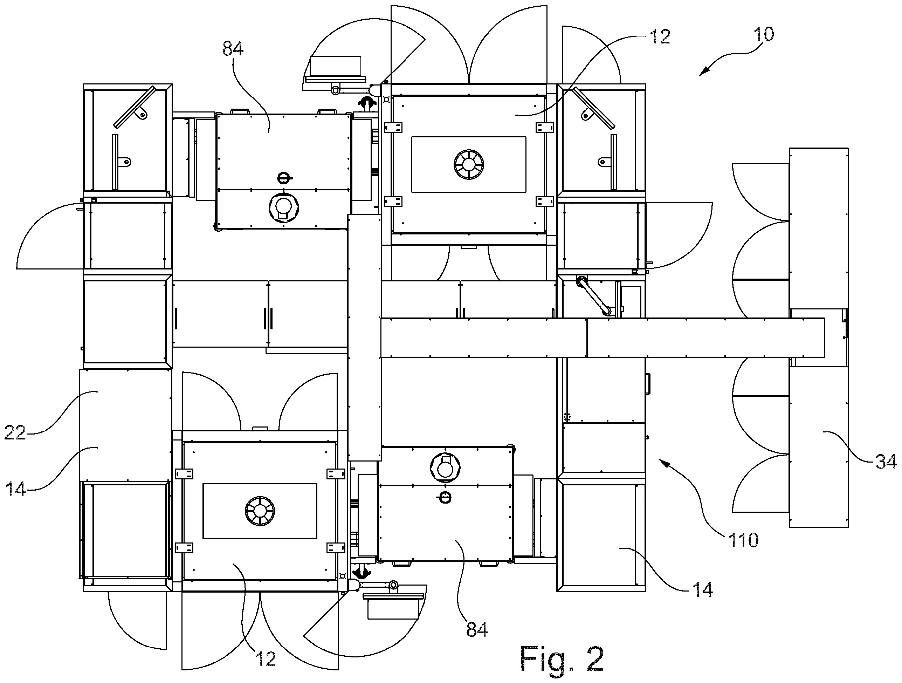

Fig. 1 zeigt eine perspektivische Ansicht einer Vorrichtung 10 zur Herstellung von dreidimensionalen Siebdruckwerkstücken gemäß einer Ausführungsform der vorliegenden Erfindung. Fig. 2 zeigt eine Draufsicht auf die Vorrichtung 10 von Fig. 1. Bei der Vorrichtung 10 kann es sich insbesondere um eine 3D-Siebdruckanlage handeln, besonders bevorzugt um eine 3D-Siebdruckanlage für die Herstellung von Arzneimitteln.

Die Vorrichtung 10 weist wenigstens eine Druckeinrichtung 12 für die schichtweise Erzeugung zumindest eines hier nicht näher dargestellten Siebdruckwerkstücks in zumindest einem oder in mehreren Druckvorgängen auf. In der Ausführungsform gemäß Fig. 1 und 2 weist die Vorrichtung 10 zwei Druckeinrichtungen 12 auf. Ferner weist die Vorrichtung 10 wenigstens eine Transporteinrichtung 14 für den automatisierten Transport zumindest eines Siebdruckwerkstücks und/oder eines Werkstückträgers hin zur und/oder weg von der Druckeinrichtung 12 auf.

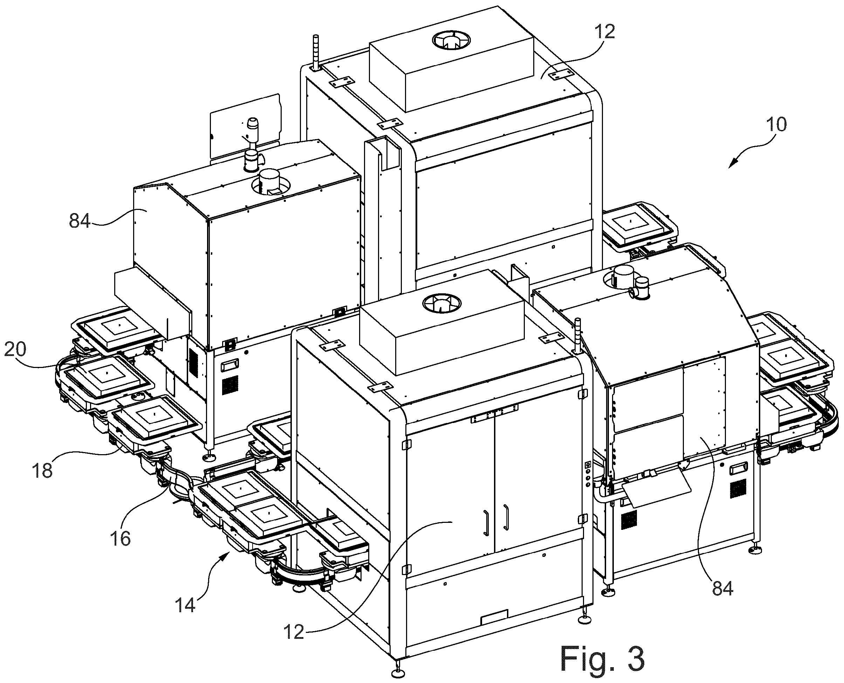

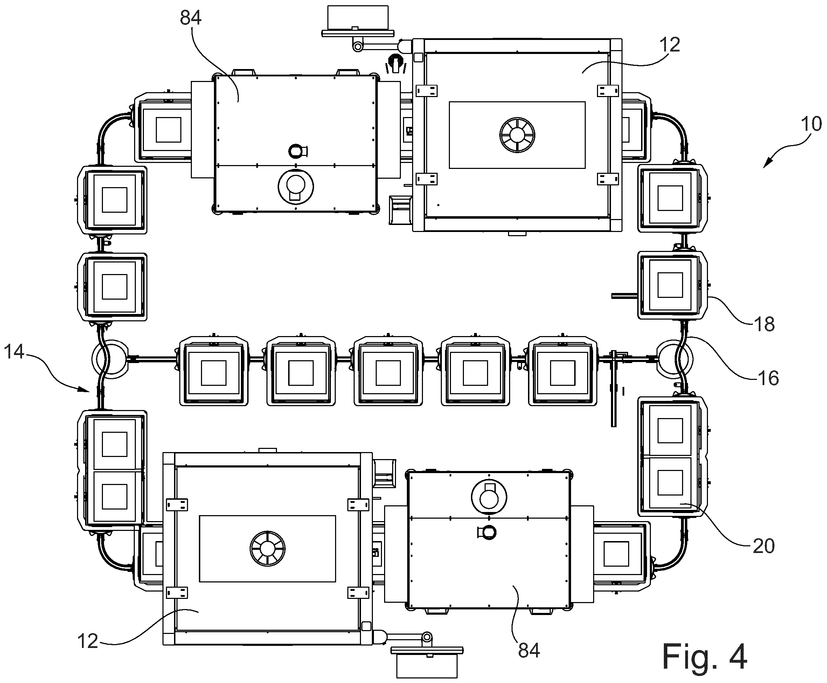

In Fig. 3 ist eine perspektivische Ansicht der Vorrichtung 10 gemäß Fig. 1 gezeigt, wobei zur besseren Übersichtlichkeit und Veranschaulichung die Transporteinrichtung 14 in offenem Zustand, insbesondere ohne Einhausungen und ohne Gestelle, dargestellt ist. Fig. 4 zeigt eine Draufsicht auf die Vorrichtung 10 gemäß Fig. 3.

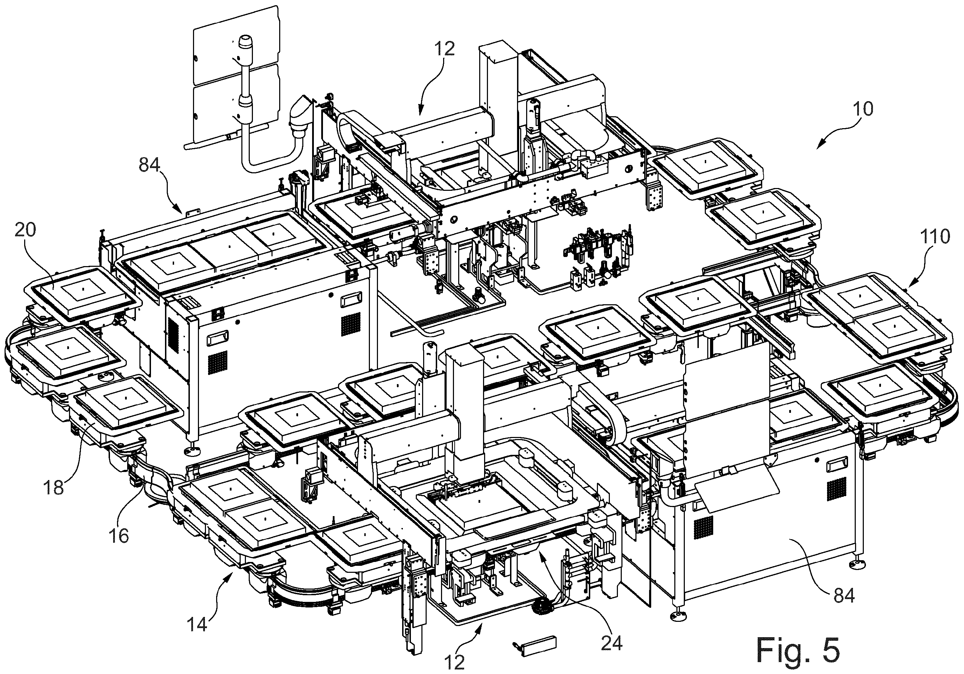

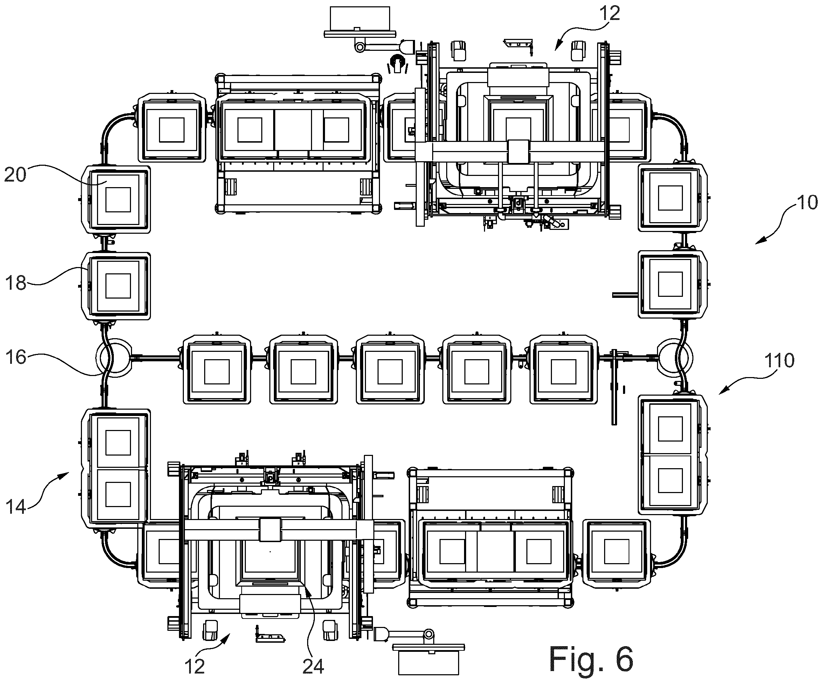

In Fig. 5 ist eine perspektivische Ansicht der Vorrichtung 10 gemäß Fig. 1 bis 4 gezeigt, wobei zur besseren Übersichtlichkeit und Veranschaulichung die Druckeinrichtungen 12 in offenem Zustand, insbesondere ohne Einhausungen, dargestellt sind. Fig. 6 zeigt eine Draufsicht auf die Vorrichtung 10 gemäß Fig. 5.

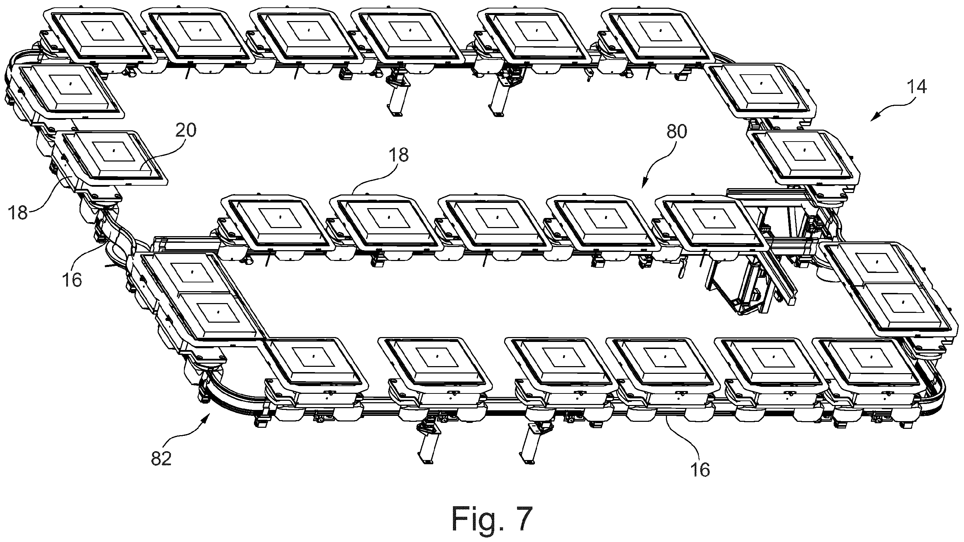

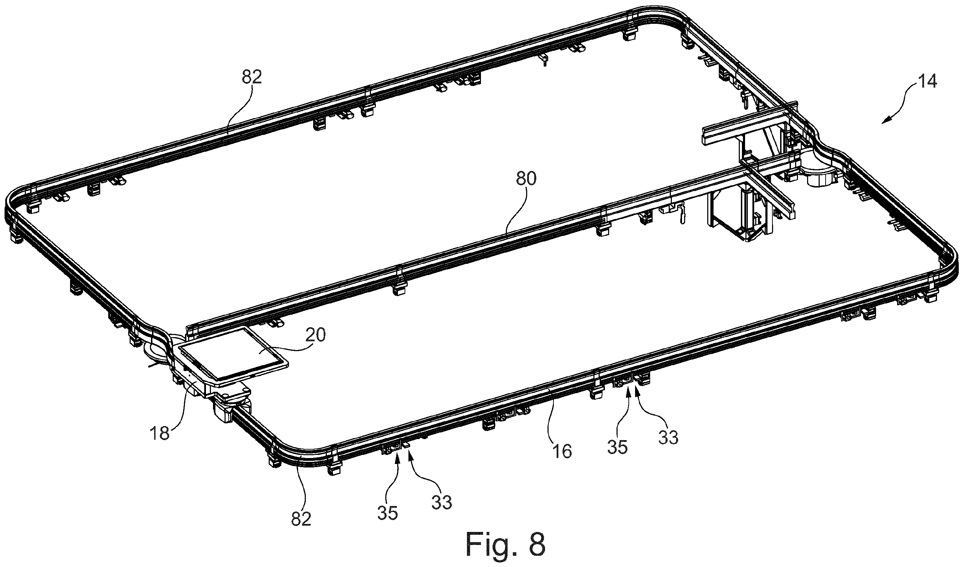

In den Fig. 7 und 8 ist jeweils eine perspektivische Ansicht der Transporteinrichtung 14 der Vorrichtung 10 gemäß den Fig. 1 bis 6 dargestellt.

Die Transporteinrichtung 14 kann wenigstens eine Transportschiene 16 sowie ein auf der Transportschiene 16 beweglich angeordnetes Förderfahrzeug 18 für zumindest ein hier nicht näher dargestelltes Siebdruckwerkstück und/oder zumindest einen Werkstückträger 20 aufweisen.

Die Transporteinrichtung 14 kann mit einer Einhausung 22 beziehungsweise mit einer entlang der Transporteinrichtung 14 verlaufenden Einhausung 22 ausgestattet sein, wie in den Fig. 1 und 2 näher dargestellt ist. Die Einhausung 22 kann eine oberseitige Abdeckung und/oder eine seitliche Abdeckung beziehungsweise Verkleidung aufweisen. Durch eine solche Einhausung 22 kann die Gefahr von Partikelkontaminationen auf Siebdruckwerkstücken, die mittels der Transporteinrichtung 14 bewegt werden, verringert werden.

Die Transporteinrichtung 14 kann weiter bevorzugt für den automatisierten Transport zumindest eines Siebdruckwerkstücks und/oder eines Werkstückträgers 20 hin zu und/oder weg von einem Drucktisch 24 der Druckeinrichtung 12 eingerichtet sein. Die Transporteinrichtung 14 kann ferner gesondert von der Druckeinrichtung 12 ausgebildet sein und/oder durch die Druckeinrichtung 12 hindurch verlaufen.

Eine gesonderte Ausbildung der Transporteinrichtung 14 kann insbesondere den Fig. 7 und 8 entnommen werden. Mithin kann die Transporteinrichtung 14 eine von der Druckeinrichtung 12 unabhängig funktionierende Einrichtung bilden, die jedoch trotz unabhängiger Ausgestaltung mit der Druckeinrichtung 12 zusammenwirkt beziehungsweise zur Zusammenwirkung mit der Druckeinrichtung 12 angeordnet ist, insbesondere um Siebdruckwerkstücke und/oder Werkstückträger 20 hin zu und/oder weg von einem Drucktisch 24 der Druckeinrichtung 12 zu befördern.

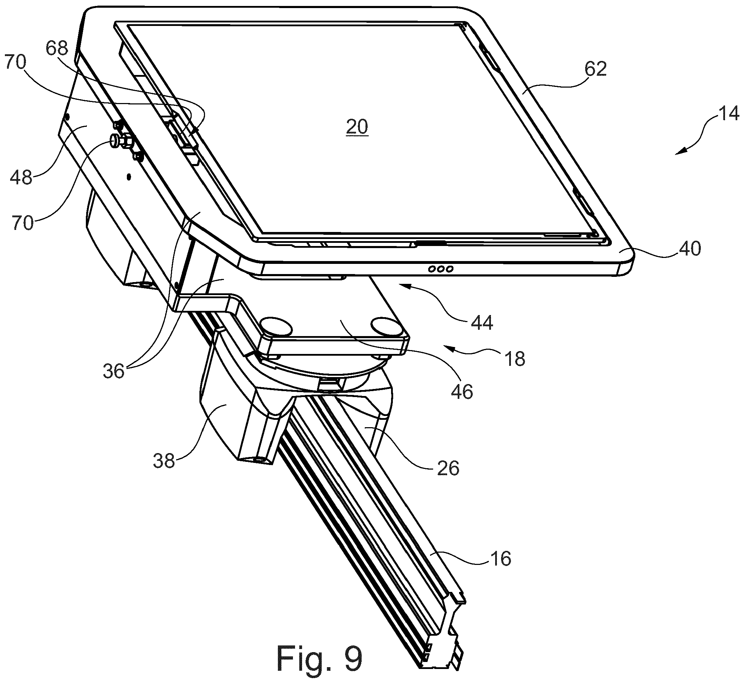

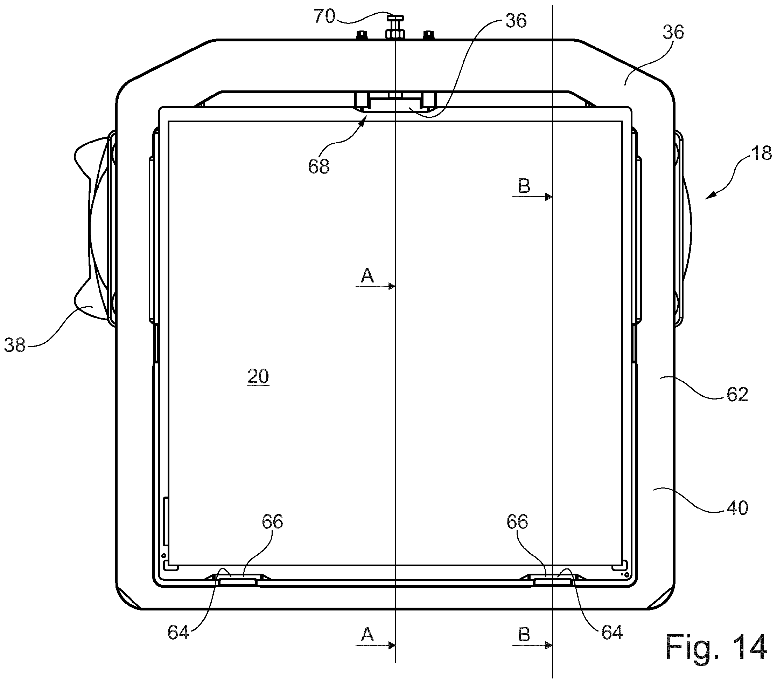

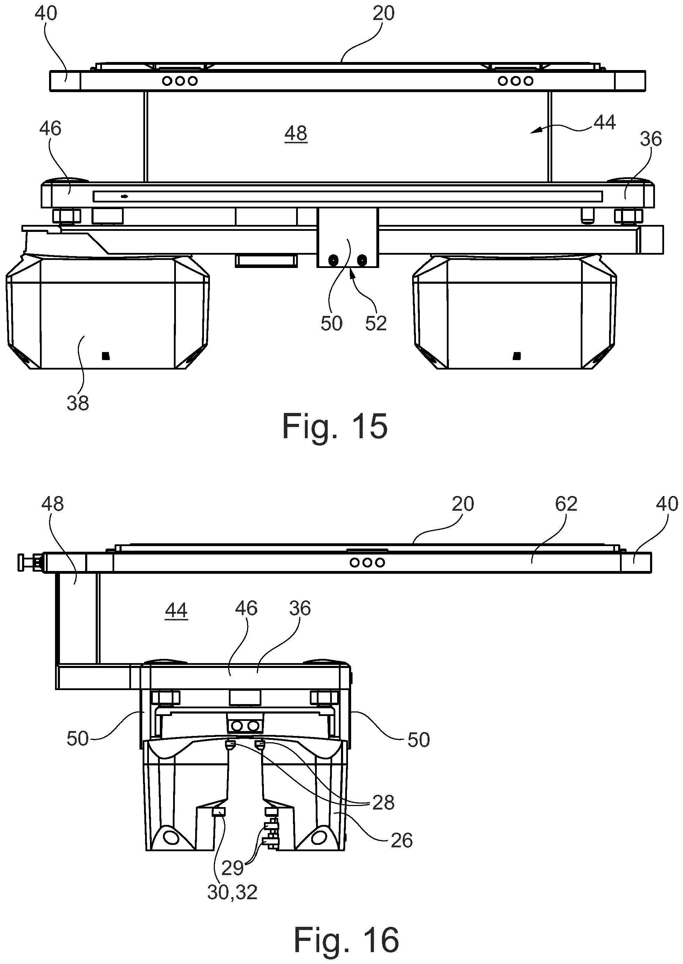

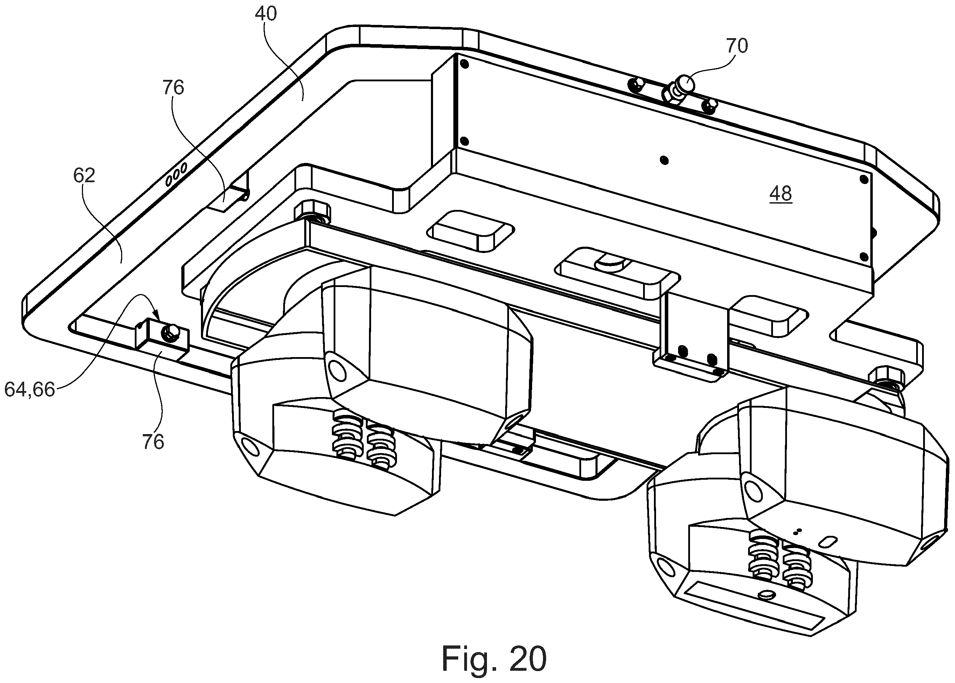

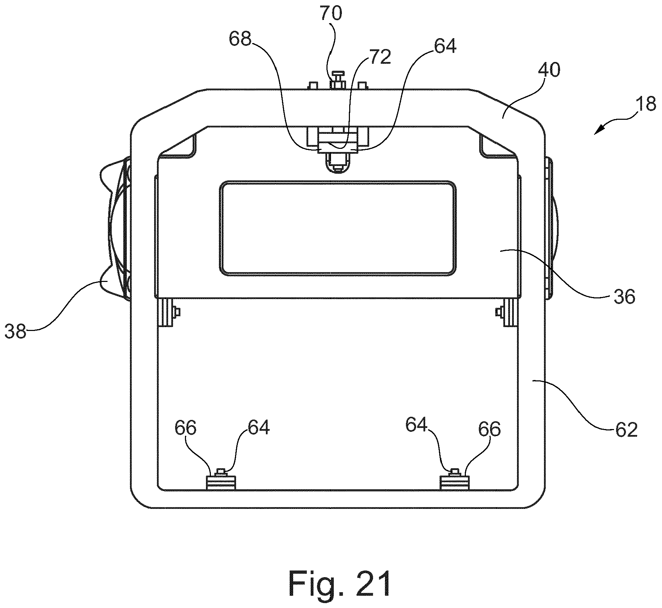

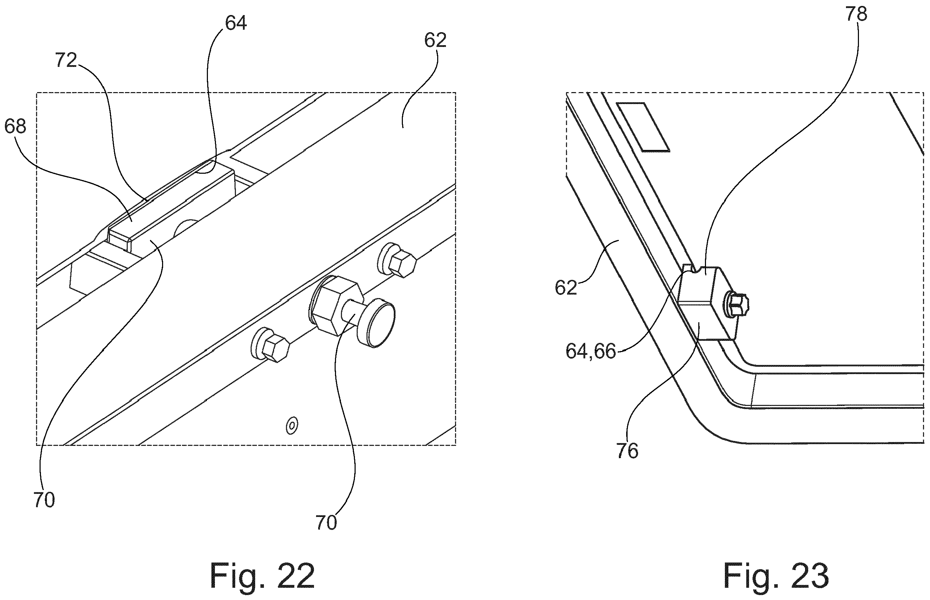

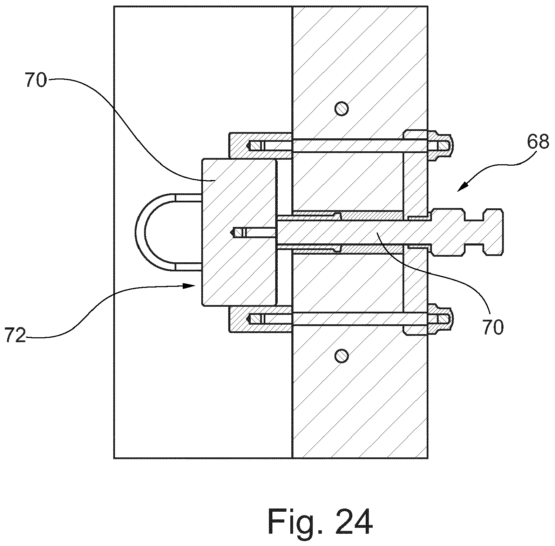

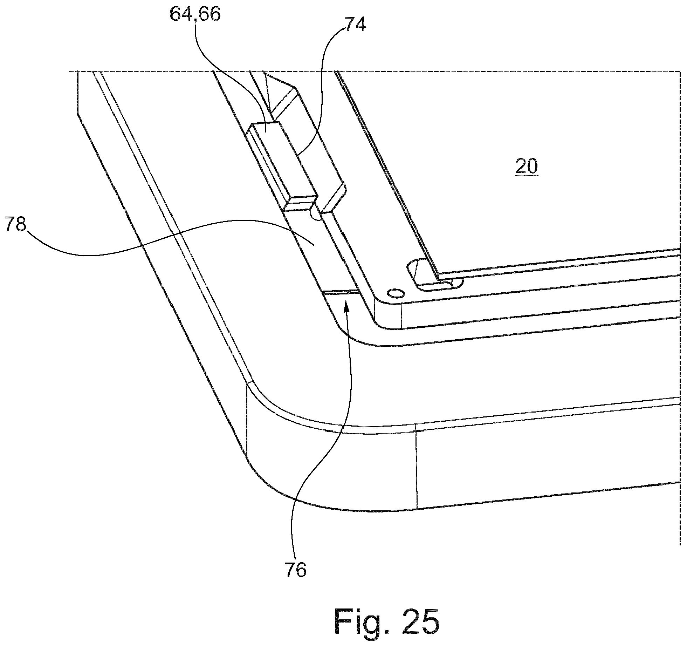

In den Fig. 9 bis 25 sind nähere Ansichten und Einzelheiten der Transporteinrichtung 14 beziehungsweise eines Förderfahrzeugs 18 der Transporteinrichtung 14 gemäß einem Ausführungsbeispiel einer Erfindung dargestellt.

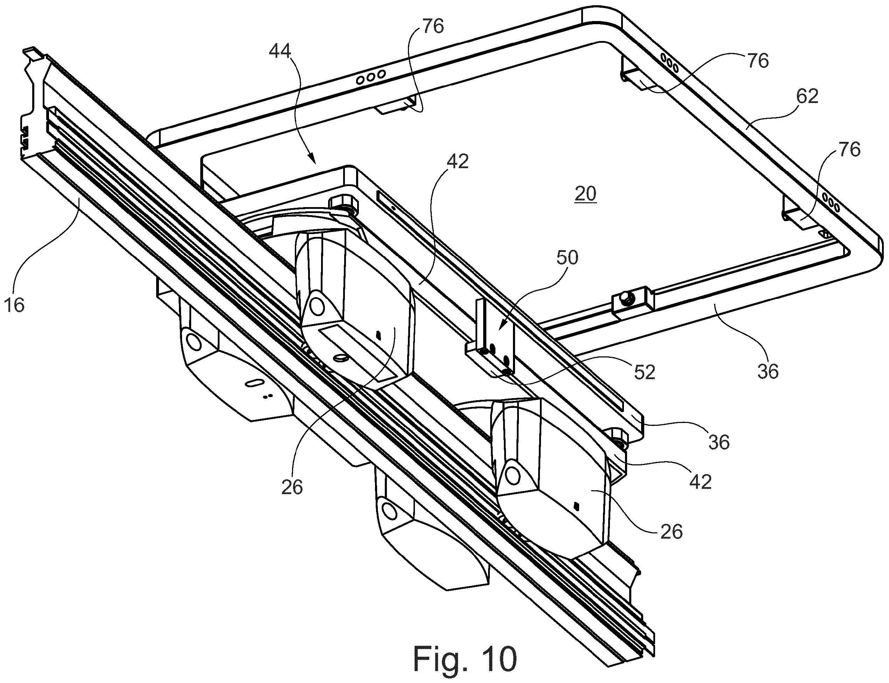

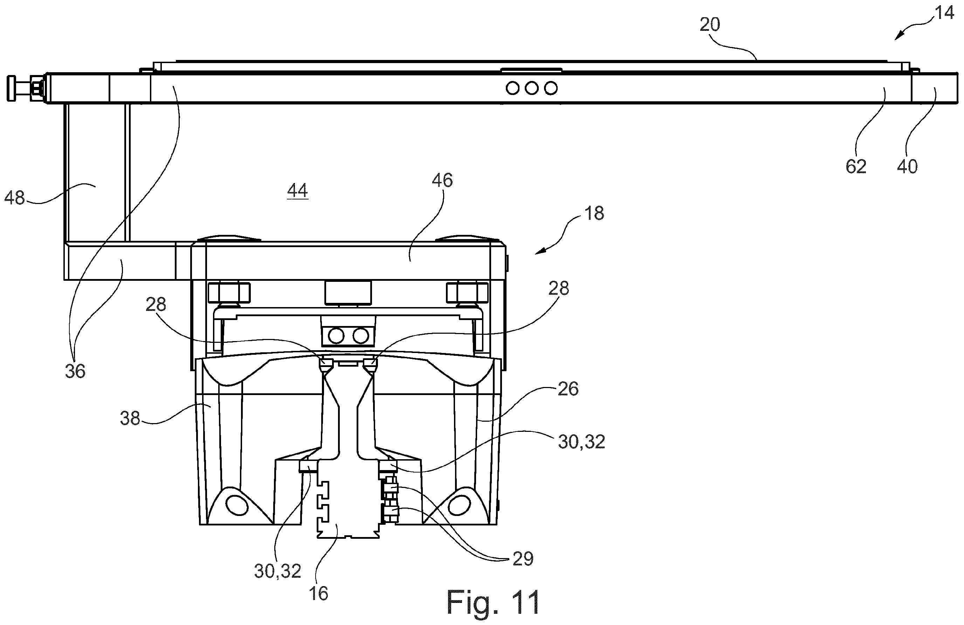

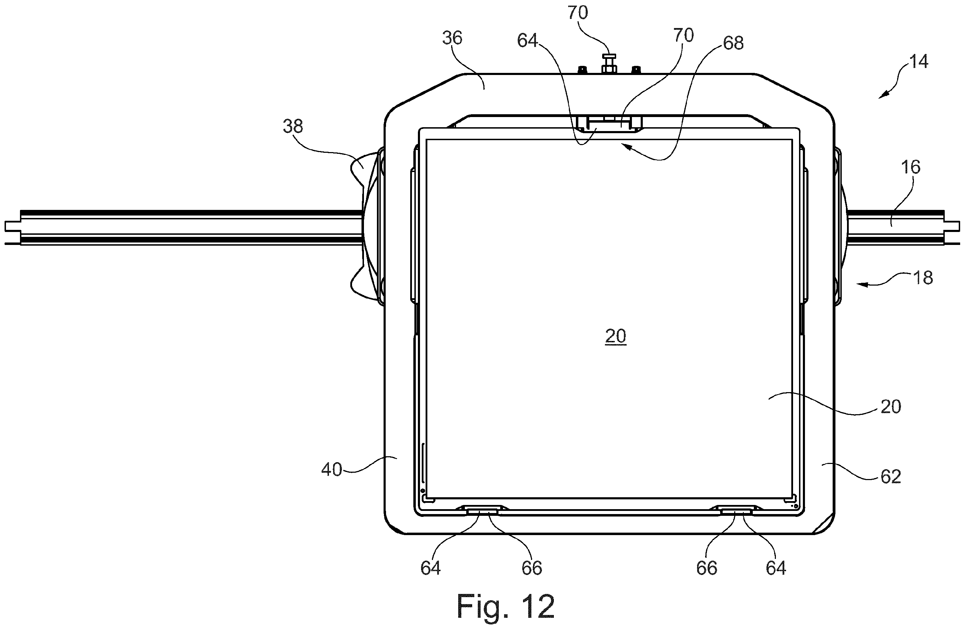

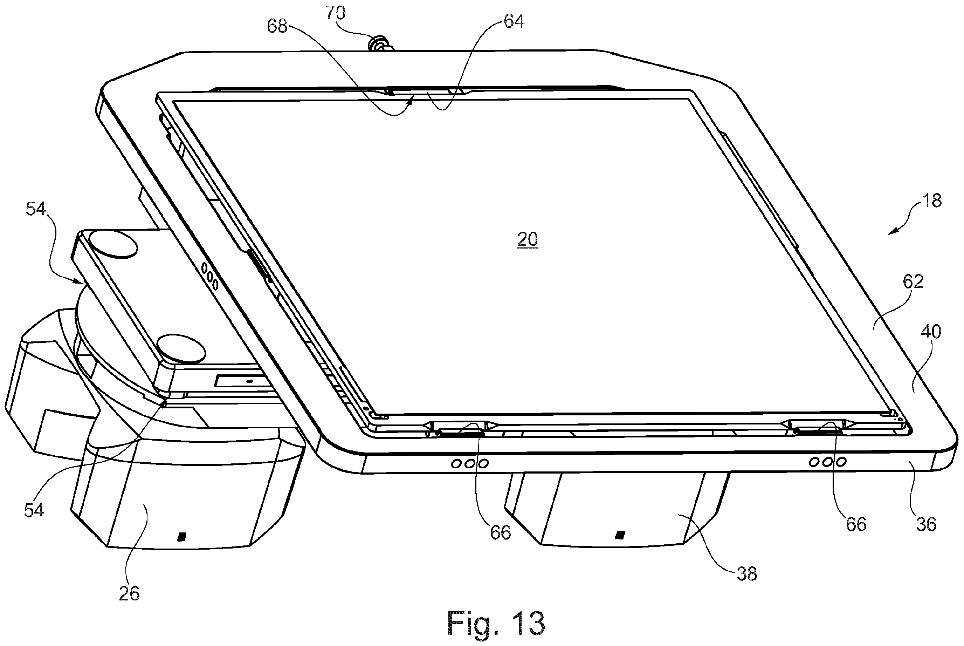

Fig. 9 zeigt eine obere Perspektivansicht eines Förderfahrzeugs 18 auf einem Abschnitt einer Transportschiene 16 und Fig. 10 zeigt eine untere Perspektivansicht eines Förderfahrzeugs 18 auf einem Abschnitt einer Transportschiene 16. Fig. 11 zeigt eine Seitenansicht des Förderfahrzeugs 18 gemäß Fig. 9 und 10 entlang einer Längserstreckung der Transportschiene 16 und Fig. 12 zeigt eine Draufsicht auf das Förderfahrzeugs 18 gemäß Fig. 9 bis 11. Die Fig. 13 bis 18 zeigen weitere Ansichten des Förderfahrzeugs 18 ohne Darstellung der Transportschiene 16.

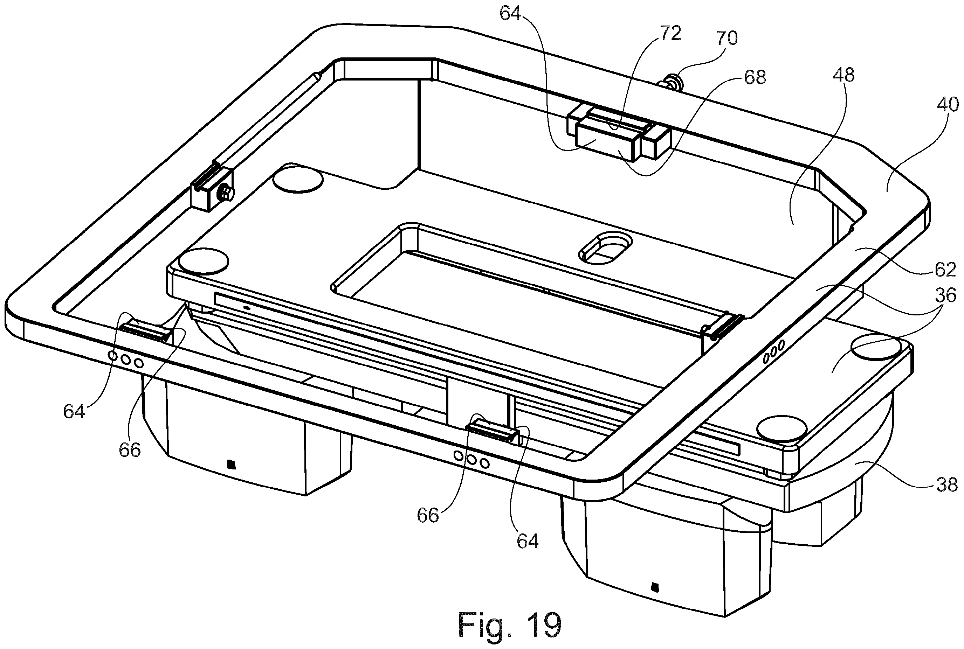

In den Fig. 9 bis 18 ist das jeweilige Förderfahrzeug 18 mit darin aufgenommenen Werkstückträger 20 gezeigt. Weitere Ansichten Förderfahrzeug 18 ohne darin aufgenommenem Werkstückträger 20 sind in den Fig. 19 bis 21 dargestellt.

Ein Förderfahrzeug 18 gemäß der in den Fig. 9 bis 21 dargestellten Ausführungsformen kann zumindest eine Antriebseinrichtung 26 aufweisen, die mitfahrend an dem Förderfahrzeug 18 angeordnet ist. Die Antriebseinrichtung 26 kann insbesondere eine auf der Transportschiene 16 abrollende Antriebsrolle 28 und/oder einen hier nicht näher dargestellten Antriebsmotor für eine Antriebsrolle 28 aufweisen. Weiter kann die Antriebseinrichtung 26 wenigstens eine stromführende Kontaktrolle 29, insbesondere eine Mehrzahl stromführender Kontaktrollen 29, aufweisen, über die ein elektrischer Strom von der Transportschiene 16 an die Antriebseinrichtung 26 geleitet werden kann, insbesondere zwecks Stromversorgung eines Antriebsmotors.

Weiterhin kann das Förderfahrzeug 18 zumindest eine Stützeinrichtung 30 zur Abstützung an der Transportschiene aufweisen. Bei der Stützeinrichtung 30 kann es sich insbesondere um eine an der Transportschiene 16 zur Abstützung des Förderfahrzeugs 18 abrollende Stützrolle 32 handeln. Insbesondere kann ein Förderfahrzeug 18 beidseitig der jeweiligen Transportschiene 16 mit Stützrollen 32 ausgestattet sein. Ebenso ist es möglich anstelle von Stützrollen 32 einseitig oder beidseitig der Transportschiene Gleitelemente zur Bereitstellung einer Stützfunktion anzuordnen.

Das Förderfahrzeug 18 kann über Rollenkontaktpunkte an der Transportschiene 16 abgestützt sein, insbesondere ausschließlich über Rollenkontaktpunkte einer Antriebsrolle 28 und/oder einer Stützrolle 32 oder über Rollenkontaktpunkte einer Mehrzahl von Antriebsrollen 28 und/oder Stützrollen 32.

Die Transportschiene 16 kann ferner als Monoschiene ausgebildet sein, wie den Fig. 8 bis 12 entnommen werden kann. Insbesondere kann die Transportschiene 16 eine Mehrzahl miteinander verbundener Monoschienenabschnitte aufweisen, bevorzugt in Längsrichtung miteinander verbundener Monoschienenabschnitte. Derartige Monoschienenabschnitte können, wie in den Fig. 7 und 8 gezeigt, zu einem Transport- oder Schienenlayout zusammengesetzt sein.

Die Transportschiene 16 kann modular zusammengesetzt sein beziehungsweise mehrere Schienenmodule aufweisen.

Ein Förderfahrzeug 18 gemäß der vorliegenden Erfindung kann in bevorzugter Weise entlang eines Längsabschnitts der Transportschiene 16 mehrseitig umgreifend an dieser angeordnet sein, insbesondere dreiseitig umgreifend, wie beispielsweise der Darstellung in Fig. 11 entnommen werden kann.

Weiterhin kann das Förderfahrzeug 18 wenigstens einen hier nicht näher dargestellten Positionssensor und/oder einen hier nicht näher dargestellten Abstandssensor aufweisen. Das Förderfahrzeug 18 kann zur Kommunikation mit einem an der Transportschiene 16 angeordneten Steuermodul 33 ausgebildet sein.

Ein an der Transportschiene 16 angeordnetes Steuermodul 33 kann insbesondere zur Kommunikation mit einer übergeordneten Vorrichtungssteuerung 34 und/oder zur Kommunikation mit wenigstens einem Förderfahrzeug 18 zur Steuerung des Transportwegs und/oder der Transportgeschwindigkeit und/oder zum Anhalten des jeweiligen Förderfahrzeugs 18 ausgebildet sein.

An der Transportschiene 16 können insbesondere mehrere Steuermodule 33 an festen Positionen angeordnet sein. Ein solches Steuermodul 33 kann als optoelektronisches Kommunikationsmodul zum Datenaustausch für die Kommunikation zwischen Förderfahrzeug 18 und der Vorrichtungssteuerung 34 ausgebildet sein. Die Vorrichtungssteuerung 34, insbesondere in Form eines sogenannten Line Controllers, kann zur Steuerung und/oder Regelung sämtlicher Prozesse und/oder Abfolgen innerhalb der Vorrichtung 10 ausgebildet sein.

An der Transportschiene 16 kann zumindest eine Steuereinheit 35, insbesondere eine als Steuernocke ausgebildete Steuereinheit 35, zur Geschwindigkeitssteuerung eines Förderfahrzeugs 18 angeordnet sein. Ferner kann an der Transportschiene 18 und/oder angrenzend oder benachbart zu der Transportschiene 18 zumindest ein hier nicht näher dargestellter Positionssensor und/oder Abstandssensor angeordnet sein.

An der Transportschiene 16 können insbesondere mehrere Steuereinheiten 35, bevorzugt in Form von Steuernocken, an festen Positionen angeordnet sein. Die Steuereinheiten 35, insbesondere Steuernocken, können in bevorzugter Weise als unterschiedliche Steuereinheitstypen beziehungsweise Nockentypen ausgebildet sein.

Ein erster Steuereinheitstyp beziehungsweise Nockentyp kann dazu ausgebildet sein, ein Förderfahrzeug 18 beim Vorbeifahren und/oder beim Kontaktieren durch ein Förderfahrzeug 18 zu verzögern und/oder anzuhalten, insbesondere beim Vorbeifahren und/oder Kontaktieren an einer positiven Flanke zu verzögern und/oder beim Vorbeifahren und/oder Kontaktieren an einer negativen Flanke anzuhalten. Eine Verzögerung kann insbesondere auf eine Geschwindigkeit von weniger als 5 m/min, weniger als 4 m/min, weniger als 3 m/min, weniger als 2,5 m/min, weniger als 2 m/min vorgenommen werden. Eine Verzögerung auf eine derart niedrige Geschwindigkeit gewährleistet, dass eine weitere Fortbewegung des Förderfahrzeugs 18 mit verringerter Kollisionsgefahr erfolgen kann. Ebenso kann dadurch eine sichere weitere Verzögerung bis in den Stillstand des Förderfahrzeugs 18 erfolgen.

Ein zweiter Steuereinheitstyp beziehungsweise Nockentyp kann dazu ausgebildet sein, ein Förderfahrzeug 18 beim Vorbeifahren und/oder beim Kontaktieren durch ein Förderfahrzeug 18 auf eine erste vorbestimmte Geschwindigkeit zu beschleunigen, sofern sich das Förderfahrzeug 18 mit einer zweiten vorbestimmten Geschwindigkeit nähert und/oder vorbeifährt, die geringer ist als die erste vorbestimmte Geschwindigkeit. Auf diese Weise kann mit nur geringem Aufwand und hoher Betriebssicherheit eine Beschleunigung des Förderfahrzeugs 18 auf eine gewünschte erste vorbestimmte Geschwindigkeit vorgenommen werden.

Ein derartiger zweiter Steuereinheitstyp beziehungsweise Nockentyp kann ferner dazu ausgebildet sein, ein Förderfahrzeug 18 beim Vorbeifahren und/oder beim Kontaktieren durch ein Förderfahrzeug 18 auf eine zweite vorbestimmte Geschwindigkeit zu beschleunigen und/oder zu verzögern, sofern sich das Förderfahrzeug 18 nicht mit dieser zweiten vorbestimmten Geschwindigkeit nähert und/oder vorbeifährt. Auf diese Weise kann mit nur geringem Aufwand und hoher Betriebssicherheit eine Beschleunigung und/oder Verzögerung des Förderfahrzeugs 18 auf eine gewünschte zweite vorbestimmte Geschwindigkeit vorgenommen werden.

Bei der ersten vorbestimmten Geschwindigkeit kann es sich insbesondere um eine Geschwindigkeit von mindestens 10 m/min, bevorzugt von mindestens 15 m/min, bevorzugt von mindestens 20 m/min, bevorzugt von mindestens 25 m/min, bevorzugt von mindestens 30 m/min, bevorzugt von mindestens 35 m/min, bevorzugt von mindestens 40 m/min, bevorzugt von mindestens 45 m/min, weiter bevorzugt von mindestens 50 m/min, noch weiter bevorzugt von mindestens 55 m/min oder etwa 55 m/min, handeln. Hierdurch können Siebdruckwerkstücke und/oder Werkstückträger mit nur geringem Zeitaufwand zwischen unterschiedlichen Positionen beziehungsweise unterschiedlichen Einrichtungen innerhalb der Vorrichtung befördert werden.

Ferner kann es sich bei der ersten vorbestimmten Geschwindigkeit insbesondere um eine Geschwindigkeit von bis zu 100 m/min, bevorzugt von bis zu 90 m/min, bevorzugt von bis zu 80 m/min, bevorzugt von bis zu 70 m/min, bevorzugt von bis zu 65 m/min, weiter bevorzugt von bis zu 60 m/min, noch weiter bevorzugt von bis zu 55 m/min, handeln. Hierdurch kann eine hohe Transportsicherheit für Siebdruckwerkstücke und/oder Werkstückträger sichergestellt werden. Insbesondere kann hierdurch die Gefahr verringert werden, dass aufgrund zu hoher Transportgeschwindigkeiten ein Siebdruckwerkstück und/oder Werkstückträger von dem Förderfahrzeug herunterfällt.

Bei der ersten vorbestimmten Geschwindigkeit kann es sich noch weiter bevorzugt um eine Geschwindigkeit zwischen 10 m/min und 100 m/min, bevorzugt zwischen 20 m/min und 90 m/min, bevorzugt zwischen 30 m/min und 80 m/min, bevorzugt zwischen 35 m/min und 75 m/min, bevorzugt zwischen 40 m/min und 75 m/min, bevorzugt zwischen 40 m/min und 70 m/min, bevorzugt zwischen 45 m/min und 65 m/min, weiter bevorzugt zwischen 50 m/min und 60 m/min, noch weiter bevorzugt um eine Geschwindigkeit von 55 m/min, handeln. Mit einer solchen Geschwindigkeit kann eine ausreichend hohe Produktivität der Vorrichtung bei gleichzeitig hoher Betriebssicherheit gewährleistet werden.

Bei der zweiten vorbestimmten Geschwindigkeit kann es sich insbesondere um eine Geschwindigkeit von mindestens 5 m/min, bevorzugt von mindestens 10 m/min, bevorzugt von mindestens 15 m/min, bevorzugt von mindestens 20 m/min, weiter bevorzugt von mindestens 25 m/min, noch weiter bevorzugt von mindestens 30 m/min oder etwa 30 m/min, handeln. Eine solche Geschwindigkeit gewährleistet eine verhältnismäßig zeitsparende Beförderung innerhalb der Vorrichtung. Gleichzeitig kann hierdurch eine gegenüber einer ersten vorbestimmten Geschwindigkeit verringerte Transportgeschwindigkeit realisiert werden, beispielsweise zwecks weiterer kontrollierter Verzögerung.

Weiter bevorzugt kann es sich bei der zweiten vorbestimmten Geschwindigkeit insbesondere um eine Geschwindigkeit von bis zu 70 m/min, bevorzugt von bis zu 65 m/min, bevorzugt von bis zu 60 m/min, bevorzugt von bis zu 55 m/min, bevorzugt von bis zu 50 m/min, bevorzugt von bis zu 45 m/min, bevorzugt von bis zu 40 m/min, weiter bevorzugt von bis zu 35 m/min, noch weiter bevorzugt von bis zu 30 m/min, handeln. Eine solche Geschwindigkeit ermöglicht eine besonders gut kontrollierbare Verzögerung auf eine geringere Geschwindigkeit beziehungsweise eine besonders gut kontrollierbare Beschleunigung auf eine höhere Geschwindigkeit.

Bei der zweiten vorbestimmten Geschwindigkeit kann es sich weiterhin um eine Geschwindigkeit zwischen 5 m/min und 70 m/min, bevorzugt zwischen 10 m/min und 65 m/min, bevorzugt zwischen 15 m/min und 60 m/min, bevorzugt zwischen 15 m/min und 55 m/min, bevorzugt zwischen 15 m/min und 50 m/min, bevorzugt zwischen 15 m/min und 45 m/min, bevorzugt zwischen 20 m/min und 40 m/min, weiter bevorzugt zwischen 25 m/min und 35 m/min, noch weiter bevorzugt um eine Geschwindigkeit von 30 m/min, handeln. Eine solche Geschwindigkeit kann einerseits eine ausreichend hohe Produktivität innerhalb der Vorrichtung sicherstellen und zudem eine gut kontrollierbare Geschwindigkeitsveränderung auf eine höhere und/oder niedrigere Geschwindigkeit sicherstellen.

Ein dritter Steuereinheitstyp beziehungsweise Nockentyp kann dazu ausgebildet sein, ein Förderfahrzeug 18 beim Vorbeifahren und/oder Kontaktieren auf eine dritte vorbestimmte Geschwindigkeit zu beschleunigen und/oder zu verzögern, unabhängig von der Geschwindigkeit, mit der sich das Förderfahrzeug 18 nähert und/oder vorbeifährt. Hierdurch kann mit nur geringem Aufwand und hoher Sicherheit eine Geschwindigkeitsveränderung herbeigeführt werden, nämlich auf eine dritte vorbestimmte Geschwindigkeit.

Bei der dritten vorbestimmten Geschwindigkeit kann es sich insbesondere um eine Geschwindigkeit von mindestens 3 m/min, bevorzugt von mindestens 5 m/min, bevorzugt von mindestens 6 m/min, bevorzugt von mindestens 7 m/min, bevorzugt von mindestens 8 m/min, bevorzugt von mindestens 10 m/min, noch weiter bevorzugt von mindestens 12 m/min oder etwa 12 m/min, handeln. Eine solche Mindestgeschwindigkeit gewährleistet eine geeignete Ausgangsgeschwindigkeit für eine Verzögerung auf vollständigen Stillstand und/oder für eine Beschleunigung auf eine höhere Geschwindigkeit.

Bei der dritten vorbestimmten Geschwindigkeit kann es sich weiterhin um eine Geschwindigkeit von bis zu 30 m/min, bevorzugt von bis zu 25 m/min, bevorzugt von bis zu 22 m/min, bevorzugt von bis zu 20 m/min, bevorzugt von bis zu 18 m/min, bevorzugt von bis zu 16 m/min, bevorzugt von bis zu 14 m/min, noch weiter bevorzugt von bis zu 12 m/min, handeln. Eine solche Höchstgeschwindigkeit gewährleistet bei einem hohen Maß an Sicherheit eine geeignete Ausgangsgeschwindigkeit für eine Verzögerung und/oder für eine Beschleunigung auf eine höhere Geschwindigkeit.

Bei der dritten vorbestimmten Geschwindigkeit kann es sich weiter bevorzugt um eine Geschwindigkeit zwischen 3 m/min und 30 m/min, bevorzugt zwischen 5 m/min und 25 m/min, bevorzugt zwischen 7 m/min und 22 m/min, bevorzugt zwischen 8 m/min und 20 m/min, bevorzugt zwischen 8 m/min und 18 m/min, bevorzugt zwischen 8 m/min und 16 m/min, bevorzugt zwischen 10 m/min und 14 m/min, noch weiter bevorzugt um eine Geschwindigkeit von 12 m/min, handeln. Eine solche Geschwindigkeit ist besonders geeignet als Ausgangsgeschwindigkeit für eine vollständige Verzögerung bis auf einen Stillstand des Förderfahrzeugs sowie auch für eine Beschleunigung auf eine höhere Geschwindigkeit, bei gleichzeitig geringer Gefahr von Kollisionen oder einem Herunterfallen eines Siebdruckwerkstücks oder eines Werkstückträgers von dem Förderfahrzeug.

Die Steuereinheiten 35 und/oder Steuernocken können in schaltbarer und nicht schaltbarer Ausführung ausgebildet sein. Schaltbare Steuereinheiten 35 und/oder Steuernocken können stromlos - frei von elektrischem Strom - betrieben werden.

Die Transportschiene 16 kann vordefinierte Haltepunkte für ein Förderfahrzeug 18 aufweisen, an denen bevorzugt zumindest ein Steuermodul 33 und/oder eine Steuereinheit 35 vorgesehen ist. Wenigstens ein Steuermodul 33 und/oder wenigstens eine Steuereinheit 35 und/oder die Vorrichtungssteuerung 34 kann dazu ausgebildet sein, ein Förderfahrzeug 18 nur bei Bedarf an einem vordefinierten Haltepunkt anzuhalten. Ferner kann an einem vordefinierten Haltepunkt zumindest ein Sensor vorgesehen sein, der erkennt, wenn ein Förderfahrzeug an ein Steuermodul 33 gefahren ist, unabhängig davon, ob das Förderfahrzeug 18 an diesem Steuermodul 33 gehalten hat oder nicht. Ein solcher Sensor kann als Steuermodul 33 beziehungsweise als Teil eines Steuermoduls 33 ausgebildet sein.

Die Transporteinrichtung 14 kann weiterhin ein Kollisionsüberwachungssystem zur Kollisionsvermeidung zwischen Förderfahrzeugen 18 aufweisen, wobei das Kollisionsüberwachungssystem bevorzugt zur Signalverarbeitung von Abstands- und/oder Positionssensoren und/oder von Steuermodulen 33 und/oder von Steuereinheiten 35 der Transportschiene 16 eingerichtet ist.

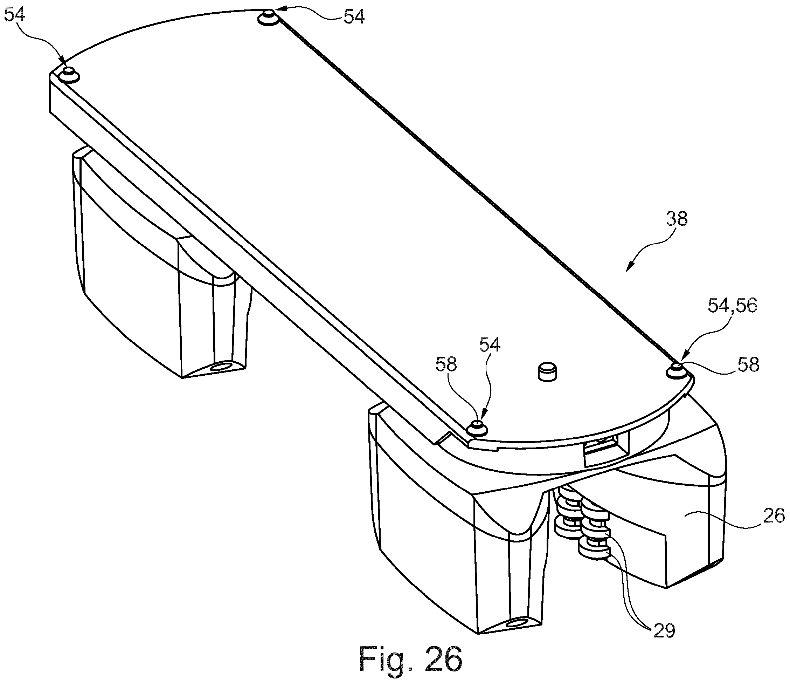

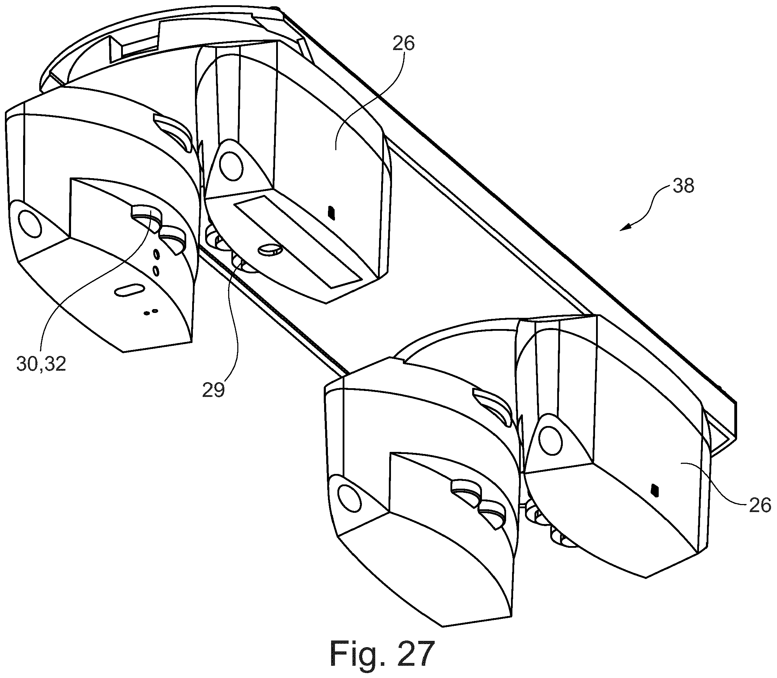

Wie den Fig. 9 bis 21 ferner zu entnehmen ist, kann das Förderfahrzeug 18 einen Aufbau 36 zur Aufnahme eines Werkstückträgers 20 für Siebdruckwerkstücke aufweisen. Ebenso kann das Förderfahrzeug 18 eine die Antriebseinrichtung 26 aufweisende Läufervorrichtung 38 aufweisen, wobei der Aufbau 36 bevorzugt auf der Läufervorrichtung 38 des Förderfahrzeugs 18 angeordnet ist. Gesonderte Ansichten der Läufervorrichtung 38 sind den Fig. 26 und 27 zu entnehmen.

Der Aufbau 36 und/oder ein Tragabschnitt 40 des Aufbaus 36 können in bevorzugter Weise eine Aufnahmeebene für einen Werkstückträger 20 definieren, die beabstandet von der Läufervorrichtung 38 und/oder von der Antriebseinrichtung 26 verläuft, insbesondere vertikal beabstandet verläuft.

Der Aufbau 36, insbesondere mit einem darin aufgenommen Werkstückträger 20, kann in einer Draufsicht, wie in Fig. 12 dargestellt, die Läufervorrichtung 38 und/oder die Antriebseinrichtung 26 zumindest abschnittsweise überdecken und/oder zumindest ein Seitenende 42 der Läufervorrichtung 38 überragen.

Insgesamt kann der Aufbau 36 C-förmig ausgebildet sein. Die C-förmige Ausbildung kann beispielsweise der Darstellung in Fig. 11 entnommen werden. Weiterhin kann der Aufbau 36 einen Freiraum 44 zur Aufnahme eines Drucktisches 24 der Druckeinrichtung 12 bilden oder begrenzen.

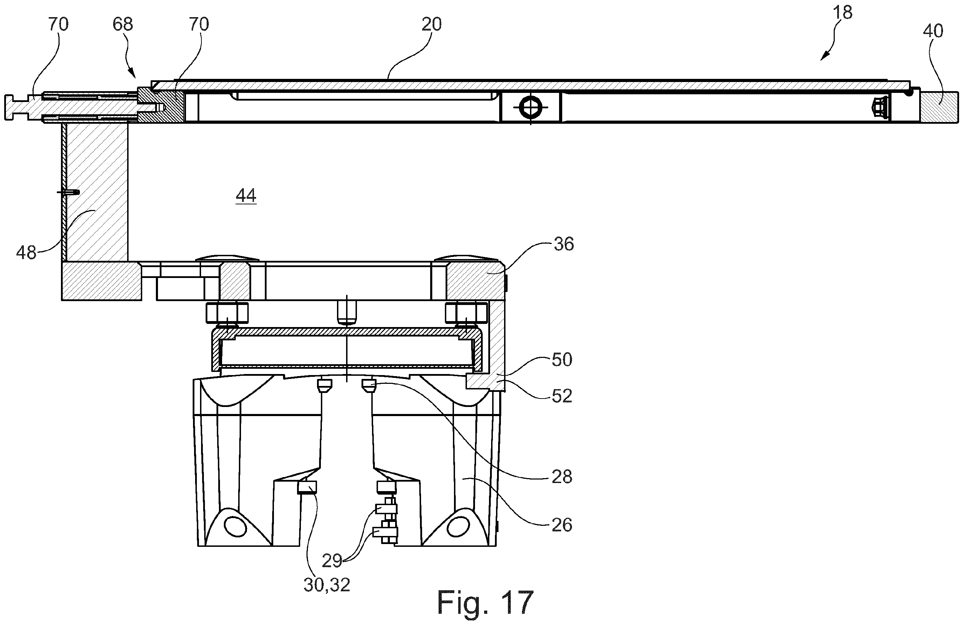

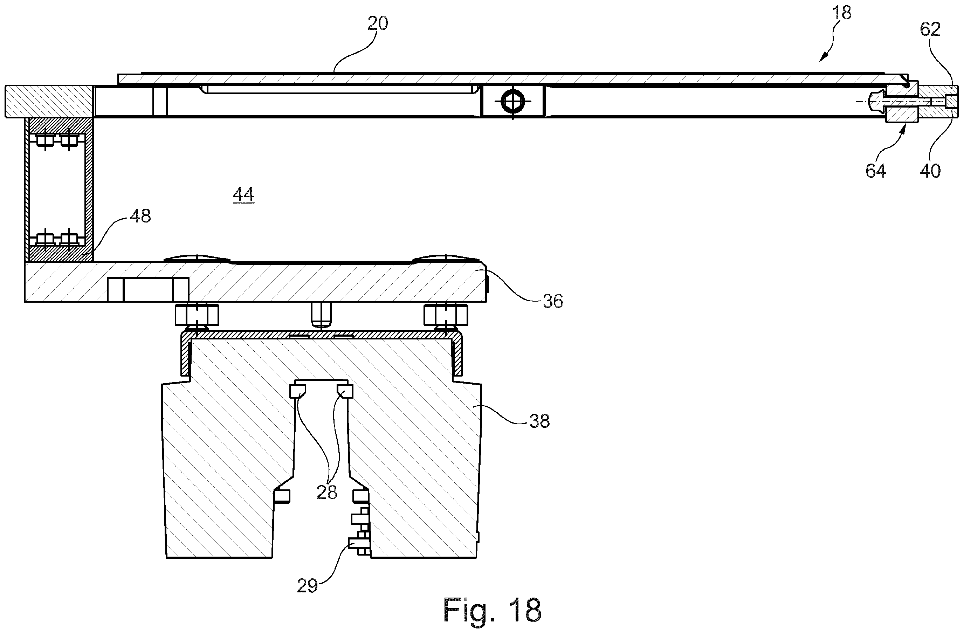

In einem Querschnitt des Aufbaus 36 kann der Flächenmittelpunkt des Aufbaus 36 seitlich versetzt zum Gewichtsschwerpunkt des Aufbaus 36 angeordnet sein. Der Flächenmittelpunkt des Querschnitts des Aufbaus 36 kann insbesondere gebildet sein aus der Mittelung aller Punkte der Querschnittsflächen des Grundabschnitts 46, des Verbindungsabschnitts 48 sowie des Tragabschnitts 40. In einem Querschnitt des Aufbaus 36 kann der Flächenmittelpunkt des Aufbaus 36 insbesondere seitlich versetzt beziehungsweise in einer Richtung quer zur Längserstreckung der Transportschiene 16 versetzt angeordnet sein. Ein solcher Querschnitt des Aufbaus 36 kann insbesondere den Fig. 17 und 18 entnommen werden und ermöglicht in vorteilhafter Weise die Anordnung eines Drucktisches 24 einer Druckeinrichtung 12 innerhalb des Freiraums 44 zwecks unterseitiger Kontaktierung des jeweils aufgenommenen Werkstückträgers 20.

Der Aufbau 36 kann einen Grundabschnitt 46 zur Befestigung an der Läufervorrichtung 38, einen Tragabschnitt 40 zur Aufnahme eines Werkstückträgers 20 sowie einen Verbindungsabschnitt 48 zur Verbindung des Tragabschnitts 40 mit dem Grundabschnitt 46 aufweisen. Dabei kann der Freiraum 44 zur Aufnahme eines Drucktisches 24 und/oder zur unterseitigen Kontaktierung eines Werkstückträgers 20 bevorzugt zwischen dem Grundabschnitt 46 und dem Tragabschnitt 40 ausgebildet und/oder seitlich durch den Verbindungsabschnitt 48 begrenzt sein.

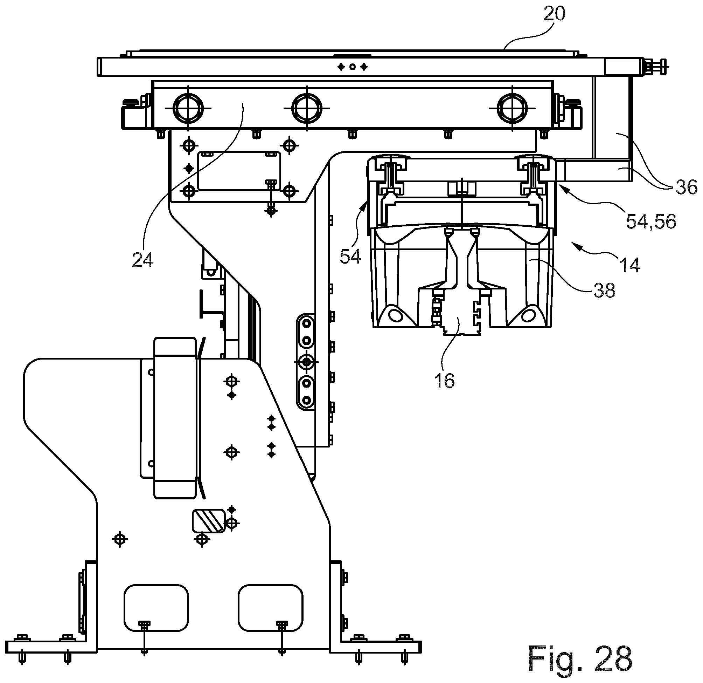

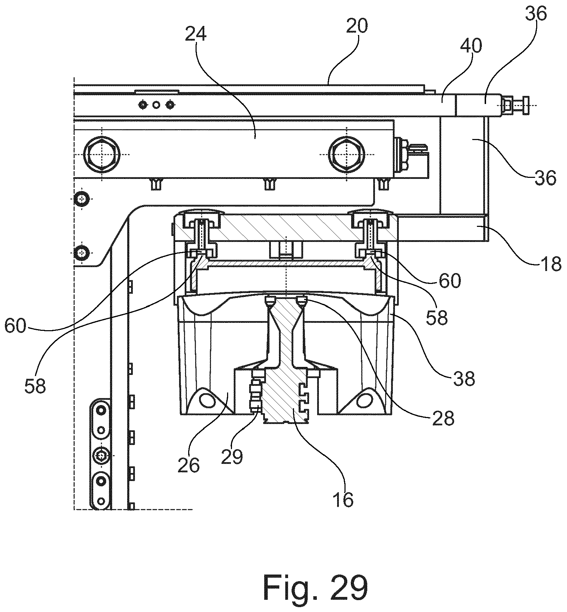

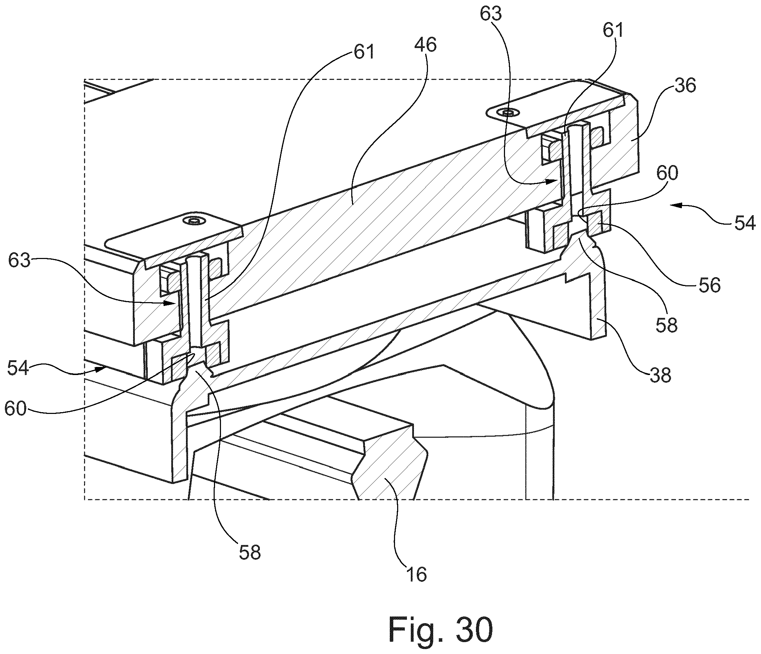

Der Aufbau 36 und/oder der Tragabschnitt 40 des Aufbaus 36 können relativ zur Läufervorrichtung 38 in Höhenrichtung beweglich gelagert und/oder höhenjustierbar angeordnet sein, wie im Einzelnen in den Fig. 28 bis 30 dargestellt. Der Aufbau 36 und/oder der Tragabschnitt 40 des Aufbaus 36 kann insbesondere relativ zur Läufervorrichtung 38 durch einen Drucktisch 24 der Druckeinrichtung 12 anhebbar angeordnet sein.

Ein Hub und/oder eine Höhenbeweglichkeit des Aufbaus 36 und/oder des Tragabschnitts 40 des Aufbaus 36 relativ zur Läufervorrichtung 38 kann begrenzt sein, bevorzugt durch eine mechanische Hubbegrenzungseinrichtung 50. Eine solche Hubbegrenzungseinrichtung 50 kann insbesondere als eine Hubbegrenzungsklaue 52 ausgebildet sein, wie in Fig. 10 beispielhaft dargestellt.

Die Hubbegrenzungseinrichtung 50 und/oder die Hubbegrenzungsklaue 52 kann in bevorzugter Weise an dem Aufbau 36 angeordnet sein und/oder die Läufervorrichtung 38 formschlüssig hintergreifen. Durch Anheben des Aufbaus 36 kann die Hubbegrenzungseinrichtung 50 und/oder die Hubbegrenzungsklaue 52 in formschlüssigen Kontakteingriff mit der Läufervorrichtung 38 bringbar sein.

Der Aufbau 36 kann ferner über eine Mehrpunktlagerung 54, insbesondere über eine 4-Punktlagerung, auf der Läufervorrichtung 38 befestigt und/oder höhenbeweglich geführt sein. Eine derartige Höhenbeweglichkeit kann ein Anheben ohne Betätigung von Stellschrauben beziehungsweise ohne Freigabe einer Verriegelung ermöglichen. Es kann sich um eine - in vordefinierten Grenzen - freie Höhenbeweglichkeit handeln. Die Mehrpunktlagerung 54 kann insbesondere durch eine Mehrzahl von Lagern 56 ausgebildet sein. Ein Lager 56 zwischen dem Aufbau 36 und der Läufervorrichtung 38 kann durch einen Lagerdorn 58 sowie eine Dornaufnahme 60 für den Lagerdorn 58 ausgebildet ist.

Die Mehrpunktlagerung 54 und/oder zumindest ein Lager 56 zwischen dem Aufbau 36 und der Läufervorrichtung 38 kann ferner zur Selbstzentrierung und/oder Selbstausrichtung des Aufbaus 36 relativ zur Läufervorrichtung 38 ausgebildet sein. Hierzu kann zumindest ein Lagerdorn 58 konisch zulaufen und/oder zumindest eine Dornaufnahme 60 kann konisch zulaufen. Die Dornaufnahme 60 kann komplementär zum Lagerdorn 58 oder mit einer von dem Lagerdorn 58 abweichenden Konizität ausgebildet sein. Eine solche Ausgestaltung kann mit nur geringem Aufwand eine sichere Selbstzentrierung des Aufbaus 36 relativ zur Läufervorrichtung 38 gewährleisten.

Ein Lager 56 zwischen dem Aufbau 36 und der Läufervorrichtung 38 kann ferner mit einer Justierschraube 61 ausgestattet sein. Eine solche Justierschraube 61 kann in ein Gewinde 63 des Grundabschnitts 46 eingeschraubt sein. An der Justierschraube 61, insbesondere an dem unteren Ende der Justierschraube 61, kann die Dornaufnahme 60 ausgebildet sein. Durch Einschrauben oder Herausschrauben der Justierschraube 61 kann mithin einer Höhenjustierung des Aufbaus 36 relativ zur Läufervorrichtung vorgenommen werden. Für ein Anheben des Aufbaus 36 durch einen Drucktisch 24 kann auf diese Weise eine korrekte Ausgangshöhe eingestellt werden.

Das Förderfahrzeug 18, insbesondere der Aufbau 36 des Förderfahrzeugs 18 und/oder der Tragabschnitt 40 des Aufbaus 36, kann wie in den Fig. 9 bis 25 beispielhaft dargestellt zur formschlüssigen und/oder kraftschlüssigen und/oder stoffschlüssigen Aufnahme und/oder Fixierung und/oder zumindest abschnittsweisen Einfassung eines Werkstückträgers 20 ausgebildet sein. Zusätzlich oder alternativ kann der Aufbau 36 und/oder der Tragabschnitt 40 des Aufbaus 36 zur definierten und/oder spielfreien Aufnahme und/oder Einfassung eines Werkstückträgers 20 ausgebildet sein.

Weiter bevorzugt kann das Förderfahrzeug 18, insbesondere der Aufbau 36 des Förderfahrzeugs 18 und/oder der Tragabschnitt 40 des Aufbaus 36, wie in den Fig. 9 bis 25 beispielhaft dargestellt, eine Rahmenvorrichtung 62 aufweisen, insbesondere eine Rahmenvorrichtung 62 zur formschlüssigen und/oder kraftschlüssigen und/oder stoffschlüssigen Aufnahme und/oder Fixierung und/oder zumindest abschnittsweisen Einfassung eines Werkstückträgers 20.

Ebenso ist es möglich, dass das Förderfahrzeug 18, insbesondere der Aufbau 36 des Förderfahrzeugs 18 und/oder der Tragabschnitt 40 des Aufbaus 36, anstelle einer Rahmenvorrichtung 62 eine hier nicht näher dargestellte Tragplatte aufweist, insbesondere eine Tragplatte zur formschlüssigen und/oder kraftschlüssigen und/oder stoffschlüssigen Aufnahme und/oder Fixierung und/oder zumindest abschnittsweisen Einfassung eines Werkstückträgers 20. Eine solche Tragplatte kann beispielsweise mit einer Ausnehmung für die Anordnung eines Werkstückträgers 20 ausgebildet sein.

Die Rahmenvorrichtung 62 kann bevorzugt zur definierten und/oder spielfreien Aufnahme und/oder Einfassung eines Werkstückträgers 20 ausgebildet sein. Ebenso kann die Rahmenvorrichtung 62 bevorzugt einen Freiraum 44 zur unterseitigen Kontaktierung eines darin aufgenommenen und/oder eingefassten Werkstückträgers 20 begrenzen.

Wie im Einzelnen in den Fig. 19 bis 25 dargestellt ist, kann das Förderfahrzeug 18, insbesondere der Aufbau 36 und/oder der Tragabschnitt 40 und/oder die Rahmenvorrichtung 62, eine Werkstückträgerlagerung 64 zur Fixierung und/oder zum Festklemmen und/oder zum kraft- und/oder formschlüssigen Befestigen eines Werkstückträgers 20 aufweisen. Die Werkstückträgerlagerung 64 kann bevorzugt als Mehrpunktlagerung, insbesondere als 3-Punktlagerung, ausgebildet sein.

Die Werkstückträgerlagerung 64 kann in besonders bevorzugter Weise durch wenigstens ein Festlager 66 und/oder durch wenigstens eine Verriegelung 68 gebildet sein, insbesondere mehrere Festlager 66 und eine gegenüberliegend angeordnete Verriegelung 68, wie den Fig. 19 bis 25 zu entnehmen ist.

Die Verriegelung 68 kann bevorzugt durch einen Schieber 70 mit gefaster und/oder zur Schiebrichtung des Schiebers 70 geneigter Kontaktfläche 72 gebildet sein. Die Verriegelung 68 kann in besonders bevorzugter Weise durch einen unter Federvorspannung stehenden Schieber 70 und/oder als Schnappverschluss ausgebildet sein. Ferner kann auch ein Festlager 66 mit gefaster und/oder zur Schieberichtung des Schiebers 70 geneigter Kontaktfläche 74 ausgebildet sein, insbesondere können mehrere Festlager 66 jeweils mit geneigter Kontaktfläche 74 ausgebildet sein.

Gemäß einer weiter bevorzugten Ausgestaltung kann der Aufbau 36, insbesondere der Tragabschnitt 40 und/oder die Rahmenvorrichtung 62, Stützabschnitte 76 für die Kontaktierung und/oder die Anhebung des Aufbaus 36 durch einen Drucktisch 24 der Druckeinrichtung 12 aufweisen.

Die Stützabschnitte 76 können bevorzugt an einer Unterseite des Tragabschnitts 40 und/oder der Rahmenvorrichtung 62 ausgebildet sein. Insbesondere können die Stützabschnitte 76 an Formelementen 78 ausgebildet sein, die an einer Innenseite der Rahmenvorrichtung 62 ausgebildet und/oder angeordnet sind. Die Stützabschnitte 76 können an den Unterseiten der Formelemente 78 ausgebildet sein.

An einer Oberseite des jeweiligen Formelements 78 kann demgegenüber ein Festlager 66 und/oder eine geneigte Kontaktfläche 74 ausgebildet sein.

Die Stützabschnitte 76 können für eine für die Werkstückträgerlagerung 64 belastungsfreie Kontaktierung durch einen Drucktisch 24 ausgebildet und/oder angeordnet sein. Der Aufbau 36 kann über die Stützabschnitte 76 durch einen Drucktisch 24, für die Werkstückträgerlagerung 64 belastungsfrei, kontaktierbar und/oder anhebbar sein. Eine solche für die Werkstückträgerlagerung 64 belastungsfreie Kontaktierung kann insbesondere dann sichergestellt werden, wenn die Stützabschnitte 76 durch einen Drucktisch 24 vor beziehungsweise zeitgleich mit der Kontaktierung des jeweiligen Werkstückträgers 20 durch den Drucktisch 24 erfolgt.

Die Druckeinrichtung 12 kann ferner einen anhebbaren Drucktisch 24, bevorzugt einen anhebbaren Vakuumdrucktisch, aufweisen. Ein anhebbarer Drucktisch 24 ist in Fig. 28 beispielhaft dargestellt.

Dabei kann der Drucktisch 24 der Druckeinrichtung 12 zur flächigen Kontaktierung eines in einem Förderfahrzeug 18 aufgenommenen Werkstückträgers 20 und/oder zur Kontaktierung der Stützabschnitte 76 des Aufbaus 36 des Förderfahrzeugs 18 ausgebildet sein. Ferner kann der Drucktisch 24 der Druckeinrichtung 12 dazu ausgebildet sein, den Aufbau 36 über die Stützabschnitte 76, für die Werkstückträgerlagerung belastungsfrei, anzuheben, insbesondere bei gleichzeitiger und/oder aufeinander abfolgender Kontaktierung der Stützabschnitte 76 und des Werkstückträgers 20.

In einer Draufsicht auf die Transporteinrichtung 14, beispielsweise gemäß Fig. 12, und/oder in einem Querschnitt der Transporteinrichtung 14 kann der Gewichtsschwerpunkt des Förderfahrzeugs 18 versetzt zur Transportschiene 16 angeordnet sein. Der Gewichtsschwerpunkt des Förderfahrzeugs 18 kann seitlich versetzt zur Transportschiene 16 oder seitlich versetzt zu einem Gewichtsschwerpunkt der Transportschiene 16 angeordnet sein. Insbesondere kann der Gewichtsschwerpunkt des Förderfahrzeugs 18 in einer horizontalen Richtung und quer zu einer Längserstreckung der Transportschiene 16 seitlich versetzt zur Transportschiene 16 angeordnet sein. Eine Längserstreckung der Transportschiene 16 kann dabei die Transportrichtung eines Förderfahrzeugs 18 auf der jeweiligen Transportschiene 16 vorgeben.

Weiter bevorzugt kann in einer Draufsicht auf das Förderfahrzeug 18, wie beispielsweise in Fig. 12 und Fig. 18 dargestellt, der Gewichtsschwerpunkt des Aufbaus 36 versetzt zum Gewichtsschwerpunkt der Läufervorrichtung 38 angeordnet sein. Der Gewichtsschwerpunkt des Aufbaus 36 kann seitlich versetzt zum Gewichtsschwerpunkt der Läufervorrichtung 38 angeordnet sein. Insbesondere kann der Gewichtsschwerpunkt des Aufbaus 36 relativ zum Gewichtsschwerpunkt der Läufervorrichtung 38 in einer horizontalen Richtung und quer zu einer Längserstreckung der Transportschiene 16 und/oder in einer horizontalen Richtung und quer zu einer Längserstreckung des Förderfahrzeugs 18 seitlich versetzt angeordnet sein. Eine Längserstreckung der Transportschiene 16 kann dabei wiederum die Transportrichtung eines Förderfahrzeugs 18 auf der jeweiligen Transportschiene 16 vorgeben. Eine Längserstreckung des Förderfahrzeugs 18 kann dabei entlang der Transportrichtung des Förderfahrzeugs 18 auf der jeweiligen Transportschiene 16 verlaufen.

Es kann sich durch eine derartige Gewichtsverteilung ein vorteilhaftes Fahrverhalten in Kurvensituationen des Förderfahrzeugs 18 ergeben, wodurch insbesondere ein unerwünschtes Kippen des Förderfahrzeugs 18 oder des Aufbaus 36 relativ zur Läufervorrichtung 28 vermieden werden kann.

Die Transporteinrichtung 14 und/oder das Schienensystem der Transporteinrichtung 14 kann in bevorzugter Weise als Transportkreislauf ausgebildet sein, wie in den Fig. 7 und 8 näher dargestellt. Dabei kann das Schienensystem der Transporteinrichtung 14 eine Bypass-Strecke 80 aufweisen. Auf einer solchen Bypass-Strecke 80 können Förderfahrzeuge 18 temporär positioniert oder angehalten werden, bevor sie wieder in eine Hauptstrecke 82 des Schienensystems der Transporteinrichtung 14 eingefädelt werden oder in eine solche Hauptstrecke 82 einfahren.

Die Transporteinrichtung 14 kann insbesondere für den automatisierten Transport zumindest eines Siebdruckwerkstücks und/oder eines Werkstückträgers 20 im Kreislauf zwischen einer Druckeinrichtung 12 und einer von der Druckeinrichtung 12 beabstandeten Position eingerichtet sein. Bei einer von der Druckeinrichtung 12 beabstandeten Position kann es sich um jede Position außerhalb der Druckeinrichtung 12 und entlang des Schienensystems handeln. Positionen außerhalb der Druckeinrichtung 12 können entlang der Hauptstrecke 82 oder entlang der Bypass-Strecke 80 angeordnet sein.

Wie in den Fig. 1 bis 6 gezeigt kann die Vorrichtung 10 eine Mehrzahl von Druckeinrichtungen 12 aufweisen. Zwischen den Druckeinrichtungen 12 kann die Transporteinrichtung 14 verlaufen. Demgemäß kann zwischen den Druckeinrichtungen 12 ein Siebdruckwerkstück und/oder ein Werkstückträger 20 mittels der Transporteinrichtung 14 transportierbar sein.

Die Vorrichtung 10 kann ferner mit zumindest einer Trocknungseinrichtung 84 für zumindest ein Siebdruckwerkstück, insbesondere mit einer Mehrzahl von Trocknungseinrichtungen 84, ausgestattet sein, wie in den Fig. 1 bis 6 gezeigt. Bevorzugt kann jeder Druckeinrichtung 12 eine Trocknungseinrichtung 84 zugeordnet und/oder im Verlauf der Transporteinrichtung 14 nachgeschaltet sein. Die zumindest eine Trocknungseinrichtung 84 kann weiter bevorzugt für den kontinuierlichen Trocknungsdurchlauf und/oder für die stationäre Trocknung ausgebildet sein.

Die Transporteinrichtung 14 kann weiter bevorzugt für den Transport eines Siebdruckwerkstücks und/oder eines Werkstückträgers 20 hin zur und/oder weg von der Trocknungseinrichtung 84 und/oder durch die Trocknungseinrichtung 84 hindurch verlaufen. Ebenso kann die Transporteinrichtung 14 für den Transport eines Siebdruckwerkstücks und/oder eines Werkstückträgers 20 zwischen der Druckeinrichtung 12 und der Trocknungseinrichtung 84 ausgebildet sein.

Insbesondere kann die Transporteinrichtung 14 zumindest abschnittsweise durch die Trocknungseinrichtung 84 hindurch verlaufen und/oder die Transporteinrichtung 14 kann gesondert von der Trocknungseinrichtung 84 ausgebildet sein. Hierdurch kann ein insgesamt modularer Aufbau der Vorrichtung 10 ermöglicht oder weiter begünstigt werden. Die Transporteinrichtung 14 kann unabhängig von der Trocknungseinrichtung 84 konfiguriert und zur Verbindung der Trocknungseinrichtung 84 mit zumindest einer weiteren Einrichtung oder Position innerhalb der Vorrichtung 10 angeordnet sein.

Weiterhin kann eine von der Trocknungseinrichtung 84 gesonderte und/oder unabhängig ausgebildete Transporteinrichtung 14 die Ergänzung und/oder den Austausch der jeweiligen Trocknungseinrichtung 84 vereinfachen, insbesondere die Ergänzung mit weiteren Einheiten innerhalb der Vorrichtung oder den Austausch der Trocknungseinrichtung 84 durch eine andere Trocknungseinrichtung 84.

Trotz von der Trocknungseinrichtung 84 gesonderter und/oder unabhängiger Ausbildung der Transporteinrichtung 14 kann diese an die Trocknungseinrichtung 84 angepasst sein, insbesondere um einen zuverlässigen Transport eines Werkstückträgers 20 und/oder eines Siebdruckwerkstücks hin zur und/oder weg von der Trocknungseinrichtung 84 zu ermöglichen.

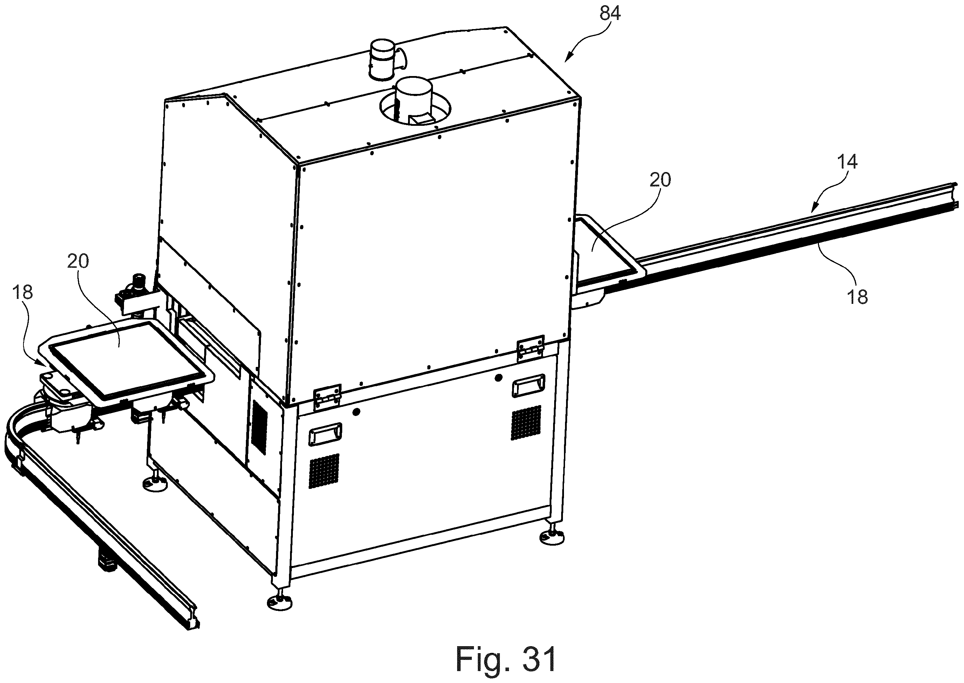

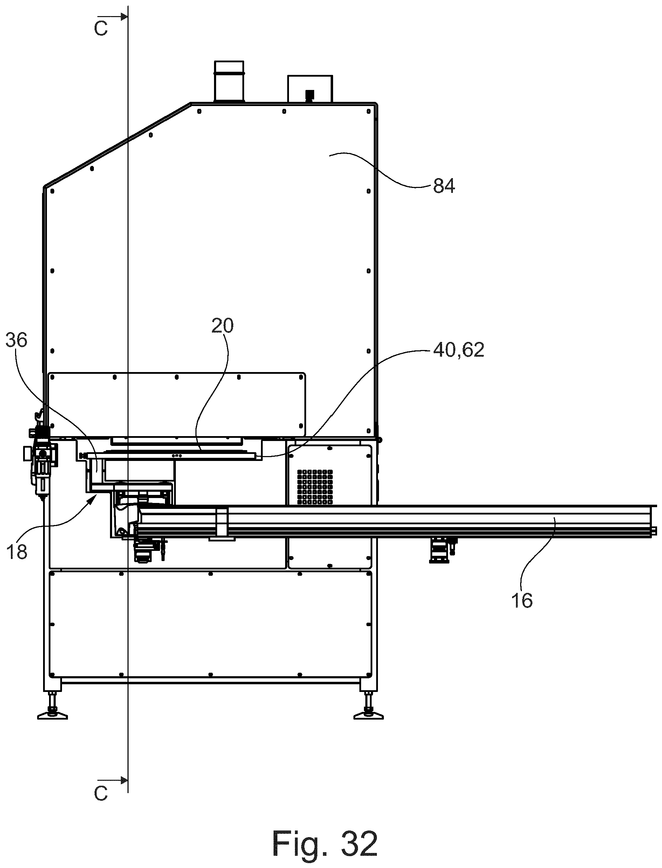

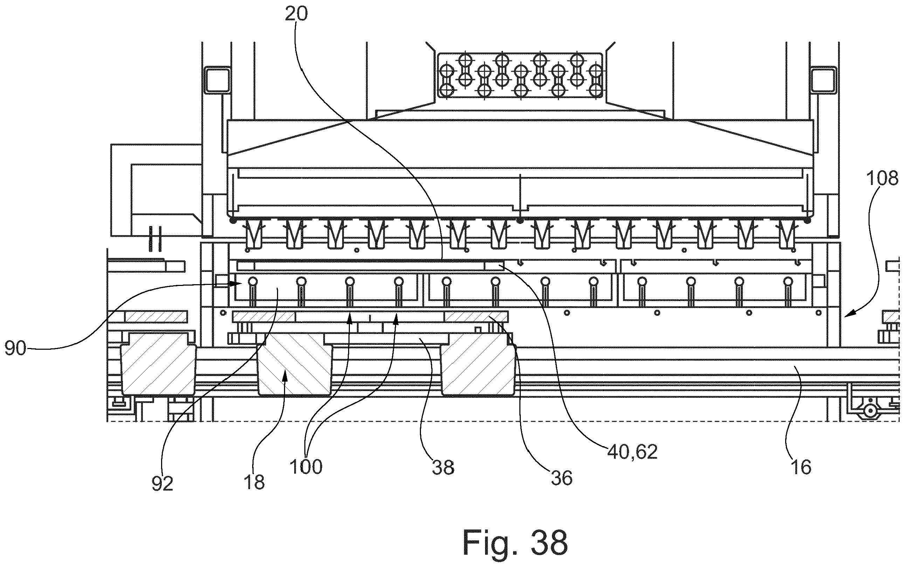

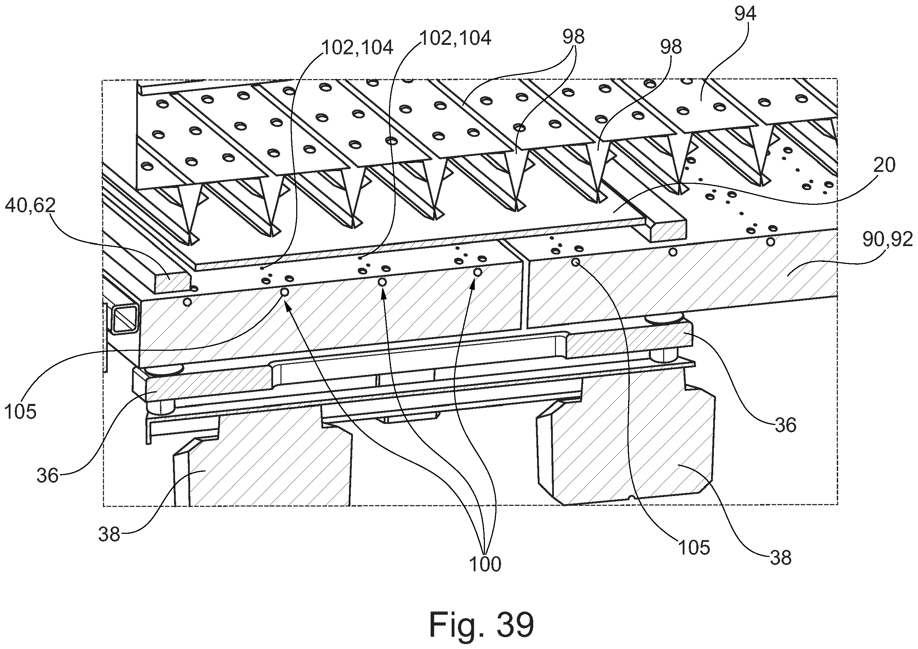

Einzelheiten zu einer solchen Trocknungseinrichtung 84 sind in den Fig. 31 bis 39 dargestellt. Die Trocknungseinrichtung 84 kann in besonders bevorzugter Weise zur Trocknung zumindest eines Siebdruckwerkstücks und zur gleichzeitigen Kühlung eines das jeweils zu trocknende Siebdruckwerkstück tragenden Werkstückträgers 20 ausgebildet sein.

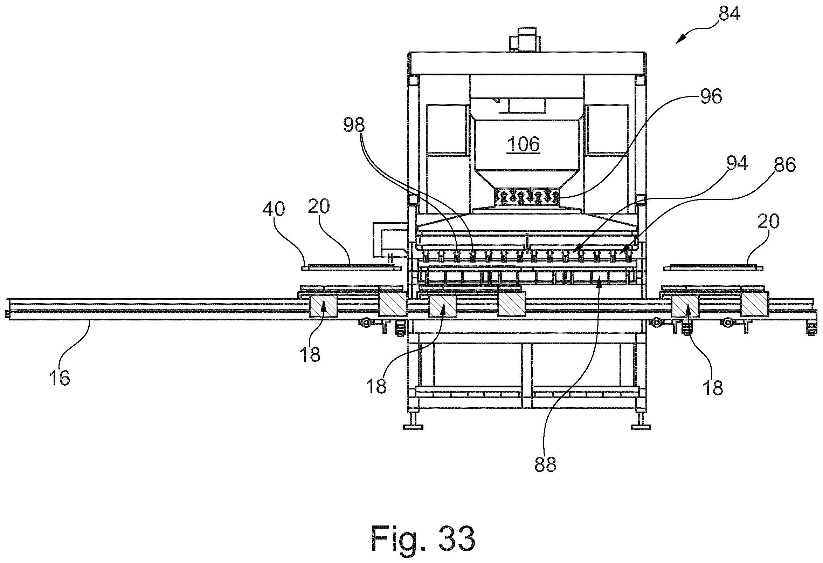

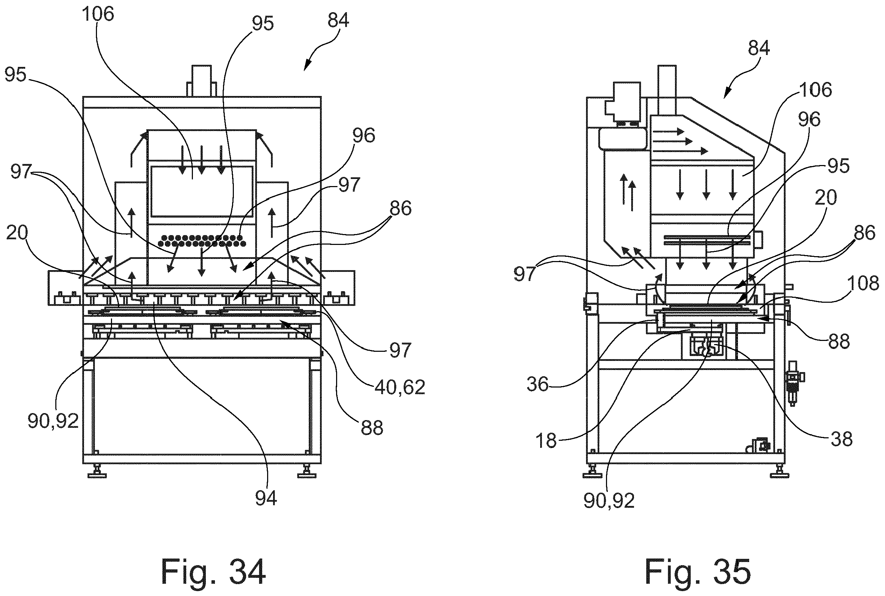

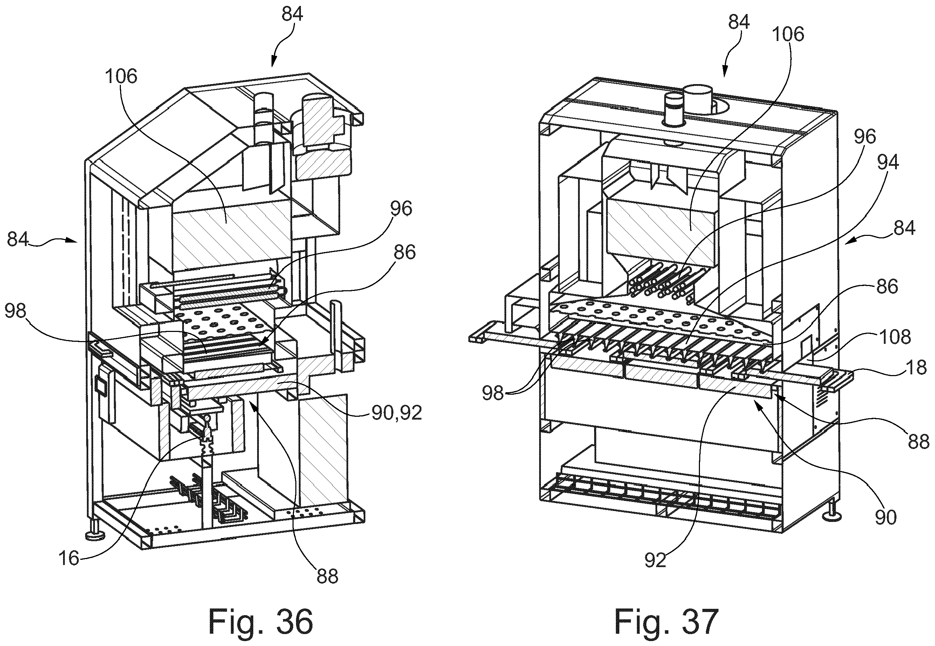

In den Längsschnittdarstellungen in den Fig. 33, 34 und 37 sowie auch in den Querschnittdarstellungen in den Fig. 35 und 36 ist das Innere der Trocknungseinrichtung 84 dargestellt. Die Trocknungseinrichtung 84 kann insbesondere einen Trocknungsabschnitt 86 zur Trocknung von Siebdruckwerkstücken und einen Kühlabschnitt 88 zur Kühlung von Werkstückträgern 20 aufweisen.

Die Trocknungseinrichtung 84 kann hierzu insbesondere in einen Trocknungsabschnitt 86 und einen Kühlabschnitt 88 unterteilt sein, wobei innerhalb des Kühlabschnitts 88 bevorzugt wenigstens eine Düsenvorrichtung 90 und/oder Lochplatte 92 zur Zuführung eines Kühlluftstroms, insbesondere von Kühldruckluft, angeordnet sein kann.

Durch eine Unterteilung der Trocknungseinrichtung 84 in einen Trocknungsabschnitt 86 und einen Kühlabschnitt 88 kann vermieden oder die Gefahr verringert werden, dass ein warmer Trocknungsluftstrom auf eine Unterseite des jeweils zu kühlenden Werkstückträgers 20 gelangt. Eine unerwünschte Erwärmung des Werkstückträgers 20 kann damit verhindert werden.

Bei einer geeigneten Unterteilung der Trocknungseinrichtung 84 in einen Trocknungsabschnitt 86 und einen Kühlabschnitt 88 kann insbesondere eine Vermischung von Trocknungsluftströmen und Kühlluftströmen verhindert oder verringert werden, insbesondere temporär verhindert oder verringert werden. Eine solche Vermischung von Trocknungsluftströmen und Kühlluftströmen kann in besonders bevorzugter Weise solange verhindert oder geringgehalten werden, bis die jeweilige Funktion der Trocknungsluftströme und Kühlluftströme erfüllt wurde, nämlich bis eine Trocknung der jeweiligen Siebdruckwerkstücke erfolgt und eine Kühlung des Werkstückträgers gleichzeitig zur Trocknung oder zumindest zeitweise während der Trocknung sichergestellt wurde.

Eine Unterteilung der Trocknungseinrichtung 84 in einen Trocknungsabschnitt 86 und einen Kühlabschnitt 88 kann insbesondere dadurch begünstigt werden, dass ein Förderfahrzeug 18, bevorzugt mit darauf positioniertem Werkstückträger 20, innerhalb der Trocknungseinrichtung 84 positioniert wird. Das Förderfahrzeug 18 beziehungsweise ein darauf positionierter Werkstückträger 20 selbst kann zur Unterteilung der Trocknungseinrichtung 84 in einen Trocknungsabschnitt 86 und einen Kühlabschnitt 88 in vorteilhafter Weise beitragen. Dies gilt insbesondere bei einer Mehrzahl hintereinander innerhalb der Trocknungseinrichtung 84 positionierten Förderfahrzeugen 18.

Ein Trocknungsabschnitt 86 kann insbesondere oberhalb einer Düsenvorrichtung 90 und/oder Lochplatte 92 zur Zuführung eines Kühlluftstroms angeordnet sein.

Die Trocknungseinrichtung 84 kann in vorteilhafter Weise zur Konvektionstrocknung eines Siebdruckwerkstücks und/oder zur Blasluftkühlung von Werkstückträgern 20 ausgebildet sein, insbesondere zur Konvektionstrocknung eines Siebdruckwerkstücks bei gleichzeitiger Blasluftkühlung des das jeweilige Siebdruckwerkstück tragenden Werkstückträgers 20.

Eine Blasluftkühlung kann dabei über die Düsenvorrichtung 90 und/oder Lochplatte 92 zur Zuführung eines Kühlluftstroms erfolgen. Eine Konvektionstrocknung von Siebdruckwerkstücken kann über eine Trocknungsluftzuführung 94 erfolgen.

Insbesondere kann die Trocknungseinrichtung 84 dazu ausgebildet sein, einen Trocknungsluftstrom 95 auf ein Siebdruckwerkstück oder gleichzeitig auf mehrere Siebdruckwerkstücke zu leiten, bevorzugt unter einem Winkel zu einer durch die Transportschiene 16 gebildete Transportachse und/oder unter einem Winkel relativ zu einer Transportgeraden, durch die eine Transportrichtung des jeweiligen Siebdruckwerkstücks und/oder des jeweiligen Werkstückträgers 20 definiert wird, und/oder quer zu dessen Transportrichtung und/oder oberseitig auf das jeweilige Siebdruckwerkstück zu leiten.

Soweit ein Trocknungsluftstrom 95 unter einem Winkel auf ein Siebdruckwerkstück geleitet wird, kann es sich um eine Richtung des Trocknungsluftstroms 95 handeln, die sich von einer durch die Transportschiene 16 gebildeten Transportachse oder von der Transportrichtung des jeweiligen Siebdruckwerkstücks und/oder des jeweiligen Werkstückträgers 20 unterscheidet. Es kann sich um eine Richtung des Trocknungsluftstroms 95 handeln, die gegenüber der Transportrichtung des jeweiligen Siebdruckwerkstücks und/oder des jeweiligen Werkstückträgers 20 geneigt ist, nämlich um einen bestimmten oder vordefinierten Winkel geneigt ist. Eine Richtung des Trocknungsluftstroms 95 quer zur Transportrichtung des jeweiligen Siebdruckwerkstücks und/oder des jeweiligen Werkstückträgers 20 verläuft insbesondere in einem rechten Winkel beziehungsweise in einem Winkel von 90° relativ zu einer Transportachse oder relativ zu einer Transportgeraden, durch die eine Transportrichtung des jeweiligen Siebdruckwerkstücks und/oder des jeweiligen Werkstückträgers 20 definiert wird.

Eine oberseitige Zuführung eines Trocknungsluftstroms 95 auf ein Siebdruckwerkstück beziehungsweise auf einen Werkstückträger 20 kann den schematischen Darstellungen in Fig. 34 und 35 entnommen werden. Die nach unten weisenden Pfeildarstellungen deuten eine oberseitige Zuführung eines Trocknungsluftstroms 95 auf ein Siebdruckwerkstück beziehungsweise auf einen Werkstückträger 20 an.

Ferner kann die Trocknungseinrichtung 84 dazu ausgebildet sein, Luftströme derart abzusaugen, dass sich ein Absaugluftstrom 97 unter einem Winkel zu einer durch die Transportschiene 16 gebildete Transportachse und/oder relativ zu einer Transportgeraden einstellt, durch die eine Transportrichtung des jeweiligen Siebdruckwerkstücks und/oder des jeweiligen Werkstückträgers 20 definiert wird, insbesondere quer zur Transportachse und/oder Transportrichtung und/oder in einer horizontalen Richtung und/oder in einer im Wesentlichen horizontalen Richtung von dem jeweiligen Siebdruckwerkstück und/oder Werkstückträger 20 einstellt. Eine derartige Absaugung eines Trocknungsluftstroms 95 kann ebenfalls den schematischen Darstellungen in Fig. 34 und 35 entnommen werden. Die seitwärts sowie nach oben weisenden Pfeildarstellungen deuten einen derartigen Absaugluftstrom 97 von einem Siebdruckwerkstück beziehungsweise von einem Werkstückträger 20 an.

Weiterhin kann die Trocknungseinrichtung 84 dazu eingerichtet sein, abgesaugte Trocknungs- und/oder Kühlluft in Form eines Absaugluftstroms 97 erneut als Trocknungsluft auf ein zu trocknendes Siebdruckwerkstück zu leiten, insbesondere als erneut zugeleiteter Trocknungsluftstrom 95.

Eine derartige Luftführung innerhalb der Trocknungseinrichtung 84 kann den schematischen Darstellungen in Fig. 34 und 35 beziehungsweise den darin enthaltenen Pfeildarstellungen entnommen werden. Mithin kann die Trocknungseinrichtung 84 als Umlufttrockner ausgebildet und/oder eingerichtet sein.

Ebenso kann die Trocknungseinrichtung 84 für einen Mischbetrieb ausgebildet und/oder eingerichtet sein, gemäß dem eine teilweise Rückführung abgesaugter Trocknungsluftströme 95 und/oder Kühlluftströme erfolgt. In einem Mischbetrieb kann abgesaugte Trocknungs- und/oder Kühlluft nach der Rückführung mit Frischluft vermischt werden, bevor diese erneut auf ein Siebdruckwerkstück zwecks Trocknung geleitet wird.

Ebenso kann die Trocknungseinrichtung 84 mit einem hier nicht näher dargestellten Wärmetauscher für die Wärmerückgewinnung ausgebildet und/oder eingerichtet sein. Die Trocknungseinrichtung 84 kann bei einer solchen Ausgestaltung ausschließlich Frischluft auf die jeweils zu trocknenden Siebdruckwerkstücke leiten und zur Erwärmung der Frischluft rückgewonnene Wärmenergie nutzen.

Zur Erwärmung eines Trocknungsluftstroms 95 für die Konvektionstrocknung beziehungsweise für einen durch die Trocknungsluftzuführung 94 auf die jeweiligen Siebdruckwerkstücke zu leitenden Trocknungsluftstroms 95 können Heizelemente 96 vorgesehen sein, insbesondere oberhalb der Heizluftzuführung 94.

Ein entlang der Heizelemente 96 vorbeigeleiteter Trocknungsluftstrom 95 kann mithin geeignet aufgeheizt und dann über die Trocknungsluftzuführung 94 den jeweils zu trocknenden Siebdruckwerkstücken auf dem jeweiligen Werkstückträger 20 zugeleitet werden.

Die Trocknungsluftzuführung 94 kann in vorteilhafter Weise eine Mehrzahl von Düsen 98 aufweisen, über die ein Trocknungsluftstrom 95 zur Konvektionstrocknung auf die jeweiligen Siebdruckwerkstücke geleitet werden kann. Die Düsen 98 können insbesondere als Schlitzdüsen ausgebildet sein.

Ein Abstand der Düsen 98 relativ zu einem in der Trocknungseinrichtung 84 positionierbaren Förderfahrzeug 18 kann bevorzugt einstellbar sein.

Ein Abstand der Düsen 98 relativ zu einem in dem Förderfahrzeug 18 angeordneten oder fixierten Werkstückträger 20 kann um mindestens um 30 mm, insbesondere um mindestens 35 mm, bevorzugt um mindestens 40 mm oder um mindestens 45 mm, einstellbar sein. Dies erlaubt im Betrieb eine relativ weitgehende Anpassung des Abstands der Düsen 98 zu einem Werkstückträger 20 und damit eine große Anzahl von Einstellmöglichkeiten für unterschiedliche Anwendungsfälle.

Weiter bevorzugt kann ein Abstand der Düsen 98 relativ zu einem in dem Förderfahrzeug 18 angeordneten oder fixierten Werkstückträger 20 um bis zu 90 mm, insbesondere um bis zu 80 mm, bevorzugt um bis zu 70 mm oder um bis zu 60 mm, einstellbar sein. Dies gewährleistet trotz der Einstellbarkeit einen insgesamt kompakten und robusten Aufbau.

In weiter bevorzugter Weise kann ein Abstand der Düsen 98 relativ zu einem in dem Förderfahrzeug 18 angeordneten oder fixierten Werkstückträger 20 zwischen 90 mm und 30 mm betragen, insbesondere zwischen 90 mm und 35 mm, insbesondere zwischen 90 mm und 40 mm, bevorzugt zwischen 80 mm und 30 mm, bevorzugt zwischen 80 mm und 40 mm, einstellbar sein. Eine solche Einstellbarkeit gewährleistet eine hohe Anzahl unterschiedlicher Einstellmöglichkeiten bei einem gleichzeitig robusten und kompakten Aufbau.

In weiter bevorzugter Weise kann die Trocknungseinrichtung 84 zur Aktivierung und/oder Deaktivierung von Kühlpositionen 100 in Abhängigkeit der Position eines Werkstückträgers 20 innerhalb der Trocknungseinrichtung 84 eingerichtet sein, insbesondere zur Aktvierung von Kühlpositionen 100 unterhalb der jeweils aktuellen Position eines Werkstückträgers 20. Dabei kann eine Kühlposition 100 zur Aktivierung durch selektive Ansteuerung von einzelnen oder mehreren Kühldüsen 102 und/oder Druckluftöffnungen 104 in und/oder an einer Düsenvorrichtung 90 und/oder Lochplatte 92 eingerichtet sein.

Die Kühldüsen 102 und/oder Druckluftöffnungen 104 können als punktuelle Öffnungen oder auch als längserstreckte Öffnungen ausgebildet sein, insbesondere Öffnungen mit einer Längserstreckung unter einem Winkel zu einer durch die Transportschiene 16 gebildeten Transportachse, durch die eine Transportrichtung des Förderfahrzeugs 18 definiert wird, und/oder unter einem Winkel zur Längserstreckung der Transportschiene 16. Insbesondere kann eine längserstreckte Öffnung einer Kühldüse 102 und/oder Druckluftöffnung 104 eine Längserstreckung aufweisen, die mit der Transportachse und/oder Transportrichtung des Förderfahrzeugs 18 und/oder mit einer Längserstreckung der Transportschiene 16 in einer Draufsicht auf die Trocknungseinrichtung 84 einen Winkel einschließt, insbesondere einen Winkel von 90° oder etwa 90° einschließt.

Eine Kühlposition 100 kann dabei durch eine oder mehrere Kühldüsen 102 und/oder Druckluftöffnungen 104 gebildet sein, die innerhalb der Trocknungseinrichtung 84 an einer Position entlang der Transportschiene 16 und/oder entlang der Transportrichtung des Förderfahrzeugs 18 angeordnet ist/sind. Die Kühldüsen 102 und/oder Druckluftöffnungen 104 können beispielsweise in regelmäßigen Abständen an einer Zuführleitung 105, insbesondere an der Oberseite einer Zuführleitung 105, ausgebildet sein. Ebenso kann eine Kühlposition 100 durch eine längserstreckte Öffnung gebildet sein.

Mehrere Kühldüsen 102 und/oder Druckluftöffnungen 104 einer Kühlposition können unter einem Winkel beziehungsweise quer zu einer durch die Transportschiene 16 gebildeten Transportachse beziehungs-weise quer zur Transportrichtung des Förderfahrzeugs 18 und/oder unter einem Winkel zur Längserstreckung der Transportschiene 16 verteilt angeordnet sein. Insbesondere können mehrere Kühldüsen 102 und/oder Druckluftöffnungen 104 einer Kühlposition entlang einer Richtung verteilt angeordnet sein, die mit der Transportrichtung des Förderfahrzeugs 18 und/oder mit einer Längserstreckung der Transportschiene 16 in einer Draufsicht auf die Trocknungseinrichtung 84 einen Winkel einschließt, insbesondere einen Winkel von 90° oder etwa 90° einschließt.

Eine als eine längserstreckte Öffnung ausgebildete Kühldüse 102 und/oder Druckluftöffnung 104 einer Kühlposition kann sich unter einem Winkel beziehungsweise quer zu einer durch die Transportschiene 16 gebildeten Transportachse beziehungsweise quer zur Transportrichtung des Förderfahrzeugs 18 und/oder unter einem Winkel zur Längserstreckung der Transportschiene 16 erstrecken. Insbesondere kann sich eine als längserstreckte Öffnung ausgebildete Kühldüse 102 und/oder Druckluftöffnung 104 einer Kühlposition entlang einer Richtung erstrecken, die mit einer durch die Transportschiene 16 gebildeten Transportachse oder mit der Transportrichtung des Förderfahrzeugs 18 und/oder mit einer Längserstreckung der Transportschiene 16 in einer Draufsicht auf die Trocknungseinrichtung 84 einen Winkel einschließt, insbesondere einen Winkel von 90° oder etwa 90° einschließt.

In noch weiter bevorzugter Weise kann die Trocknungseinrichtung 84 zumindest einen Luftfilter 106 zur Filterung eines Trocknungsluftroms 95 aufweisen. Der Luftfilter 106 kann insbesondere als HEPA-Luftfilter ausgebildet sein. Die Düsen 98 der Trocknungsluftzuführung 94 können mithin zur Durchleitung beziehungsweise Zuleitung von gefilterter Trocknungsluft beziehungsweise eines bereits gefilterten Trocknungsluftstroms 95 vorgesehen und/oder angeordnet sein.

Schließlich kann die Trocknungseinrichtung 84 auch zur kontinuierlichen und/oder periodischen Frischluft- und/oder Raumluftzufuhr ausgebildet sein.

Bei Positionierung eines Förderfahrzeugs 18 innerhalb der Trocknungseinrichtung 84 kann die Düsenvorrichtung 90 und/oder Lochplatte 92 zumindest abschnittsweise in den Freiraum 44 des Aufbaus 36 zur Aufnahme eines Drucktisches und/oder zwischen den Grundabschnitt 46 und den Tragabschnitt 40 des Aufbaus 36 ragen. In einer solchen Position kann die Düsenvorrichtung 90 und/oder Lochplatte 92 zumindest abschnittsweise unterhalb eines von dem jeweiligen Förderfahrzeug 18 aufgenommenen Werkstückträgers 20 ragen. Auf diese Weise kann eine unmittelbare Zuleitung eines Kühlluftstroms auf die Unterseite des jeweiligen Werkstückträgers 20 erfolgen und mithin eine geeignete Kühlung sichergestellt werden.

Die Düsenvorrichtung 90 und/oder Lochplatte 92 kann in einer zumindest abschnittsweise in den Freiraum 44 des Aufbaus 36 zur Aufnahme eines Drucktisches ragenden Position in weiter bevorzugter Weise als Isoliervorrichtung zwischen unterschiedlichen Abschnitten der Trocknungseinrichtung 84 dienen. Insbesondere kann die Düsenvorrichtung 90 und/oder Lochplatte 92 als Isoliervorrichtung zwischen einem Trocknungsabschnitt 86 und einen Kühlabschnitt 88 dienen. Die Düsenvorrichtung 90 und/oder Lochplatte 92 kann sich hierzu entlang einer horizontalen Ebene oder im Wesentlichen entlang einer horizontalen Ebene erstrecken.

Die Düsenvorrichtung 90 und/oder Lochplatte 92 kann dabei selbst Bestandteil eines Kühlabschnitts 88 der Trocknungseinrichtung 84 sein, jedoch eine Isolierung zwischen einem Trocknungsabschnitt 86 und einen Kühlabschnitt 88 begünstigen. Dies gilt insbesondere für eine Stellung, in der die Düsenvorrichtung 90 und/oder Lochplatte 92 in den Freiraum 44 des Aufbaus 36 zur Aufnahme eines Drucktisches hineinragt. Hierbei kann die Düsenvorrichtung 90 und/oder Lochplatte 92 nämlich Kühlluft lediglich auf die Unterseite eines in dem jeweiligen Aufbau 36 aufgenommenen Werkstückträger 20 leiten und eine unerwünschte Vermischung mit oberseitig auf den jeweiligen Werkstückträger 20 geleitete Trocknungsluft zumindest temporär vermeiden oder eine solche Vermischung zumindest verringern.

Weiterhin kann durch eine Düsenvorrichtung 90 und/oder Lochplatte 92 vermieden werden, dass ein warmer Trocknungsluftstrom bis in Bereiche unterhalb der Düsenvorrichtung 90 und/oder Lochplatte 92 gelangt und dort eine unerwünschte Erwärmung herbeiführt. Insgesamt kann die Düsenvorrichtung 90 und/oder Lochplatte 92 eine vorteilhafte Isolierfunktion bereitstellen.

Die Trocknungseinrichtung 84 kann an zumindest einem Längsende eine Öffnung 108 aufweisen, die zumindest abschnittsweise komplementär, insbesondere geometrisch komplementär, zur Querschnittsform und/oder komplementär, insbesondere geometrisch komplementär, zu einer Querschnittsabschnittsform des Förderfahrzeugs 18 ausgebildet ist. Das Entweichen von Luftmengen aus der Trocknungseinrichtung 84 kann hierdurch auf ein geringes Maß reduziert werden.

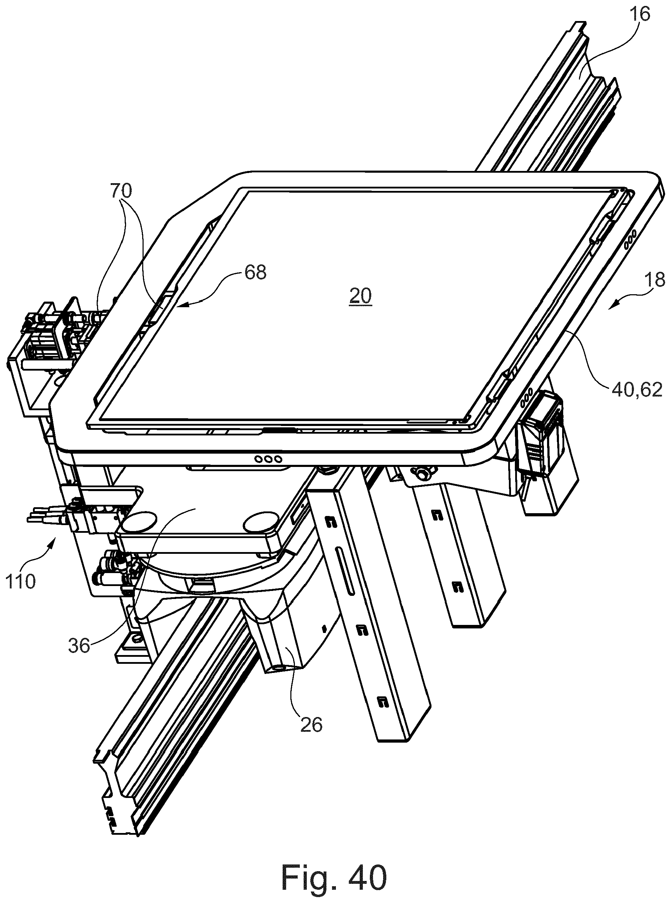

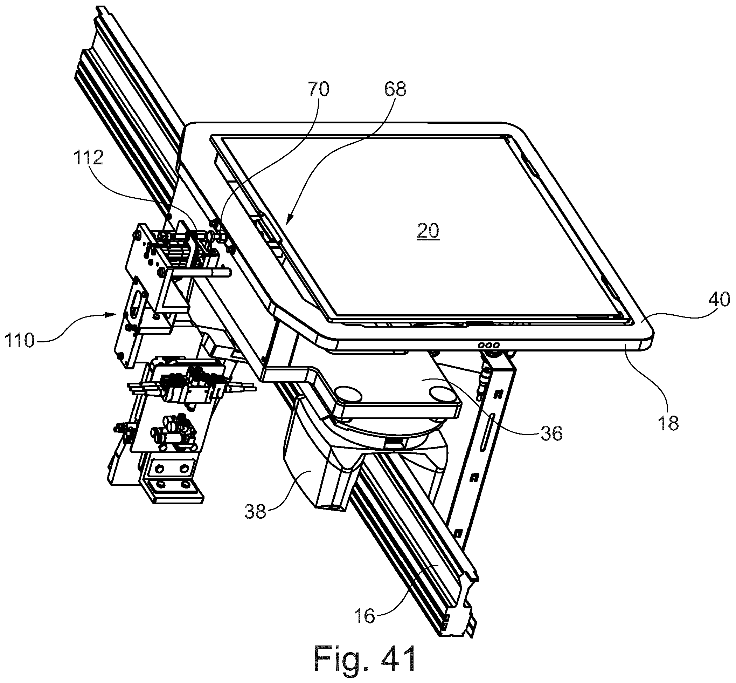

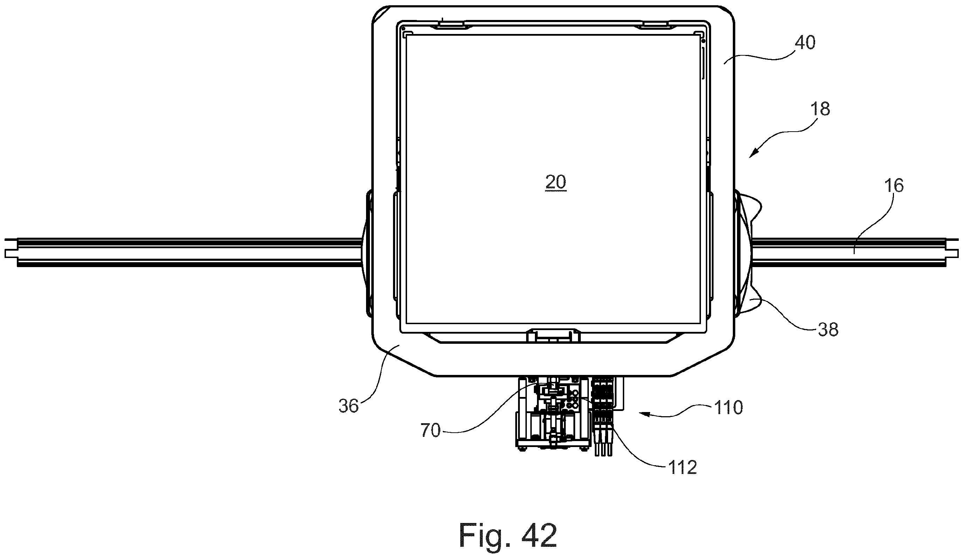

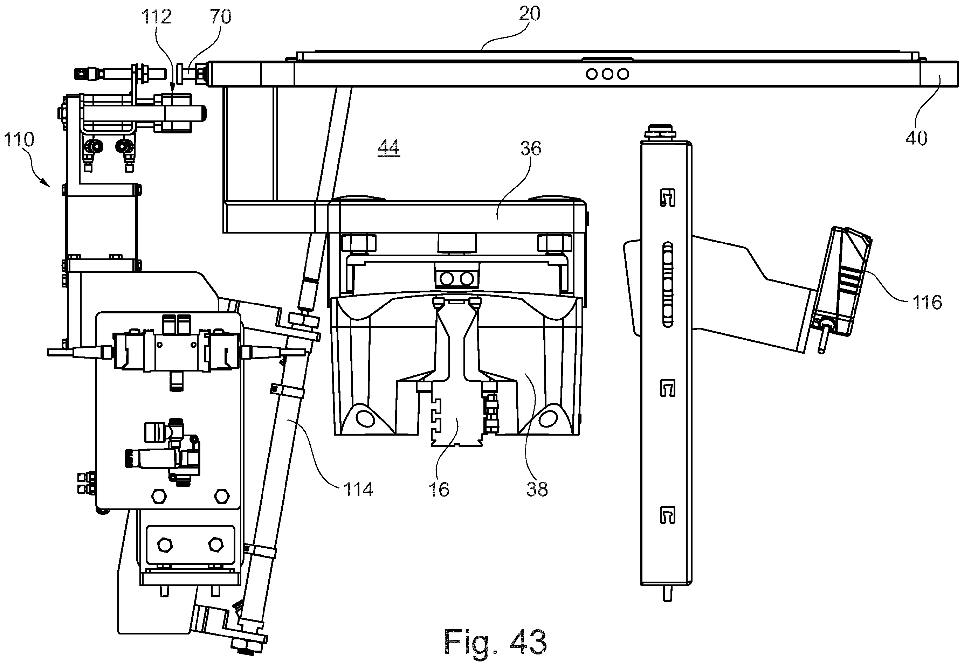

Die Vorrichtung 10 kann weiterhin ausgestattet sein mit einer Positionier- und/oder Entnahmevorrichtung 110 für die Positionierung von Werkstückträgern 20 auf einem Förderfahrzeug 18 und/oder für die Entnahme eines Werkstückträgers 20 von einem Förderfahrzeug 18. Eine solche Positionier- und/oder Entnahmevorrichtung 110 ist in den Fig. 40 bis 43 schematisch dargestellt.

Eine Positionier- und/oder Entnahmevorrichtung 110 kann insbesondere dazu ausgebildet sein, einen Schieber 70 der Verriegelung 68 zu betätigen, um dadurch eine Entriegelung eines in einem Förderfahrzeug 18 aufgenommenen Werkstückträgers 20 vorzunehmen. Eine Betätigung des Schiebers 70 kann bevorzugt automatisiert durch die Positionier- und/oder Entnahmevorrichtung 110 erfolgen, insbesondere durch eine Klaue 112 zum Hintergreifen des Schiebers 70.

Ferner kann die Positionier- und/oder Entnahmevorrichtung 110 dazu ausgebildet sein, eine automatisierte Handhabung eines Werkstückträgers 20 zwecks Entnahme aus dem Förderfahrzeug 20 nach Entriegelung der Verriegelung 68 und/oder zwecks Positionierung innerhalb des Förderfahrzeugs 18 nach Öffnung des Schiebers 70 vorzunehmen. Hierzu kann beispielsweise eine Drückvorrichtung 114 vorgesehen sein, durch die ein Werkstückträger 20 zumindest an einer Seite aus dem Förderfahrzeug 18 angehoben beziehungswiese in eine geneigte Stellung überführt werden kann. Aus einer solchen geneigten Stellung des Werkstückträger 20 kann eine manuelle Entnahme des Werkstückträgers 20 oder auch eine weiter automatisierte Entnahme erfolgen.

Nachdem ein anderer oder neuer Werkstückträger 20 in dem jeweiligen Förderfahrzeug 18 angeordnet worden ist, kann eine Drückvorrichtung 114 wieder abgesenkt werden, sodass sich der Werkstückträger 20 in einer ebenen und auf dem Förderfahrzeug 18 aufliegenden Position befindet. Anschließend kann die Positionier- und/oder Entnahmevorrichtung 110, insbesondere die Klaue 112, den Schieber 70 der Verriegelung 68 freigeben und/oder kontrolliert in eine Verriegelungsposition führen, um eine Fixierung des jeweiligen Werkstückträgers 20 zu bewirken.

Ferner kann eine Positionier- und/oder Entnahmevorrichtung 110 mit einer Erfassungsvorrichtung 116 ausgestattet sein, mit der zu entnehmende und/oder neu auf dem jeweiligen Förderfahrzeug 18 positionierte Werkstückträger 20 erfasst werden können.

Eine voranstehend beschriebene Vorrichtung 10 eignet sich in besonders bevorzugter Weise zur Ausführung eins Verfahrens Verfahren zur Herstellung von dreidimensionalen Siebdruckwerkstücken. Bei einem solchen Verfahren wird der Druckeinrichtung 12 zumindest ein Siebdruckwerkstück in mehreren Druckvorgängen schichtweise erzeugt. Mit der Transporteinrichtung 14 wird zumindest ein Siebdruckwerkstück und/oder ein Werkstückträger 20 mit einem Siebdruckwerkstück automatisiert hin zur und/oder weg von der Druckeinrichtung 12 transportiert, wobei der Transport durch die Transporteinrichtung 14 mittels des Förderfahrzeugs 18 auf der Transportschiene 16 vorgenommen werde kann.

Die Vorrichtung 10 kann insbesondere für die Entwicklung und/oder für die Herstellung großer Stückzahlen von Arzneimitteln ausgebildet und/oder eingerichtet sein.

### BEZUGSZEICHENLISTE

- 10: Vorrichtung zur Herstellung dreidimensionaler Siebdruckwerkstücke
- 12: Druckeinrichtung
- 14: Transporteinrichtung
- 16: Transportschiene
- 18: Förderfahrzeug
- 20: Werkstückträger
- 22: Einhausung
- 24: Drucktisch
- 26: Antriebseinrichtung
- 28: Antriebsrolle
- 29: stromführende Kontaktrolle
- 30: Stützeinrichtung
- 32: Stützrolle
- 33: Steuermodul
- 34: Vorrichtungssteuerung
- 35: Steuereinheit
- 36: Aufbau
- 38: Läufervorrichtung
- 40: Tragabschnitt
- 42: Seitenende
- 44: Freiraum
- 46: Grundabschnitt
- 48: Verbindungsabschnitt
- 50: Hubbegrenzungseinrichtung
- 52: Hubbegrenzungsklaue
- 54: Mehrpunktlagerung
- 56: Lager
- 58: Lagerdorn
- 60: Dornaufnahme
- 61: Justierschraube
- 62: Rahmenvorrichtung
- 63: Gewinde
- 64: Werkstückträgerlagerung
- 66: Festlager
- 68: Verriegelung
- 70: Schieber
- 72: Kontaktfläche
- 74: Kontaktfläche
- 76: Stützabschnitt
- 78: Formelement
- 80: Bypass-Strecke
- 82: Hauptstrecke
- 84: Trocknungseinrichtung
- 86: Trocknungsabschnitt
- 88: Kühlabschnitt
- 90: Düsenvorrichtung
- 92: Lochplatte
- 94: Trocknungsluftzuführung
- 95: Trocknungsluftstrom
- 96: Heizelement
- 97: Absaugluftstrom
- 98: Düse
- 100: Kühlposition
- 102: Kühldüse
- 104: Druckluftöffnung
- 106: Luftfilter
- 108: Öffnung an Längsende der Trocknungseinrichtung
- 110: Positionier- und/oder Entnahmevorrichtung

## Patentansprüche

1. Vorrichtung (10) zur Herstellung von dreidimensionalen Siebdruckwerkstücken, insbesondere 3D-Siebdruckanlage, mit einer Druckeinrichtung (12) für die schichtweise Erzeugung zumindest eines Siebdruckwerkstücks in mehreren Druckvorgängen und mit einer Transporteinrichtung (14) für den automatisierten Transport zumindest eines Siebdruckwerkstücks und/oder eines Werkstückträgers (20) hin zur und/oder weg von der Druckeinrichtung (12), wobei die Transporteinrichtung (14) einen Tragabschnitt (40) zur zumindest formschlüssigen Aufnahme eines Werkstückträgers (20) aufweist.

2. Vorrichtung (10) nach Anspruch 1, **dadurch gekennzeichnet, dass** die Transporteinrichtung (14) für den automatisierten Transport zumindest eines Siebdruckwerkstücks und/oder eines Werkstückträgers (20) hin zu und/oder weg von einem Drucktisch (24) der Druckeinrichtung (12) eingerichtet ist und/oder dass die Transporteinrichtung (14) gesondert von der Druckeinrichtung (12) ausgebildet ist und/oder dass die Transporteinrichtung (14) durch die Druckeinrichtung (12) hindurch verläuft.

3. Vorrichtung (10) nach Anspruch 1 oder 2, **dadurch gekennzeichnet, dass** die Transporteinrichtung (14) wenigstens eine Transportschiene (16) sowie ein auf der Transportschiene (16) beweglich angeordnetes Förderfahrzeug (18) für zumindest ein Siebdruckwerkstück und/oder für zumindest einen Werkstückträger (20) aufweist, wobei der Tragabschnitt (40) zur Aufnahme eines Werkstückträgers (20) an dem Förderfahrzeug (18) angeordnet ist.

4. Vorrichtung (10) nach einem der vorstehenden Ansprüche, **dadurch gekennzeichnet, dass** der Tragabschnitt (40) zur formschlüssigen und/oder kraftschlüssigen und/oder stoffschlüssigen Aufnahme und/oder Fixierung und/oder zumindest abschnittsweisen Einfassung eines Werkstückträgers (20) ausgebildet ist und/oder dass der Tragabschnitt (40) zur definierten und/oder spielfreien Aufnahme und/oder Einfassung eines Werkstückträgers (20) ausgebildet ist.

5. Vorrichtung (10) nach einem der vorstehenden Ansprüche, **dadurch gekennzeichnet, dass** der Tragabschnitt (40) eine Rahmenvorrichtung (62) aufweist, insbesondere eine Rahmenvorrichtung (62) zur formschlüssigen und/oder kraftschlüssigen und/oder stoffschlüssigen Aufnahme und/oder Fixierung und/oder zumindest abschnittsweisen Einfassung eines Werkstückträgers (20), wobei die Rahmenvorrichtung (62) bevorzugt zur definierten und/oder spielfreien Aufnahme und/oder Einfassung eines Werkstückträgers (20) ausgebildet ist und/oder wobei die Rahmenvorrichtung (62) bevorzugt einen Freiraum (44) zur unterseitigen Kontaktierung eines darin aufgenommenen und/oder eingefassten Werkstückträgers (20) begrenzt.

6. Vorrichtung (10) nach einem der vorstehenden Ansprüche, **dadurch gekennzeichnet, dass** die Transporteinrichtung (14), insbesondere das Förderfahrzeug (18) und/oder der Tragabschnitt (40) und/oder die Rahmenvorrichtung (62) des Förderfahrzeugs (18), eine Werkstückträgerlagerung (64) zur Fixierung und/oder zum Festklemmen und/oder zum kraft- und/oder formschlüssigen Befestigen eines Werkstückträgers (20) aufweist, wobei die Werkstückträgerlagerung (64) bevorzugt als Mehrpunktlagerung, insbesondere als 3-Punktlagerung, ausgebildet ist.

7. Vorrichtung (10) nach Anspruch 6, **dadurch gekennzeichnet, dass** die Werkstückträgerlagerung (64) durch wenigstens ein Festlager (66) und/oder durch wenigstens eine Verriegelung (68) gebildet ist, insbesondere mehrere Festlager (66) und eine gegenüberliegend angeordnete Verriegelung (68), wobei die Verriegelung (68) bevorzugt durch einen Schieber (70) mit gefaster und/oder zur Schiebrichtung des Schiebers (70) geneigter Kontaktfläche (72) gebildet ist und/oder dass die Verriegelung (68) durch einen unter Federvorspannung stehenden Schieber (70) und/oder als Schnappverschluss ausgebildet ist und/oder wobei zumindest ein Festlager (66) mit gefaster und/oder zur Schieberichtung des Schiebers (70) geneigter Kontaktfläche (74) ausgebildet ist.

8. Vorrichtung (10) nach einem der Ansprüche 3 bis 7, **dadurch gekennzeichnet, dass** das Förderfahrzeug (18) einen Aufbau (36) zur Aufnahme eines Werkstückträgers (20) für Siebdruckwerkstücke und/oder eine Läufervorrichtung (38) mit daran angeordneter Antriebseinrichtung (26) aufweist, wobei der Aufbau (36) bevorzugt auf der Läufervorrichtung (38) des Förderfahrzeugs (18) angeordnet ist und/oder wobei der Tragabschnitt (40), die Rahmenvorrichtung (62) und/oder die Werkstückträgerlagerung (64) an dem Aufbau (36) ausgebildet ist.

9. Vorrichtung (10) nach Anspruch 8, **dadurch gekennzeichnet, dass** der Aufbau (36) C-förmig ausgebildet ist und/oder einen Freiraum (44) zur Aufnahme eines Drucktisches (24) der Druckeinrichtung (12) bildet und/oder dass in einem Querschnitt des Aufbaus (36) der Flächenmittelpunkt seitlich versetzt zum Gewichtsschwerpunkt des Aufbaus (36) angeordnet ist.

10. Vorrichtung (10) nach Anspruch 8 oder 9, **dadurch gekennzeichnet, dass** der Aufbau (36) und/oder der Tragabschnitt (40) des Aufbaus und/oder die Rahmenvorrichtung (62) des Aufbaus relativ zur Läufervorrichtung (38) in Höhenrichtung beweglich gelagert und/oder höhenjustierbar angeordnet ist und/oder dass der Aufbau (36) und/oder der Tragabschnitt (40) und/oder die Rahmenvorrichtung (62) des Aufbaus relativ zur Läufervorrichtung (38) durch einen Drucktisch (24) der Druckeinrichtung (12) anhebbar angeordnet ist.

11. Vorrichtung (10) nach einem der Ansprüche 8 bis 10, **dadurch gekennzeichnet, dass** der Aufbau (36) über eine Mehrpunktlagerung (54), insbesondere über eine 4-Punktlagerung, auf der Läufervorrichtung (38) befestigt und/oder höhenbeweglich geführt ist und/oder dass zumindest ein Lager (56) zwischen dem Aufbau (36) und der Läufervorrichtung (38) durch einen Lagerdorn (58) sowie eine Dornaufnahme (60) für den Lagerdorn (58) ausgebildet ist, wobei die Mehrpunktlagerung (54) und/oder zumindest ein Lager (56) zwischen dem Aufbau (36) und der Läufervorrichtung (38) bevorzugt zur Selbstzentrierung und/oder Selbstausrichtung des Aufbaus (36) relativ zur Läufervorrichtung (38) ausgebildet ist und/oder dass zumindest ein Lagerdorn (58) bevorzugt konisch zuläuft und/oder dass zumindest eine Dornaufnahme (60) konisch zuläuft, insbesondere komplementär zum Lagerdorn (58) oder mit einer von dem Lagerdorn (58) abweichenden Konizität.

12. Vorrichtung (10) nach einem der Ansprüche 8 bis 11, **dadurch gekennzeichnet, dass** der Aufbau (36), insbesondere der Tragabschnitt (40) und/oder die Rahmenvorrichtung (62) des Aufbaus (36), Stützabschnitte (76) für die Kontaktierung und/oder die Anhebung des Aufbaus durch einen Drucktisch (24) der Druckeinrichtung (12) aufweist, wobei die Stützabschnitte (76) bevorzugt an einer Unterseite des Tragabschnitts (40) und/oder der Rahmenvorrichtung (62) ausgebildet sind.

13. Vorrichtung (10) nach einem der vorstehenden Ansprüche, **dadurch gekennzeichnet, dass** die Druckeinrichtung (12) einen anhebbaren Drucktisch (24), bevorzugt einen anhebbaren Vakuumdrucktisch, aufweist und/oder dass der Drucktisch (24) der Druckeinrichtung (12) zur flächigen Kontaktierung eines in einem Förderfahrzeug (18) aufgenommenen Werkstückträgers (20) und/oder zur Kontaktierung der Stützabschnitte (76) des Aufbaus (36) des Förderfahrzeugs (18) ausgebildet ist und/oder dass der Drucktisch (24) der Druckeinrichtung (12) dazu ausgebildet ist, den Aufbau (36) über die Stützabschnitte (76), für die Werkstückträgerlagerung (64) belastungsfrei, anzuheben, insbesondere bei gleichzeitiger Kontaktierung des Werkstückträgers (20).

14. Transporteinrichtung, insbesondere für den Transport in einer Vorrichtung (10) zur Herstellung von dreidimensionalen Siebdruckwerkstücken, mit einem Förderfahrzeug (18) für den automatisierten Transport zumindest eines Siebdruckwerkstücks und/oder eines Werkstückträgers (20), wobei das Förderfahrzeug (18) einen Tragabschnitt (40) zur zumindest formschlüssigen Aufnahme eines Werkstückträgers (20) und/oder eine Werkstückträgerlagerung zur Fixierung und/oder zum Festklemmen eines Werkstückträgers (20) aufweist.

15. Verfahren zur Herstellung von dreidimensionalen Siebdruckwerkstücken, insbesondere mit einer Vorrichtung (10) nach einem der Ansprüche 1 bis 13, bei dem mit einer Druckeinrichtung (12) zumindest ein Siebdruckwerkstück in mehreren Druckvorgängen schichtweise erzeugt wird und bei dem mit einer Transporteinrichtung (14) zumindest ein Siebdruckwerkstück auf einem Werkstückträger (20) automatisiert hin zur und/oder weg von der Druckeinrichtung (12) transportiert wird, wobei der Werkstückträger (20) für den Transport durch die Transporteinrichtung (14) auf und/oder in einem Tragabschnitt (40) zumindest formschlüssig aufgenommen wird.

16. Verfahren zur Herstellung von dreidimensionalen Siebdruckwerkstücken, insbesondere mit einer Vorrichtung (10) nach einem der Ansprüche 1 bis 13, bei dem mit einer Druckeinrichtung (12) zumindest ein Siebdruckwerkstück in mehreren Druckvorgängen schichtweise erzeugt wird und bei dem mit einer Transporteinrichtung (14) zumindest ein Siebdruckwerkstück auf einem Werkstückträger (20) automatisiert hin zur und/oder weg von der Druckeinrichtung (12) transportiert wird, wobei der Werkstückträger (20) für den Transport durch die Transporteinrichtung (14) in einer Werkstückträgerlagerung (64) fixiert und/oder festgeklemmt wird.
